# EUROPEAN PATENT APPLICATION

(11) **EP 4 489 253 A1**
(43) Date of publication of application: **08.01.2025**
(21) Application number: 23762917.5
(22) Date of filing: 01.03.2023
(51) Int. Cl.: H02J 7/00

(54) **CHARGING CONTROL METHOD, CHARGING CONTROL APPARATUS, CHARGING CONTROL SYSTEM, AUTONOMOUS MOBILE DEVICE, AND BASE STATION**

(30) Priority: 03.03.2022 CN 202210202796; 03.03.2022 CN 202210203846; 03.03.2022 CN 202210202427; 03.03.2022 CN 202210203841
(60) Divisional application: 24204120.0
(71) Applicant: Qfeeltech (Beijing) Co., Ltd., Beijing 100191 (CN)
(72) Inventor: ZHANG, Yiming, Beijing 100191 (CN); AN, Huizhong, Beijing 100191 (CN); SHEN, Yafei, Beijing 100191 (CN); GAO, Wangshu, Beijing 100191 (CN)
(74) Representative: Novagraaf International SA
(86) International application number: PCT/CN2023/079031
(87) International publication number: WO 2023/165519

(57) **Abstract**

The present disclosure provides a charging control method, a charging control apparatus, an autonomous mobile device and a base station. A charging control method implemented by the autonomous mobile device includes: a detecting step, configured to detect whether a directional signal transmitted by the base station is received; a transmitting step, configured to transmit, after the directional signal transmitted by the base station is received, feedback information to the base station through a wireless network in response to the directional signal, where a first direction of the autonomous mobile device relative to the base station is determined based on the feedback information; and a charging step, configured to receive a charging wave transmitted by the base station in a charging direction that is determined based on the first direction, and to perform charging using the received charging wave.

## Description

### TECHNICAL FIELD

The present disclosure relates to the technology field of smart home, and in particular to a charging control method, a charging control apparatus, a charging control system, a smart mobile system, an autonomous mobile device, a base station, a computer-readable storage medium and a computer program product.

### BACKGROUND TECHNOLOGY

As autonomous mobile device technology constantly advances, autonomous mobile devices for various purposes have been developed. Currently most autonomous mobile devices use batteries as power sources, and need to automatically return to a charging station to perform charging (simply referred to as return-and-charge) when electrical power is at a relatively low level.

In current technologies, an autonomous mobile device needs to move to the charging station (also referred to as a base station) to perform charging, which involves many technical issues.

On one hand, when performing charging, a charging contact point of the autonomous mobile device needs to precisely align with a charging contact plate of the charging station in order to perform charging. However, both of the charging contact plate and the charging contact point are very small. In order to realize the precise alignment, assistance from many sensors is needed, and a complex return-and-charge path needs to be configured, which increase the cost and the time consumed by the return-and-charge process, and reduce the return-and-charge success rate; on the other hand, during the charging period, the autonomous mobile device cannot operate normally, which reduces the efficiency.

### CONTENT OF INVENTION

An objective of the present disclosure is to overcome or at least alleviate the deficiencies existing in the current technology, and to provide a charging control method, a charging control apparatus, an autonomous mobile device, a base station, a computer-readable storage medium and a computer program product.

According to a first aspect of the present disclosure, a charging control method is provided, which may be implemented by an autonomous mobile device, including: a detecting step, configured to detect whether a directional signal transmitted by a base station is received; a transmitting step, configured to transmit, after the directional signal transmitted by the base station is detected, feedback information to the base station through a wireless network in response to the directional signal, where a first direction of the autonomous mobile device relative to the base station is determined based on the feedback information; and a charging step, configured to receive a charging wave transmitted by the base station in a charging direction that is determined based on the first direction, and perform charging using the received charging wave.

With reference to the first aspect, in a first possible implementation, before the detecting step, the method also includes: determining whether a pre-set charging condition is satisfied; and after it is determined that the pre-set charging condition is satisfied, transmitting, to the base station, a charging request that is configured to request the base station to charge the autonomous mobile device, where the directional signal received in the detecting step is transmitted by the base station in response to the charging request.

With reference to the first possible implementation of the first aspect, in a second possible implementation, the pre-set charging condition includes at least one of the following conditions: a remaining electric power of the autonomous mobile device is equal to or smaller than a first electric power threshold; a moving mileage of the autonomous mobile device is equal to or greater than a mileage threshold; a moving time period of the autonomous mobile device is equal to or greater than a time period threshold; a coverage area of a work zone covered by the autonomous mobile device is equal to or greater than an area threshold; and a ratio between the coverage area of the work zone covered by the autonomous mobile device and an area of the work zone is equal to or greater than a ratio threshold.

With reference to the first possible implementation of the first aspect, in a third possible implementation, in some practices, the method also includes: when it is determined that the pre-set charging condition is satisfied, starting up a directional signal receiver of the autonomous mobile device, correspondingly, in the detecting step, detecting whether the directional signal is received by the directional signal receiver.

With respect to the first aspect, in a fourth possible implementation, after the charging step, the method also includes: determining whether a pre-set stop charging condition is satisfied; and after it is determined that the pre-set stop charging condition is satisfied, shutting down the directional signal receiver of the autonomous mobile device, or transmitting, toward the base station, a stop charging request configured to request the base station to stop charging the autonomous mobile device.

With reference to the fourth possible implementation of the first aspect, in a fifth possible implementation, the pre-set stop charging condition includes at least one of the following conditions: a current electric power of the autonomous mobile device is equal to or greater than a second electric power threshold; a distance between the autonomous mobile device and the base station is equal to or greater than a distance threshold; the distance between the autonomous mobile device and the base station is greater than distances between the autonomous mobile device and other base stations; there is an obstacle between the autonomous mobile device and the base station; and the directional signal is not received within a first predetermined time period.

With reference to the fourth possible implementation of the first aspect, in a sixth possible implementation, the pre-set stop charging condition also includes a charging efficiency being equal to or smaller than a charging efficiency threshold, where, the charging efficiency is a ratio between a charging power of the autonomous mobile device and a transmitting power of the base station transmitting the charging wave.

With reference to the sixth possible implementation of the first aspect, in a seventh possible implementation, when the charging efficiency is equal to or smaller than a charging efficiency threshold, it may be determined that a charging failure occurred, and a number of charging failures may be counted, and when the counted number of charging failures is greater than or equal to a count threshold, it may be determined that the pre-set stop charging condition is satisfied.

With reference to the first aspect, in an eighth possible implementation, the feedback information carries time information and/or angle information corresponding to the received directional signal, where, the first direction is determined based on the time information and/or the angle information.

With reference to the first aspect, in a ninth possible implementation, the feedback information carries current location information of the autonomous mobile device and/or direction information relating to a direction of the autonomous mobile device relative to the base station, where the first direction is determined based on the location information and/or the direction information.

With reference to the first aspect, in a tenth possible implementation, after the charging step, the method also includes: detecting whether the directional signal is received within a second predetermined time period; stopping transmitting the feedback information to the base station after it is determined that the directional signal is not received within the second predetermined time period.

With reference to the first aspect, in an eleventh possible implementation, the method also includes: after respective directional signals from multiple base stations are detected, selecting a target base station from the multiple base stations for priority charging of the autonomous mobile device based on a relative distance between each base station of the multiple base stations and the autonomous mobile device and based on whether an obstacle exists between each base station of the multiple base stations and the autonomous mobile device, and transmitting, to the target base station, the feedback information that carries identification information that is used by the target base station for self-identification and direction information that is used for transmitting the charging wave.

With reference to the eleventh possible implementation of the first aspect, in a twelfth possible implementation, a relative distance between the target base station and the autonomous mobile device is smaller than relative distances between other base stations of the multiple base stations and the autonomous mobile device.

With reference to the first aspect, in a thirteenth possible implementation, a second direction of the autonomous mobile device relative to the base station after an estimated time period may be determined based on the feedback information, where the estimated time period is a time period from a time instance when the autonomous mobile device transmits the feedback information to a time instance when the base station transmits the charging wave, and the charging direction may be adjusted based on the second direction.

With reference to the first aspect, in a fourteenth possible implementation, a determination may be made as to whether the charging direction is accurate based on a charging efficiency, where, the charging efficiency is a ratio between a charging power of the autonomous mobile device and a transmitting power of the base station transmitting the charging wave.

According to a second aspect of the present disclosure, a charging control method is provided, which is implemented by a base station, characterized in that, including: a directional signal transmitting step, configured to transmit a directional signal to an autonomous mobile device; a receiving step, configured to receive feedback information transmitted by the autonomous mobile device through a wireless network in response to the directional signal, where a first direction of the autonomous mobile device relative to the base station may be determined based on the feedback information; and a charging wave transmitting step, configured to transmit a charging wave for charging the autonomous mobile device in a charging direction that is determined based on the first direction.

With reference to the second aspect, in a first possible implementation, before the directional signal transmitting step, the method also includes: determining whether a charging request transmitted from the autonomous mobile device and configured to request the base station to charge the autonomous mobile device is received, and after the charging request is received, executing the directional signal transmitting step.

With reference to the second aspect, in a second possible implementation, after the charging wave transmitting step, the method also includes: determining whether a stop charging request transmitted from the autonomous mobile device and configured to request the base station to stop charging the autonomous mobile device is received, and after the stop charging request is received, stopping transmitting the charging wave.

With reference to the second aspect, in a third possible implementation, after the charging wave transmitting step, the method also includes: stopping transmitting the charging wave after it is determined that the feedback information is not received within a third predetermined time period.

With reference to the second aspect, in a fourth possible implementation, after the charging wave transmitting step, the method also includes: calculating a charging efficiency based on a ratio between a charging power of the autonomous mobile device and a transmitting power of the based station transmitting the charging wave; stopping transmitting the charging wave when the charging efficiency is equal to or smaller than a charging efficiency threshold.

With reference to the second aspect, in a fifth possible implementation, after the charging wave transmitting step, the method also includes: calculating a charging efficiency based on a ratio between a charging power of the autonomous mobile device and a transmitting power of the base station transmitting the charging wave; when the charging efficiency is equal to or smaller than a charging efficiency threshold, determining that a charging failure occurred, and counting a number of charging failures, and when the counted number of charging failures is greater than or equal to a count threshold, stopping transmitting the charging wave.

With reference to the second aspect, in a sixth possible implementation, the charging wave transmitting step also includes: determining whether the base station corresponds to the received identification information that is configured for self-identification of a target base station and that is carried by the feedback information; and when it is determined that the base station corresponds to the identification information, transmitting the charging wave in a first direction of the autonomous mobile device relative to the base station, which is determined based on direction information carried by the feedback information.

With reference to the second aspect, in a seventh possible implementation, a second direction of the autonomous mobile device relative to the base station after an estimated time period may be determined based on the feedback information, where the estimated time period is a time period from a time instance when the autonomous mobile device transmits the feedback information to a time instance when the base station transmits the charging wave, and, the charging direction may be adjusted based on the second direction.

With reference to the second aspect, in an eighth possible implementation, a determination may be made as to whether the charging direction is accurate based on a charging efficiency, where, the charging efficiency is a ratio between a charging power of the autonomous mobile device and a transmitting power of the base station transmitting the charging wave.

According to a third aspect of the present disclosure, an autonomous mobile device is provided, including: a motion module, configured to move the autonomous mobile device; a detecting module, configured to detect whether a directional signal transmitted by a base station is received; a processing module, configured to, after the directional signal transmitted by the base station is detected, transmit feedback information to the base station through a wireless network in response to the directional signal, where a first direction of the autonomous mobile derive relative to the base station may be determined based on the feedback information; and a charging module, configured to receive the charging wave transmitted by the base station in a charging direction that is determined based on the first direction, and perform charging using the received charging wave.

With reference to the third aspect, in a first possible implementation, the processing module is configured to: determine whether a pre-set charging condition is satisfied; when it is determined that the pre-set charging condition is satisfied, transmit, to the base station, a charging request configured to request the base station to charge the autonomous mobile device, where the received directional signal is transmitted by the base station in response to the charging request.

With reference to the first possible implementation of the third aspect, in a second possible implementation, the pre-set charging condition includes at least one of the following conditions: a remaining electric power of the autonomous mobile device is equal to or smaller than a first electric power threshold; a moving mileage of the autonomous mobile device is equal to or greater than a mileage threshold; a moving time period of the autonomous mobile device is equal to or greater than a time period threshold; a coverage area of a work zone covered by the autonomous mobile device is equal to or greater than an area threshold; and a ratio between the coverage area of the work zone covered by the autonomous mobile device and an area of the work zone is equal to or greater than a ratio threshold.

With reference to the first possible implementation of the third aspect, in a third possible implementation, the charging request module is also configured to, when it is determined that the pre-set charging condition is satisfied, turn on a directional signal receiver of the autonomous mobile device, where, the detecting module is also configured to detect whether the directional signal is received by the directional signal receiver.

With reference to the third aspect, in a fourth possible implementation, the autonomous mobile device also includes a stop charging request module, the stop charging request module is configured to determine whether a pre-set stop charging condition is satisfied; where, the stop charging request module is also configured to, when it is determined that the pre-set stop charging condition is satisfied, shut down the directional signal receiver of the autonomous mobile device; or the processing module is also configured to, when it is determined that the pre-set stop charging condition is satisfied, transmit, to the base station, a stop charging request configured to request the base station to stop charging the autonomous mobile device.

With reference to the fourth possible implementation of the third aspect, in a fifth possible implementation, the pre-set stop charging condition includes at least one of the following conditions: a current electric power of the autonomous mobile device is equal to or greater than a second electric power threshold; a distance between the autonomous mobile device and the base station is equal to or greater than a distance threshold; the distance between the autonomous mobile device and the base station is greater than distances between the autonomous mobile device and other base stations; there is an obstacle between the autonomous mobile device and the base station; and the directional signal is not received within a first predetermined time period.

With reference to the fifth possible implementation of the third aspect, in a sixth possible implementation, the pre-set stop charging condition also includes a charging efficiency being equal to or smaller than a charging efficiency threshold, where, the charging efficiency is a ratio between a charging power of the autonomous mobile device and a transmitting power of the base station transmitting the charging wave.

With reference to the sixth possible implementation of the third aspect, in a seventh possible implementation, when the charging efficiency is equal to or smaller than the charging efficiency threshold, a determination may be made that a charging failure occurred, and a number of charging failures may be counted, and when the counted number of charging failures is greater than or equal to a count threshold, a determination may be made that the pre-set stop charging condition is satisfied.

With reference to the third aspect, in an eighth possible implementation, the feedback information carries time information and/or angle information corresponding to the received directional signal, where, the first direction may be determined based on the time information and/or the angle information.

With reference to the third aspect, in a ninth possible implementation, the feedback information carries current location information of the autonomous mobile device and/or direction information relating to a direction of the autonomous mobile device relative to the base station, where the first direction may be determined based on the location information and/or the direction information.

With reference to the third aspect, in a tenth possible implementation, the detecting module is also configured to detect whether the directional signal is received within a second predetermined time period; where, the processing module is also configured to stop transmitting the feedback information to the base station when it is determined that the directional signal is not received within the second predetermined time period.

With reference to the third aspect, in an eleventh possible implementation, the detecting module is also configured to detect whether respective directional signals from multiple base stations are received, where, the processing module is also configured to, after the respective directional signals from the multiple base stations are detected, select a target base station from the multiple base stations for priority charging of the autonomous mobile device based on a relative distance between each base station of the multiple base stations and the autonomous mobile device and based on whether an obstacle exists between each base station of the multiple base stations and the autonomous mobile device, and transmit, to the target base station, feedback information that carries identification information configured to be used by the target base station for self-identification and direction information configured to be used for transmitting the charging wave.

With reference to the eleventh possible implementation of the third aspect, in a twelfth possible implementation, a relative distance between the target base station and the autonomous mobile device is smaller than relative distances between other base stations of the multiple base stations and the autonomous mobile device.

With reference to the third aspect, in a thirteenth possible implementation, the processing module is also configured to: determine an estimated time instance and include the estimated time instance in the feedback information through the autonomous mobile device, the estimated time instance indicates a time instance when the base station is to transmit the charging wave; and where, a second direction of the autonomous mobile device relative to the base station at the estimated time instance may be determined based on the estimated time instance, and the charging direction may be adjusted based on the second direction.

With reference to the third aspect, in a fourteenth possible implementation, a determination may be made as to whether the charging direction is accurate based on the charging efficiency, where, the charging efficiency is a ratio between a charging power of the autonomous mobile device and a transmitting power of the base station transmitting the charging wave.

According to a fourth aspect of the present disclosure, a base station is provided, including: a directional signal transmitting module, configured to transmit a directional signal to an autonomous mobile device; a receiving module, configured to receive feedback information transmitted by the autonomous mobile device through a wireless network in response to the directional signal, where a first direction of the autonomous mobile device relative to the base station may be determined based on the feedback information; and a power supply module, configured to transmit a charging wave for charging the autonomous mobile device in a charging direction that is determined based on the first direction.

With reference to a fourth aspect, in a first possible implementation, the receiving module is also configured to determine whether a charging request transmitted from the autonomous mobile device and configured to request the base station to charge the autonomous mobile device is received, where the directional signal transmitting module is also configured to transmit the directional signal after the charging request is received.

With reference to the fourth aspect, in a second possible implementation, the receiving module is also configured to determine whether a stop charging request transmitted from the autonomous mobile device and configured to request the base station to stop charging the autonomous mobile device is received, where, the power supply module is also configured to stop transmitting the charging wave after the stop charging request is received.

With reference to the fourth aspect, in a third possible implementation, the power supply module is also configured to stop transmitting the charging wave after it is determined that the feedback information is not received within a third predetermined time period.

With reference to the fourth aspect, in a fourth possible implementation, the power supply module is also configured to: calculate a charging efficiency based on a ratio between a charging power of the autonomous mobile device and a transmitting power of the based station transmitting the charging wave; stop transmitting the charging wave when the charging efficiency is equal to or smaller than a charging efficiency threshold.

With reference to the fourth aspect, in a fifth possible implementation, the power supply module is also configured to: calculate a charging efficiency based on a ratio between a charging power of the autonomous mobile device and a transmitting power of the base station transmitting the charging wave; when the charging efficiency is equal to or smaller than a charging efficiency threshold, determine that a charging failure occurred, and count a number of charging failures, and when the counted number of charging failures is greater than or equal to a count threshold, stop transmitting the charging wave.

With reference to the fourth aspect, in a sixth possible implementation, the receiving module is also configured to determine whether the base station corresponds to identification information of a target base station carried by the received feedback information; and the power supply module is also configured to, when it is determined that the base station corresponds to the identification information, transmit the charging wave in a first direction of the autonomous mobile device relative to the base station, which is determined based on the direction information carried by the feedback information.

With reference to the fourth aspect, in a seventh possible implementation, a second direction of the autonomous mobile device relative to the base station after an estimated time period may be determined based on the feedback information, where the estimated time period is a time period from a time instance when the autonomous mobile device transmits the feedback information to a time instance when the base station transmits the charging wave, and the charging direction may be adjusted based on the second direction.

With reference to the fourth aspect, in an eighth possible implementation, a determination may be made as to whether the charging direction is accurate based on a charging efficiency, where, the charging efficiency is a ratio between a charging power of the autonomous mobile device and a transmitting power of the base station transmitting the charging wave.

According to a fifth aspect of the present disclosure, an autonomous mobile device is provided, including: a motion unit, configured to move the autonomous mobile device in a work zone; one or more processors; and a storage device, which stores instructions, where, when the instructions are executed by the one or more processors, the instructions cause the one or more processors to execute the method implemented by the autonomous mobile device according to the first aspect or any implementation of the first to the fourteenth possible implementations of the first aspect.

According to a sixth aspect of the present disclosure, a base station is provided, which includes: one or more processors; and a storage device, which stores instructions, where, when the instructions are executed by the one or more processors, cause the one or more processors to execute the method implemented by the base station according to the second aspect or any implementation of the first to the eighth possible implementations of the second aspect.

According to a seventh aspect of the present disclosure, a non-transitory computer-readable storage medium that stores a program is provided, the program includes instructions, when the instructions are executed by a computer, the instructions cause the computer to execute the method implemented by the autonomous mobile device according to the first aspect or any implementation of the first to the fourteenth possible implementations of the first aspect and/or the method implemented by the base station according to the second aspect or any implementation of the first to the eighth possible implementations of the second aspect.

According to an eighth aspect of the present disclosure, a computer program product is provided, which includes instructions. When the instructions are executed by a computer, the instructions cause the computer to execute the method implemented by the autonomous mobile device according to the first aspect or any implementation of the first to the fourteenth possible implementations of the first aspect and/or the method implemented by the base station according to the second aspect or any implementation of the first to the eighth possible implementations of the second aspect.

According to a ninth aspect of the present disclosure, a charging control system is provided, which includes the autonomous mobile device according to the third aspect, any implementation of the first to the fourteenth possible implementations of the third aspect, or the fifth aspect, and the base station according to the fourth aspect, any implementation of the first to the eighth possible implementations of the fourth aspect, or the sixth aspect, where, the autonomous mobile device and the base station communicate through a wireless network.

According to the technical solutions of the first aspect to the ninth aspect of the present disclosure, it is ensured that wireless charging of the autonomous mobile device is realized by aiming the charging wave transmitted by the base station at the autonomous mobile device, thereby increasing the efficiency or successful rate of the charging.

According to a tenth aspect of the present disclosure, a charging control method is provided, which may be implemented by an autonomous mobile device, including: a localization step, configured to obtain real time direction and/or location information of the autonomous mobile device; a transmitting step, configured to transmit to a base station, through a wireless network, feedback information that includes the real time direction and/or location information and a charging request, where a first direction of the autonomous mobile device relative to the base station may be determined based on the real time direction and/or location information; and a charging step, configured to receive a charging wave transmitted by the base station in a charging direction that is determined based on the first direction, and perform charging using the received charging wave.

With reference to the tenth aspect, in a first possible implementation, the real time direction/location information is obtained based on an environmental map created by the autonomous mobile device.

With reference to the tenth aspect, in a second possible implementation, before the transmitting step, the charging control method also includes: determining whether a pre-set charging condition is satisfied, and executing the transmitting step when it is determined that the pre-set charging condition is satisfied.

With reference to the second possible implementation of the tenth aspect, in a third possible implementation, the pre-set charging condition includes at least one of the following conditions: a remaining electric power of the autonomous mobile device is equal to or smaller than a first electric power threshold; a moving mileage of the autonomous mobile device is equal to or greater than a mileage threshold; a moving time period of the autonomous mobile device is equal to or greater than a time period threshold; a coverage area of a work zone covered by the autonomous mobile device is equal to or greater than an area threshold; and a ratio between the coverage area of the work zone covered by the autonomous mobile device and an area of the work zone is equal to or greater than a ratio threshold.

With reference to the tenth aspect, in a fourth possible implementation, a second direction of the autonomous mobile device relative to the base station after an estimated time period may be determined based on the feedback information, where the estimated time period is a time period from a time instance when the autonomous mobile device transmits the feedback information to a time instance when the base station transmits the charging wave, and the charging direction may be adjusted based on the second direction.

With reference to the tenth aspect, in a fifth possible implementation, after the charging step, the charging control method also includes: determining whether the pre-set stop charging condition is satisfied; when it is determined that the pre-set stop charging condition is satisfied, stopping transmitting the feedback information to the base station, or transmitting to the base station a stop charging request configured to request the base station to stop charging the autonomous mobile device.

With reference to the fifth possible implementation of the tenth aspect, in a sixth possible implementation, the stop charging condition includes at least one of the following conditions: a current electric power of the autonomous mobile device is equal to or greater than a second electric power threshold; a distance between the autonomous mobile device and the base station is equal to or greater than a distance threshold; the distance between the autonomous mobile device and the base station is greater than distances between the autonomous mobile device and other base stations; and there is an obstacle between the autonomous mobile device and the base station.

With reference to the fifth possible implementation of the tenth aspect, in a seventh possible implementation, the pre-set stop charging condition also includes a charging efficiency being equal to or smaller than a charging efficiency threshold, where, the charging efficiency is a ratio between a charging power of the autonomous mobile device and a transmitting power of the base station transmitting the charging wave.

With reference to the seventh possible implementation of the tenth aspect, in an eighth possible implementation, when the charging efficiency is equal to or smaller than a charging efficiency threshold, it may be determined that a charging failure occurred, and a number of charging failures may be counted, and when the number of charging failures is greater than or equal to a count threshold, it may be determined that the pre-set stop charging condition is satisfied.

With reference to the tenth aspect, in a ninth possible implementation, the feedback information includes information relating to the charging power of the autonomous mobile device.

With reference to the fifth possible implementation of the tenth aspect, in a tenth possible implementation, the charging control method also includes: transmitting a detecting signal to the base station through an optical detector provided on the autonomous mobile device, where the detecting signal is configured to detect an obstacle existing between the autonomous mobile device and the base station and/or to calculate a distance between the autonomous mobile device and the base station.

With reference to the fifth possible implementation of the tenth aspect, in an eleventh possible implementation, the charging control method also includes: detecting, through the optical detector provided on the autonomous mobile device, an identification feature on the base station, and after detecting the identification feature, determining that an obstacle does not exist between the autonomous mobile device and the base station.

With reference to the tenth aspect, in a twelfth possible implementation, the charging control method also includes obtaining base station location information of respective base stations of multiple base stations, obtaining a relative distance between each base station and the autonomous mobile device based on the real time direction/location information and the location information of each base station, and selecting a target base station from the multiple base stations for priority charging of the autonomous mobile device based on a relative distance between each base station and the autonomous mobile device and based on whether an obstacle exists between each base station and the autonomous mobile device, and transmitting, to the target base station, the feedback information that carries identification information configured to be used by the target base station for self-identification.

With reference to the twelfth possible implementation of the tenth aspect, in a thirteenth possible implementation, a relative distance between the target base station and the autonomous mobile device is smaller than relative distances between other base stations of the multiple base stations and the autonomous mobile device, or the target base station includes at least two base stations but less than the multiple base stations, a relative distance between each target base station of at least two target base stations and the autonomous mobile device is smaller than relative distances between other base stations of the multiple base stations and the autonomous mobile device.

With reference to the tenth aspect, in a fourteenth possible implementation, a determination may be made as to whether the charging direction is accurate based on a charging efficiency, where, the charging efficiency is a ratio between a charging power of the autonomous mobile device and a transmitting power of the base station transmitting the charging wave.

According to an eleventh aspect of the present disclosure, a charging control method is provided, which may be implemented by a base station, including: a receiving step, configured to receive, through a wireless network, feedback information transmitted from the autonomous mobile device, where, the feedback information includes a charging request and real time direction and/or location information of the autonomous mobile device, a first direction of the autonomous mobile device relative to the base station may be determined based on the real time direction and/or location information; and a charging wave transmitting step, configured to transmit a charging wave for charging the autonomous mobile device in a charging direction that is determined based on the first direction.

With reference to the eleventh aspect, in a first possible implementation, before the charging wave transmitting step, the charging control method also includes: determining whether a start charging condition is satisfied, and performing the charging wave transmitting step when it is determined that the start charging condition is satisfied.

With reference to the first possible implementation of the eleventh aspect, in a second possible implementation, the start charging condition includes at least one of the following conditions: no obstacle exists between the base station and the autonomous mobile device; and a distance between the base station and the autonomous mobile device is equal to or smaller than a distance threshold.

With reference to the second possible implementation of the eleventh aspect, in a third possible implementation, the charging control method also includes: receiving a detecting signal transmitted by the autonomous mobile device through a detecting signal receiver provided on the base station, where, existence of the obstacle is determined based on the detecting signal, and/or the distance is calculated based on the detecting signal.

With reference to the second possible implementation of the eleventh aspect, in a fourth possible implementation, the charging control method also includes: receiving, from the autonomous mobile device, information relating to the existence of the obstacle and/or the distance.

With reference to the eleventh aspect, in a fifth possible implementation, a second direction of the autonomous mobile device relative to the base station after an estimated time period may be determined based on the feedback information, where the estimated time period is a time period from a time instance when the autonomous mobile device transmits the feedback information to a time instance when the base station transmits the charging wave, and the charging direction may be adjusted based on the second direction.

With reference to the eleventh aspect, in a sixth possible implementation, after the charging wave transmitting step, the charging control method also includes: determining whether a stop charging request transmitted from the autonomous mobile device and configured to request the base station to stop charging the autonomous mobile device is received, and stopping transmitting the charging wave after the stop charging request is received.

With reference to the fifth possible implementation of the eleventh aspect, in a seventh possible implementation, the charging control method also includes: determining whether a charging efficiency is smaller than a charging efficiency threshold, where the charging efficiency is a ratio between a charging power of the autonomous mobile device and a transmitting power of the base station transmitting the charging wave, and when the charging efficiency is smaller than the charging efficiency threshold, adjusting the charging direction based on the second direction, re-calculating the charging efficiency, and comparing the recalculated charging efficiency with the charging efficiency threshold.

With reference to the seventh possible implementation of the eleventh aspect, in an eighth possible implementation, the charging control method also includes: when the charging efficiency is equal to or smaller than the charging efficiency threshold, determining that a charging failure occurred, and counting a number of charging failures, and when the counted number of charging failures is greater than or equal to a count threshold, not transmitting the charging wave.

With reference to the eleventh aspect, in a ninth possible implementation, the charging wave transmitting step also includes: determining whether the base station corresponds to identification information carried by the received feedback information, which is configured to be used by the target base station for self-identification; and when it is determined that the base station corresponds to the identification information, determining that the base station is a target base station, the target base station transmits the charging wave in a first direction of the autonomous mobile device relative to the target base station, which is determined based on real time direction and/or location information of the autonomous mobile device carried by the feedback information.

According to a twelfth aspect of the present disclosure, a charging control apparatus is provided, which may be implemented in an autonomous mobile device, including: a localization module, configured to obtain real time direction and/or location information of the autonomous mobile device; a processing module, configured to transmit, to a base station, through a wireless network, feedback information that includes the real time direction and/or location information and a charging request, where a first direction of the autonomous mobile device relative to the base station may be determined based on the real time direction and/or location information; and a charging module, configured to configured to receive a charging wave transmitted by the base station in a charging direction that is determined based on the first direction, and perform charging using the received charging wave.

According to a thirteenth aspect, a charging control apparatus is provided, which may be implemented in a base station, including: a receiving module, configured to receive, through a wireless network, feedback information from an autonomous mobile device, where, the feedback information includes a charging request and real time direction and/or location information of the autonomous mobile device, a first direction of the autonomous mobile device relative to the base station may be determined based on the real time direction and/or location information; and a power supply module, configured to transmit a charging wave for charging the autonomous mobile device in a charging direction that is determined based on the first direction.

According to a fifteenth aspect of the present disclosure, a base station is provided, including the charging control apparatus according to the thirteenth aspect.

According to a sixteenth aspect of the present disclosure, an autonomous mobile device is provided, including: a motion unit, configured to move the autonomous mobile device on a two-dimensional plane of a work zone; one or more processors; and a storage device, which stores instructions, where, when the instructions are executed by the one or more processors, the instructions cause the one or more processors to execute the charging control method according to the tenth aspect or any implementation of the first to the fourteenth possible implementations of the tenth aspect.

According to a seventeenth aspect of the present disclosure, a base station is provided, including: one or more processors; and a storage device, which stores instructions, where, when the instructions are executed by the one or more processors, the instructions cause the one or more processors to execute the charging control method according to the eleventh aspect or any implementation of the first to the ninth possible implementations of the eleventh aspect.

According to an eighteenth aspect of the present disclosure, a non-transitory computer-readable storage medium that stores a program is provided, the program includes instructions, when the instructions are executed by a computer, the instructions cause the computer to execute the charging control method according to the tenth aspect, any implementation of the first to the fourteenth possible implementations of the tenth aspect, the eleventh aspect, or any implementation of the first to the ninth possible implementations of the eleventh aspect.

According to a nineteenth aspect of the present disclosure, a computer program product is provided, which includes instructions, when the instructions are executed by a computer, the instructions cause the computer to execute the charging control method according to the tenth aspect, any implementation of the first to the fourteenth possible implementations of the tenth aspect, the eleventh aspect, or any implementation of the first to the ninth possible implementations of the eleventh aspect.

According to a twentieth aspect of the present disclosure, a charging control system is provided, including the autonomous mobile device according to the fourteenth aspect or the sixteenth aspect and the base station according to the fifteenth aspect or the seventeenth aspect, where, the autonomous mobile device and the base station communicate through a wireless network.

According to the technical solutions of the tenth aspect to the twentieth aspect of the present disclosure, it is ensured that wireless charging of the autonomous mobile device is realized by aiming the charging wave transmitted by the base station at the autonomous mobile device, thereby increasing the efficiency or success rate of the charging.

According to a twenty-first aspect of the present disclosure, a charging control method is provided, which may be implemented by an autonomous mobile device, including: a transmitting step, configured to transmit an ultra-wide band localization signal, i.e., a UWB localization signal, where the UWB localization signal is configured to enable the base station to determine a location of the autonomous mobile device; and a charging step, configured to receive a charging wave transmitted by the base station in a charging direction that is based on the location of the autonomous mobile device, and perform charging using the received charging wave.

According to the twenty-first aspect, in a first possible implementation, before the transmitting step, the charging control method also includes: determining whether a pre-set charging condition is satisfied, and executing the transmitting step when it is determined that the pre-set charging condition is satisfied.

With reference to the first possible implementation of the twenty-first aspect, in a second possible implementation, the pre-set charging condition includes at least one of the following conditions: a remaining electric power of the autonomous mobile device is smaller than or equal to a first electric power threshold; a moving mileage of the autonomous mobile device is greater than or equal to a mileage threshold; a moving time period of the autonomous mobile device is greater than or equal to a time period threshold; a coverage area of a work zone already covered by the autonomous mobile device is greater than or equal to an area threshold; a ratio between the coverage area of the work zone already covered by the autonomous mobile device and an area of the work zone is greater than or equal to a ratio threshold.

With reference to the twenty-first aspect, in a third possible implementation, after the charging step, the charging control method also includes: determining whether a pre-set stop charging condition is satisfied, when it is determined that the pre-set stop charging condition is satisfied, stopping transmitting the UWB localization signal, or transmitting, to the base station, a stop charging request configured to request the base station to stop charging the autonomous mobile device.

With reference to the third possible implementation of the twenty-first aspect, in a fourth possible implementation, the pre-set stop charging condition includes at least one of the following conditions: a current electric power of the autonomous mobile device is greater than or equal to a second electric power threshold; a distance between the autonomous mobile device and the base station is greater than or equal to a distance threshold; the distance between the autonomous mobile device and the base station is greater than distances between the autonomous mobile device and other base stations; there exists an obstacle between the autonomous mobile device and the base station.

With reference to the twenty-first aspect, in a fifth possible implementation, the charging control method also includes: transmitting a detecting signal, where a determination may be made as to whether there exists an obstacle between the autonomous mobile device and the base station based on the detecting signal.

With reference to the third possible implementation of the twenty-first aspect, in a sixth possible implementation, the pre-set stop charging condition also includes the charging efficiency being equal to or smaller than a charging efficiency threshold, where, the charging efficiency is a ratio between a charging power of the autonomous mobile device and a transmitting power of the base station transmitting the charging wave.

With reference to the sixth possible implementation of the twenty-first aspect, in a seventh possible implementation, when the charging efficiency is equal to or smaller than the charging efficiency threshold, it may be determined that a charging failure occurred, and a number of charging failures may be counted, and when the counted number of charging failures is greater than or equal to a count threshold, it may be determined that the pre-set stop charging condition is satisfied.

With reference to the twenty-first aspect, in an eighth possible implementation, the charging control method also includes: receiving time/distance information that is based on the UWB localization signals respectively transmitted by multiple base stations; selecting a target base station from the multiple base stations for priority charging of the autonomous mobile device based on the time/distance information; transmitting, to the target base station, feedback information that carries identification information configured to be used by the target base station for self-identification.

With reference to the eighth possible implementation of the twenty-first aspect, in a ninth possible implementation, a relative distance between the target base station and the autonomous mobile device is smaller than relative distances between other base stations of the multiple base stations and the autonomous mobile device, or a quantity of the target base stations is at least two but less than the multiple base stations, a relative distance between each target base station and the autonomous mobile device is smaller than relative distances between other base stations of the multiple base stations and the autonomous mobile device.

According to a twenty-second aspect of the present disclosure, a charging control method is provided, which may be implemented by a base station, including: a receiving step, configured to receive an ultra-wide band localization signal, i.e., a UWB localization signal transmitted by the autonomous mobile device; a localization step, configured to determine a location of the autonomous mobile device based on the UWB localization signal, and determine a charging direction based on the location of the autonomous mobile device; and a charging wave transmitting step, configured to transmit a charging wave in the charging direction.

With reference to the twenty-second aspect, in a first possible implementation, before the charging wave transmitting step, the charging control method also includes: determining whether an obstacle exists between the autonomous mobile device and the base station; when it is determined that an obstacle exists between the autonomous mobile device and the base station, not executing the charging wave transmitting step.

With reference to the first possible implementation of the twenty-second aspect, in a second possible implementation, when it is determined that an obstacle does not exist between the autonomous mobile device and the base station, then a determination may be made as to whether a distance between the autonomous mobile device and the base station satisfies a pre-set distance condition; when it is determined that the pre-set distance condition is satisfied, the charging wave transmitting step may be executed.

With reference to the second possible implementation of the twenty-second aspect, in a third possible implementation, the pre-set distance condition includes: the distance between the autonomous mobile device and the base station is smaller than or equal to a distance threshold; and/or the distance between the base station and the autonomous mobile device is smaller than distances between other base stations and the autonomous mobile device.

With reference to the first possible implementation of the twenty-second aspect, in a fourth possible implementation, a detecting signal transmitted by the autonomous mobile device may be detected, in order to determine whether an obstacle exists between the autonomous mobile device and the base station.

With reference to the twenty-second aspect, in a fifth possible implementation, after the charging wave transmitting step, the charging control method also includes: calculating a charging efficiency based on a ratio between a charging power of the autonomous mobile device and a transmitting power of the based station transmitting the charging wave; when the charging efficiency is equal to or smaller than a charging efficiency threshold, stopping transmitting the charging wave or changing the charging direction.

With reference to the twenty-second aspect, in a sixth possible implementation, after the charging wave transmitting step, the charging control method also includes: calculating a charging efficiency based on a ratio between a charging power of the autonomous mobile device and a transmitting power of the base station transmitting the charging wave; when the charging efficiency is equal to or smaller than a charging efficiency threshold, determining that a charging failure occurred, and counting a number of charging failures, and when the counted number of charging failures is greater than or equal to a count threshold, stopping transmitting the charging wave or changing the charging direction.

According to a twenty-third aspect of the present disclosure, a charging control method is provided, including: receiving, by an autonomous mobile device, a charging wave transmitted by a base station, and performing charging using the received charging wave; transmitting, by the autonomous mobile device, a charging power of the autonomous mobile device; receiving, by the base station, the charging power transmitted by the autonomous mobile device; calculating, by the base station, a charging efficiency of the autonomous mobile device, the charging efficiency is a ratio between the charging power of the autonomous mobile device and a transmitting power of the base station transmitting the charging wave; determining, by the base station, whether the charging efficiency of the autonomous mobile device is equal to or smaller than a charging efficiency threshold; and when the charging efficiency is equal to or smaller than the charging efficiency threshold, stopping, by the base station, transmitting the charging wave or changing the charging direction, or, when the charging efficiency is equal to or smaller than the charging efficiency threshold, determining that a charging failure occurred, and counting a number of charging failures; when the counted number of charging failures is greater than or equal to a count threshold, stopping, by the base station, transmitting the charging wave or changing the charging direction.

According to a twenty-fourth aspect of the present disclosure, a charging control method is provided, which may be implemented by an autonomous mobile device, including: a transmitting step, configured to transmit an ultra-wide band localization signal, i.e., a UWB localization signal, where the UWB localization signal is configured to enable the base station to determine a location of the autonomous mobile device; a detecting step, configured to detect whether a directional signal transmitted by the base station is received; a transmitting step, configured to transmit, after the directional signal transmitted by the base station is detected, feedback information to the base station through a wireless network in response to the directional signal; and a charging step, configured to receive a charging wave transmitted by the base station in a charging direction that is based on the location of the autonomous mobile device, and perform charging using the received charging wave.

According to a twenty-fifth aspect of the present disclosure, a charging control method is provided, which may be implemented by a base station, including: a receiving step, configured to receive an ultra-wide band localization signal, i.e., a UWB localization signal transmitted by an autonomous mobile device; a determination step, configured to determine whether an obstacle exists between the autonomous mobile device and the base station; a localization step, configured to determine a location of the autonomous mobile device based on the UWB localization signal, and determine a charging direction based on the location of the autonomous mobile device; and a charging wave transmitting step, configured to transmit a charging wave in the charging direction when it is determined that an obstacle does not exist between the autonomous mobile device and the base station.

With reference to the twenty-fifth aspect, in a first possible implementation, the charging control method also includes: after receiving the UWB localization signal, transmitting a directional signal; the determination step includes: determining whether feedback information transmitted by the autonomous mobile device is received, where the feedback information includes an indication that the directional signal is received; and when it is determined that the feedback information is received, determining that an obstacle does not exist between the autonomous mobile device and the base station.

With reference to the twenty-fifth aspect, in a second possible implementation, the determination step includes: determining whether a detecting signal transmitted by the autonomous mobile device is received; when it is determined that the detecting signal is received, determining that an obstacle does not exist between the autonomous mobile device and the base station.

According to a twenty-sixth aspect of the present disclosure, a charging control apparatus is provided, which may be implemented in an autonomous mobile device, including: a transmitting module, configured to transmit an ultra-wide band localization signal, i.e., a UWB localization signal, where the UWB localization signal is configured to enable the base station to determine a location of the autonomous mobile device; and a charging module, configured to receive a charging wave transmitted by the base station in a charging direction that is based on the location of the autonomous mobile device, and perform charging using the received charging wave.

According to a twenty-seventh aspect of the present disclosure, a charging control apparatus is provided, which may be implemented in a base station, including: a receiving module, configured to receive an ultra-wide band localization signal, i.e., a UWB localization signal transmitted by the autonomous mobile device; a localization module, configured to determine a location of the autonomous mobile device based on the UWB localization signal, and determine a charging direction based on the location of the autonomous mobile device; and a charging wave transmitting module, configured to transmit a charging wave in the charging direction.

According to a twenty-eighth aspect of the present disclosure, a charging control apparatus is provided, which may be implemented in an autonomous mobile device, including: a charging module, configured to receive the charging wave transmitted by the base station in the charging direction that is based on the location of the autonomous mobile device, and perform charging using the received charging wave; a charging power transmitting module, configured to transmit a charging power of the autonomous mobile device.

According to a twenty-ninth aspect of the present disclosure, a charging control apparatus is provided, which may be implemented in a base station, including: a charging wave transmitting module, configured to transmit a charging wave in a charging direction; a charging power receiving module, configured to receive a charging power of an autonomous mobile device; a computing module, configured to calculate a charging efficiency of the autonomous mobile device, the charging efficiency being a ratio between the charging power of the autonomous mobile device and a transmitting power of the base station transmitting the charging wave; a determination module, configured to determine whether the charging efficiency of the autonomous mobile device is equal to or smaller than a charging efficiency threshold; a decision making module, configured to, when the charging efficiency is equal to or smaller than the charging efficiency threshold, stop the base station from transmitting the charging wave or change the charging direction, or when the charging efficiency is equal to or smaller than the charging efficiency threshold, determine that a charging failure occurred, count a number of charging failures, and in response to the counted number of charging failures being greater than or equal to a count threshold, stop the base station from transmitting the charging wave or change the charging direction.

According to a thirtieth aspect of the present disclosure, a charging control apparatus is provided, which may be implemented in a base station, including: a receiving module, configured to receive an ultra-wide band localization signal, i.e., a UWB localization signal transmitted by the autonomous mobile device; a determination module, configured to determine whether an obstacle exists between the autonomous mobile device and the base station; a localization module, configured to determine a location of the autonomous mobile device based on the UWB localization signal, and determine a charging direction based on the location of the autonomous mobile device; and a charging wave transmitting module, configured to transmit a charging wave in the charging direction after it is determined that an obstacle does not exist between the autonomous mobile device and the base station.

According to a thirty-first aspect of the present disclosure, an autonomous mobile device is provided, including: a motion module, configured to move the autonomous mobile device in a work zone; and the charging control apparatus according to the twenty-sixth aspect or the twenty-eighth aspect.

According to a thirty-second aspect of the present disclosure, a base station is provided, including: the charging control apparatus according to the twenty-seventh aspect, the twenty-ninth aspect or the thirtieth aspect.

According to a thirty-third aspect of the present disclosure, an autonomous mobile device is provided, including: a motion module, configured to move the autonomous mobile device in a work zone; one or more processors; and a storage device, which stores instructions, where, when the instructions are executed by the one or more processors, the instructions cause the one or more processors to execute the charging control method according to the twenty-first aspect, any implementation of the first to the ninth possible implementations of the twenty-first aspect, or the twenty-fourth aspect.

According to a thirty-fourth aspect of the present disclosure, a base station is provided, including: one or more processors; and a storage device, which stores instructions, where, when the instructions are executed by the one or more processors, the instructions cause the one or more processors to execute the charging control method according to the twenty-second aspect, the first to the sixth possible implementations of the twenty-second aspect, the twenty-third aspect, the twenty-fourth aspect, the twenty-fifth aspect, any implementation of the first to the second possible implementations of the twenty-fifth aspect.

According to a thirty-fifth aspect of the present disclosure, a non-transitory computer-readable storage medium that stores a program is provided, where the program includes instructions, when the instructions are executed by a computer, the instructions cause the computer to execute the charging control method according to the twenty-first aspect, the first to the ninth possible implementations of the twenty-first aspect, the twenty-second aspect, the first to the sixth possible implementations of the twenty-second aspect, the twenty-third aspect, the twenty-fourth aspect, the twenty-fifth aspect, any implementation of the first to the second possible implementations of the twenty-fifth aspect.

According to a thirty-sixth aspect of the present disclosure, a computer program product is provided, which includes instructions, when the instructions are executed by a computer, the instructions cause the computer to execute the charging control method according to the twenty-first aspect, the first to the ninth possible implementations of the twenty-first aspect, the twenty-second aspect, the first to the sixth possible implementations of the twenty-second aspect, the twenty-third aspect, the twenty-fourth aspect, the twenty-fifth aspect, any implementation of the first to the second possible implementations of the twenty-fifth aspect.

According to a thirty-seventh aspect of the present disclosure, a charging control system is provided, including the autonomous mobile device according to the thirty-first aspect and the base station according to the thirty-second aspect, or the autonomous mobile device according to the thirty-third aspect and the base station according to the thirty-fourth aspect.

According to the technical solutions of the twenty-first aspect to the thirty-seventh aspect of the present disclosure, long distance non-contact charging of the autonomous mobile device by the base station may be realized, and it is not needed for the autonomous mobile device to move to the base station and align the charging contact point of the autonomous mobile device with the charging contact plate of the base station.

According to a thirty-eighth aspect of the present disclosure, a charging control method is provided, which may be implemented by an autonomous mobile device. The autonomous mobile device includes an identification feature configured to be used by a base station to identify the autonomous mobile device. The charging control method includes: a charging step, configured to receive a charging wave transmitted by the base station in a charging direction facing the autonomous mobile device, and perform charging using the received charging wave.

With reference to the thirty-eighth aspect, in a first possible implementation, before the charging step, the method also includes: determining whether a pre-set charging condition is satisfied, and after it is determined that the pre-set charging condition is satisfied, transmitting, to the base station, feedback information including a charging request that is configured to request the base station to charge the autonomous mobile device.

With reference to the first possible implementation of the thirty-eighth aspect, in a second possible implementation, the pre-set charging condition includes at least one of the following conditions: a remaining electric power of the autonomous mobile device is smaller than or equal to a first electric power threshold; a moving mileage of the autonomous mobile device is greater than or equal to a mileage threshold; a moving time period of the autonomous mobile device is greater than or equal to a time period threshold; a coverage area of a work zone covered by the autonomous mobile device is greater than or equal to an area threshold; a ratio between the coverage area of the work zone covered by the autonomous mobile device and an area of the work zone is greater than or equal to a ratio threshold.

With reference to the thirty-eighth aspect, in a third possible implementation, after the charging step, the method also includes: determining whether a pre-set stop charging condition is satisfied, after it is determined that the pre-set stop charging condition is satisfied, obscuring the identification feature on the autonomous mobile device, or, transmitting, to the base station, a stop charging request configured to request the base station to stop charging the autonomous mobile device.

With reference to the third possible implementation of the thirty-eighth aspect, in a fourth possible implementation, the pre-set stop charging condition includes at least one of the following conditions: a current electric power of the autonomous mobile device is equal to or greater than a second electric power threshold; a distance between the autonomous mobile device and the base station is equal to or greater than a distance threshold; the distance between the autonomous mobile device and the base station is greater than distances between the autonomous mobile device and other base stations; there is an obstacle between the autonomous mobile device and the base station; and the identification feature is not again identified by the base station.

With reference to the third possible implementation of the thirty-eighth aspect, in a fifth possible implementation, the pre-set stop charging condition includes a charging efficiency being equal to or smaller than a charging efficiency threshold, where, the charging efficiency is a ratio between a charging power of the autonomous mobile device and a transmitting power of the base station transmitting the charging wave.

With reference to the fifth possible implementation of the thirty-eighth aspect, in a sixth possible implementation, when the charging efficiency is equal to or smaller than the charging efficiency threshold, it may be determined that a charging failure occurred, and a number of charging failures may be counted, and when the counted number of charging failures is greater than or equal to a count threshold, a determination may be made that the pre-set stop charging condition is satisfied.

With reference to the thirty-eighth aspect, in a seventh possible implementation, after the charging step, the method also includes: transmitting a charging power of the autonomous mobile device to the base station.

With reference to the thirty-eighth aspect or any implementation of the first to the seventh possible implementations of the thirty-eighth aspect, in an eighth possible implementation, the identification feature includes at least one of the following: a pattern including different blocks having at least two reflectances; a pattern including different blocks having at least two colors; a pattern having a pre-set shape; a pattern including different blocks having at least two pre-set shapes; a profile/shape corresponding to an outer profile/shape of the autonomous mobile device; and a profile/shape corresponding to a component/part of the autonomous mobile device that can differentiate from profiles/shapes of other objects.

According to a thirty-ninth aspect of the present disclosure, a charging control method is provided, which may be implemented by a base station, including: an identification step, configured to identify an identification feature provided on an autonomous mobile device; a charging wave transmitting step, configured to transmit a charging wave in a charging direction facing the autonomous mobile device on which the identification feature is provided after the identification feature on the autonomous mobile device is identified.

With reference to the thirty-ninth aspect, in a first possible implementation, before the identification step, the method also includes: determining whether feedback information from the autonomous mobile device is received, which includes a charging request configured to request the base station to charge the autonomous mobile device, and identifying the identification feature on the autonomous mobile device after it is determined that the feedback information is received.

With reference to the thirty-ninth aspect, in a second possible implementation, after the charging wave transmitting step, the method also includes: determining whether a stop charging request from the autonomous mobile device is received, which is configured to request the base station to stop charging the autonomous mobile device, and stopping transmitting the charging wave after it is determined that the stop charging request is received.

With reference to the thirty-ninth aspect, in a third possible implementation, after the charging wave transmitting step, the method also includes: receiving a charging power of the autonomous mobile device transmitted by the autonomous mobile device; calculating a charging efficiency based on a ratio between the charging power of the autonomous mobile device and a transmitting power of the base station transmitting the charging wave; stopping transmitting the charging wave when the charging efficiency is equal to or smaller than a charging efficiency threshold.

With reference to the thirty-ninth aspect, in a fourth possible implementation, after the charging wave transmitting step, the method also includes: receiving the charging power of the autonomous mobile device transmitted by the autonomous mobile device; calculating a charging efficiency based on a ratio between the charging power of the autonomous mobile device and the transmitting power of the base station transmitting the charging wave; when the charging efficiency is equal to or smaller than a charging efficiency threshold, determining that a charging failure occurred, and counting a number of charging failures; when the counted number of charging failures is greater than or equal to a count threshold, stopping transmitting the charging wave.

With reference to the thirty-ninth aspect, in a fifth possible implementation, a first direction of the autonomous mobile device relative to the base station after an estimated time period may be determined, where the estimated time period is a time period from a time instance when the base station identifies the identification feature to a time instance when the base station transmits the charging wave, and the charging direction may be adjusted based on the first direction.

With reference to the thirty-ninth aspect or any implementation of the first to the fifth possible implementations of the thirty-ninth aspect, in a sixth possible implementation, the identification feature includes at least one of the following: a pattern including different blocks having at least two reflectances; a pattern including different blocks having at least two colors; a pattern having a pre-set shape; a pattern including different blocks having at least two pre-set shapes; a profile/shape corresponding to an outer profile/shape of the autonomous mobile device; and a profile/shape corresponding to a component/part of the autonomous mobile device that can differentiate from profiles/shapes of other objects.

According to a fortieth aspect of the present disclosure, a charging control apparatus is provided, which may be implemented in an autonomous mobile device. The autonomous mobile device is provided with an identification feature configured to be used by the base station to identify the autonomous mobile device. The charging control apparatus includes: a charging module, configured to receive a charging wave transmitted by the base station in a charging direction facing the autonomous mobile device, and perform charging using the received charging wave.

With reference to the fortieth aspect, in a first possible implementation, the identification feature includes at least one of the following: a pattern including different blocks having at least two reflectances; a pattern including different blocks having at least two colors; a pattern having a pre-set shape; a pattern including different blocks having at least two pre-set shapes; a profile/shape corresponding to an outer profile/shape of the autonomous mobile device; and a profile/shape corresponding to a component/part of the autonomous mobile device that can differentiate from profiles/shapes of other objects.

With reference to the forty-first aspect of the present disclosure, a charging control apparatus is provided, which may be implemented in a base station, including: an identification module, configured to identify an identification feature provided on an autonomous mobile device; a charging wave transmitting module, configured to transmit a charging wave in a charging direction facing the autonomous mobile device on which the identification feature is provided after the identification feature of the autonomous mobile device is identified.

With reference to the forty-first aspect, in a first possible implementation, the identification module includes a light detection and ranging (Lidar) device and/or a camera.

With reference to the forty-first aspect or the first possible implementation of the forty-first aspect, in a second possible implementation, the identification feature includes at least one of the following: a pattern including different blocks having at least two reflectances; a pattern including different blocks having at least two colors; a pattern having a pre-set shape; a pattern including different blocks having at least two pre-set shapes; a profile/shape corresponding to an outer profile/shape of the autonomous mobile device; and a profile/shape corresponding to a component/part of the autonomous mobile device that can differentiate from profiles/shapes of other objects.

According to a forty-second aspect of the present disclosure, an autonomous mobile device is provided, including: a motion module, configured to move the autonomous mobile device in a work zone; an identification feature, configured to be used by the base station to identify the autonomous mobile device; and the charging control apparatus according to the fortieth aspect or the first possible implementation of the fortieth aspect.

According to a forty-third aspect of the present disclosure, a base station is provided, including: the charging control apparatus according to the forty-first aspect, the first possible implementation of the forty-first aspect, or the second possible implementation of the forty-first aspect.

According to a forty-fourth aspect of the present disclosure, an autonomous mobile device is provided, including: a motion module, configured to move the autonomous mobile device in a work zone; one or more processors; an identification feature, configured to be used by a base station to identify the autonomous mobile device; and a storage device, which stores instructions, where, when the instructions are executed by the one or more processors, the instructions cause the one or more processors to execute the charging control method according to the thirty-eighth aspect or any implementation of the first to the eighth possible implementations of the thirty-eighth aspect.

According to a forty-fifth aspect of the present disclosure, a base station is provided, including: one or more processors; and a storage device, which stores instructions, where, when the instructions are executed by the one or more processors, the instructions cause the one or more processors to execute the charging control method according to the thirty-ninth aspect or any implementation of the first to the sixth possible implementations of the thirty-ninth aspect.

According to a forty-sixth aspect of the present disclosure, a non-transitory computer-readable storage medium that stores a program is provided, the program includes instructions, when the instructions are executed by a computer, the instructions cause the computer to execute the charging control method according to the thirty-eighth aspect, the first to the eighth possible implementations of the thirty-eighth aspect, the thirty-ninth aspect, or any implementation of the first to the sixth possible implementations of the thirty-ninth aspect.

According to a forty-seventh aspect of the present disclosure, a computer program product is provided, which includes instructions, when the instructions are executed by a computer, the instructions cause the computer to execute the charging control method according to the thirty-eighth aspect, the first to the eighth possible implementations of the thirty-eighth aspect, the thirty-ninth aspect, or any implementation of the first to the sixth possible implementations of the thirty-ninth aspect.

According to a forty-eighth aspect of the present disclosure, a smart mobile system is provided, including the autonomous mobile device according to the forty-second aspect and the base station according to the forty-third aspect, or the autonomous mobile device according to the forty-fourth aspect and the base station according to the forty-fifth aspect.

According to the technical solutions of the thirty-eighth aspect to the forty-eighth aspect of the present disclosure, after the base station identifies the identification feature of the autonomous mobile device, the base station may transmit a charging wave in a charging direction facing the autonomous mobile device. As such, non-contact long distance wireless charging by the base station to the autonomous mobile device that is identified by the base station based on the identification feature can be realized, thereby increasing the charging success rate and the work efficiency of the autonomous mobile device.

Other features and aspects of the present disclosure will become clearer in view of the following detailed descriptions of illustrative embodiments with reference to the accompanying drawings.

### DESCRIPTION OF ACCOMPANYING DRAWINGS

The accompanying drawings, which are included in the specification and form parts of the specification, together with the specification, show illustrative embodiments, features and aspects, and are used to explain the principle of the present disclosure.
FIG. 1 is a schematic illustration of a charging control system according to an illustrative embodiment.
FIG. 2 is a flowchart showing a charging control method according to an illustrative embodiment.
FIG. 3 is a schematic illustration of an autonomous mobile device and multiple charging base stations according to an illustrative embodiment.
FIG. 4 is a flowchart showing charging operations when there are multiple charging base stations according to an illustrative embodiment.
FIG. 5 is a schematic illustration of a charging control system according to an illustrative embodiment.
FIG. 6 is a flowchart showing a charging control method according to an illustrative embodiment.
FIG. 7 is a schematic illustration of an autonomous mobile device and multiple base stations according to an illustrative embodiment.
FIG. 8 is a flowchart showing charging operations when there are multiple base stations according to an illustrative embodiment.
FIG. 9A is a chess board identification feature provided on a base station according to an illustrative embodiment.
FIG. 9B is an identification feature provided on a base station, which is formed by horizontally arranged, bright-dark alternating geometric patterns according to an illustrative embodiment.
FIG. 10 is a schematic illustration of a charging control system according to an illustrative embodiment.
FIGs. 11A - 11F are flowcharts showing charging control methods according to illustrative embodiments.
FIG. 12 is a schematic illustration of an autonomous mobile device and multiple base stations according to an illustrative embodiment.
FIG. 13 is a flowchart showing charging operations when there are multiple base stations according to an illustrative embodiment.
FIG. 14 is a schematic illustration of a charging control system according to an illustrative embodiment.
FIGs. 15A - 15E are schematic illustrations of identification features that can be identified by a Lidar device and/or a camera according to illustrative embodiments.
FIG. 16 is a flowchart showing a charging control method according to an illustrative embodiment.

### DETAILED IMPLEMENTATIONS

Various illustrative embodiments, features and aspects of the present disclosure will be described in detail below with reference to the accompanying drawings. In the accompanying drawings, the same drawing labels indicate components having the same or similar functions. Although various aspects of the embodiments are illustrated in the accompanying drawings, unless otherwise noted, the accompanying drawings are not to scale.

Here the specific term "illustrative" means "as an example, embodiment or illustration." Here, any embodiment described as "illustrative" need not be interpreted as being advantageous to or better than other embodiments.

In addition, to better explain the present disclosure, various specific details are provided in the detailed implementations described below. A person having ordinary skills in the art can understand that, without certain specific details, the present disclosure can still be implemented. In some embodiments, methods, manners, components and electric circuits that are well-known to the person having ordinary skills in the art are not described in detail, so as to conveniently show the main principle of the present disclosure.

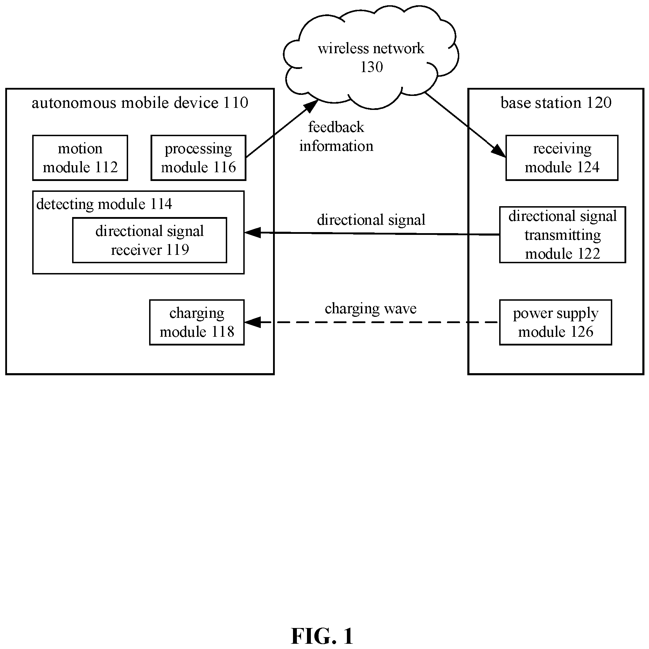

FIG. 1 is a schematic illustration of a charging control system according to an illustrative embodiment. The system includes an autonomous mobile device 110 and a base station 120, where, the autonomous mobile device 110 may be a cleaning robot or other mobile robot executing other working tasks (e.g., patrolling, logistics carrying, following, etc.), which may carry a rechargeable battery. The base station 120 may be a device operating in collaboration with the autonomous mobile device 110 and configured to charge the autonomous mobile device 110. The autonomous mobile device 110 and the base station 120 may communicate through a wireless network 130, and the wireless network 130 may be any wireless communication network (e.g., Wifi, Bluetooth, Zigbee, etc.) configured for data transmission. The base station 120 may include a directional signal transmitting module 122 configured to transmit a directional signal to the autonomous mobile device 110, a receiving module 124 configured to receive feedback information transmitted by the autonomous mobile device 110 in response to the directional signal through the wireless network 30, and a power supply module 126 configured to transmit a charging wave in a charging direction. The autonomous mobile device 110 includes a motion module 112 configured to move the autonomous mobile device 110, a detecting module 114 configured to detect whether the directional signal transmitted by the base station 120 is received, a processing module 116 configured to transmit the feedback information to the base station 120 through the wireless network 130 after detecting the directional signal, and a charging module 118 configured to receive the charging wave transmitted by the base station 120 and perform charging.

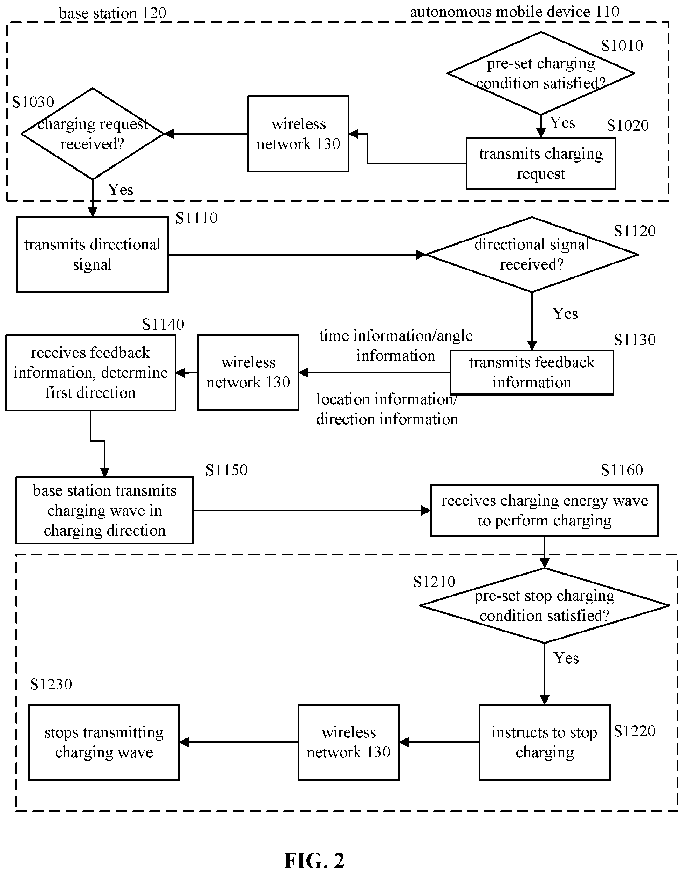

FIG. 2 is a flowchart showing a charging control method according to an illustrative embodiment. Referring to FIG. 2, the charging control method of the present disclosure may include the following steps.

In step S1110, the directional signal transmitting module 122 of the base station 120 may transmit a directional signal. In some embodiments, the directional signal is an electromagnetic wave transmitting in a straight line, such as an infrared, a laser, or a light emitter/light source that includes a focusing apparatus.

In some embodiments, the base station 120 may transmit directional signals through the directional signal transmitting module 122 at different times in different directions, i.e., transmit directional signals that scan in different directions over time. In other embodiments, the base station 120 may transmit, through the directional signal transmitting module 122, multiple directional signals in multiple different angles simultaneously, these directional signals may be the same or may be different; in further embodiments, each directional signal in the multiple directional signals may be associated with angle information or encoding information that corresponds to the directional signal.

In some embodiments, the base station 120 may transmit the directional signals in response to a charging request configured to request the base station 120 to charge the autonomous mobile device 110, where, the charging request may be transmitted from the autonomous mobile device 110 to the base station 120 through the wireless network 130.

FIG. 2 is a flowchart showing charging request operations according to an illustrative embodiment. In this embodiment, in step S1010, the autonomous mobile device 110 may determine whether currently a pre-set charging condition is satisfied, where, the pre-set charging condition includes at least one of the following conditions: a remaining electric power of the autonomous mobile device is equal to or smaller than a first electric power threshold, a moving mileage of the autonomous mobile device is equal to or greater than a mileage threshold, a moving time period of the autonomous mobile device is equal to or greater than a time period threshold, a coverage area of a work zone covered by the autonomous mobile device is equal to or greater than an area threshold, and a ratio between the coverage area of the work zone covered by the autonomous mobile device and an area of the work zone is equal to or greater than a ratio threshold. For example, the first electric power threshold may be 20%, the autonomous mobile device 110 may determine that the pre-set charging condition is satisfied when the remaining electric power is equal to or smaller than 20%. For example, the mileage threshold may be 1000 meters, the autonomous mobile device 110 may determine that the pre-set charging condition is satisfied when the moving mileage since the completion of last charging is equal to or greater than 1000 meters. For example, the time period threshold may be 1 hour, the autonomous mobile device 110 may determine that the pre-set charging condition is satisfied when the moving time period since the completion of last charging is equal to or greater than 1 hour. For example, the area threshold may be 40 m², the autonomous mobile device 110 may determine that the pre-set charging condition is satisfied when the coverage area of the work zone already covered by the autonomous mobile device since the completion of last charging is equal to or greater than 40 m². For example, the ratio threshold may be 50%, the autonomous mobile device 110 may determine that the pre-set charging condition is satisfied when the ratio between the coverage area of the work zone already covered since the completion of last charging and a total area of the work zone is equal to or greater than 50%. The above pre-set charging conditions may be used individually, or multiple pre-set charging conditions may be used in combination.

When it is determined that the pre-set charging condition is not satisfied in step S1010, the determination may continue.

When it is determined that the pre-set charging condition is satisfied in step S1010, then in step S1020, the autonomous mobile device 110 may transmit a charging request to the base station 120 through the wireless network 130. In step S1030, the base station 120 may determine whether the charging request is received. The base station 120 may start transmitting the directional signal after the charging request is received. When the charging request is not received, the base station 120 may not transmit the directional signal.

In an embodiment, the detecting module 114 of the autonomous mobile device 110 may also include a directional signal receiver 119 configured to receive the directional signal, where, when it is determined that the pre-set charging condition is satisfied, the directional signal receiver 119 may be turned on, and the detecting module 114 may detect whether a directional signal is received through the directional signal receiver 119. In an embodiment, the directional signal receiver 119 in the detecting module 114 may be at a constantly "on" state, but may process the directional signal received by the directional signal receiver 119 only when it is determined that the pre-set charging condition is satisfied.

In the above embodiment, a determination is made as to whether the charging of the autonomous mobile device needs to be started, and only when it is determined that the charging is needed, the base station is instructed to perform step S1110 to transmit the directional signal, and to perform subsequent steps; as such, compared to the scenario in which the base station transmits the directional signal regardless of whether charging of the autonomous mobile device is needed, in the above embodiment, the base station transmits the directional signal only when the charging of the autonomous mobile device is needed, which avoids transmission of the directional signal by the base station when it is unnecessary, thereby saving energy and reducing the electromagnetic radiation produced by the base station to the external environment.

After the completion of execution of step S1110, the following step S1120 may be subsequently executed.

In step S1120, the detecting module 114 of the autonomous mobile device 110 may detect the directional signal transmitted by the base station 120. In some embodiments, the detecting module 112 may include an infrared sensor configured to detect an infrared signal. When a directional signal is not detected in step S1120, the detection may continue. When the directional signal is detected in step S1120, the following step S1130 may be executed.

In step S1130, in response to detecting the directional signal by the detecting module 114, the processing module 116 of the autonomous mobile device 110 may transmit feedback information to the base station 120 through the wireless network 130.

In step S1140, the base station 120 may receive, through the receiving module 124, the feedback information transmitted by the autonomous mobile device 110 through the wireless network 130, where, a first direction of the autonomous mobile device relative to the base station may be determined based on the feedback information. In some embodiments, the base station 120 may transmit directional signals that scan in different directions over time; the processing module 116 of the autonomous mobile device 110 may determine time instances when the detecting module 114 detects the directional signals, and may include time information relating to the time instances of detection in the feedback information. Through the time information included in the feedback information, a transmitting direction of the directional signal when the autonomous mobile device 110 receives the directional signal may be determined, thereby determining the first direction of the autonomous mobile device relative to the base station. In other embodiments, the base station 120 may transmit multiple directional signals simultaneously in different angles, where each directional signal is associated with angle information that corresponds to the directional signal; the processing module 116 of the autonomous mobile device 110 may determine the angle information associated with the directional signal detected by the detecting module 114, and may include the angle information associated with the directional signal in the feedback information. Through the angle information included in the feedback information, a transmitting direction of a directional signal in the multiple directional signals that is received by the autonomous mobile device 110 may be determined, thereby determining the first direction of the autonomous mobile device relative to the base station.

In some further embodiments, the autonomous mobile device 110 may have localization capability. The processing module 116 may determine a coordinate location of the autonomous mobile device, and the base station 120 may simultaneously transmit multiple same directional signals in multiple different angles. When the processing module 116 detects the directional signal, it may include the current coordinate location of the autonomous mobile device in the feedback information; after the base station receives the feedback information, the first direction of the autonomous mobile device relative to the base station may be determined based on the coordinate location of the autonomous mobile device 110 included in the feedback information and based on a coordinate location of the base station (which typically is the location where the autonomous mobile device is turned on, and therefore typically the coordinate location of the base station is recorded by the autonomous mobile device, which is typically set as the coordinate origin of an absolute coordinate system, i.e., the starting point of x=0, y=0; therefore the coordinate location of the autonomous mobile device itself is the relative location of the autonomous mobile device relative to the base station). Alternatively, when the processing module 16 of the autonomous mobile device 110 determines that the detecting module 114 detects the directional signal, the processing module 116 may calculate the relative direction of the autonomous mobile device relative to the base station, i.e., the first direction, based on the current coordinate location of the autonomous mobile device and the location of the base station, and may include information of the first direction in the feedback information, and then transmit the feedback information to the base station through the wireless network.

In the present disclosure, for the convenience of descriptions, the relative direction of the autonomous mobile device relative to the base station, or the relative location of the coordinate location of the autonomous mobile device relative to the coordinate location of the base station is simply referred to as the direction/location information of the autonomous mobile device 110 relative to the base station 120. For example, the processing module 116 may create a map of the work environment and determine respective locations of the autonomous mobile device 110 and the base station 120 in the map, then calculate the direction/location information of the autonomous mobile device 110 relative to the base station 120 based on map data and location data of the autonomous mobile device 110 and the base station 120, and may include the direction/location information in the feedback information. Further, the first direction may be determined directly based on the direction/location information included in the feedback information.

After the completion of execution of the above step S1140, step S1150 may be subsequently executed.

In step S1150, the base station 120 may transmit, through the power supply module 126, a charging wave configured for charging the autonomous mobile device in a charging direction that is based on the first direction.

In some embodiments, the charging direction is the first direction. In other embodiments, the charging direction is a second direction of the autonomous mobile device 110 relative to the base station 120 after an estimated time period tₑ has lapsed since the transmission of the feedback information by the autonomous mobile device, where, the estimated time period tₑ indicates a time period from a time instance when the autonomous mobile device 110 transmits the feedback information to a time instance when the base station 120 transmits the charging wave. For example, the autonomous mobile device 110 may transmit the feedback information to the base station 120 through the wireless network 130 at a time instance t₁, and may continue moving after transmitting the feedback information. The first direction determined based on the time information, angle information, and/or direction/location information included in the feedback information reflects a direction of the autonomous mobile device 110 relative to the base station 120 at the time instance t₁. However, if the base station 120 transmits the charging wave at a time instance t₂ that is after the time instance t₁, then because the autonomous mobile device 110 has moved for a certain distance within the estimated time period (tₑ = t₂ - t₁), it may miss the charging wave transmitted in the first direction. Therefore, to better aim the charging wave at the autonomous mobile device 110, it is needed to determine the second direction of the autonomous mobile device 110 relative to the base station 120 after the estimated time period tₑ has lapsed, i.e., at the time instance t₂, and adjust the charging direction based on the second direction.

In some embodiments, the estimated time period tₑ may adopt an empirical value. For example, the empirical value may be obtained based on time periods detected in multiple experiments from the time instance when the autonomous mobile device 110 transmits the feedback information to the time instance when the base station 120 transmits the charging wave. In other embodiments, the estimated time period tₑ may be calculated based on time consumed in various steps after the autonomous mobile device 110 transmits the feedback information. For example, the estimated time period tₑ may be obtained by adding up a time period t₀₁ theoretically calculated for the transmission of the feedback information from the autonomous mobile device 110 to the base station (for example, the calculation may be based on t₀₁ = l/c, l is approximately the distance from the autonomous mobile device to the base station, which may be obtained through calculation by the processing module 116 based on the relative locations of the autonomous mobile device and the base station; c is the speed of light), a time period t₀₂ for the base station to receive the feedback information and obtain the location of the autonomous mobile device (which may be calculated based on the latency of the software and hardware components or may be set based on empirical values), a time period for the base station to notify the power supply module, a time period for the charging wave transmitted by the power supply module of the base station to arrive at the autonomous mobile device (omitting the displacement of the autonomous mobile device occurring within such a short time period, then this time period is approximately equal to t₀₁). The present disclosure does not limit the calculation methods of the estimated time period.

In an embodiment, possible direction/location of the autonomous mobile device after the estimated time period tₑ has lapsed may be calculated based on a typical moving velocity v of the autonomous mobile device that is recorded in the processing module 116, or the moving velocity v of the autonomous mobile device calculated by the processing module 116 based on the direction/location information of the autonomous mobile device included in the feedback information, and based on the above estimated time period tₑ. Because the autonomous mobile device is a plane-moving device that moves on a floor, locations that can be possibly reached within the estimated time period are only within a very small selection range, i.e., a zone in which the autonomous mobile device may possibly exist, which is a zone that can be determined as follows: using the base station as a center, a virtual connection from the base station to the autonomous mobile device in the first direction of the autonomous mobile device at the time instance t₀₁ when the feedback information is transmitted from the autonomous mobile device 110 as a radius, drawing an arc having a length of v × tₑ on both the left and right sides from the coordinate location of the autonomous mobile device at the time instance t₀₁, the sector-shaped areas represented by the arcs and the corresponding radii on both the left and right sides form the zone. For example, a charging wave may be transmitted toward an inside of this zone, or charging waves may be transmitted in different angles pointing to an inside of this zone. After the charging wave is received by the autonomous mobile device in a certain direction inside this zone (this direction is the second direction), the autonomous mobile device notifies, through the feedback information, the base station that the autonomous mobile device receives the charging wave in the second direction. As such, the base station may realize charging of the autonomous mobile device. In the subsequent movements of the autonomous mobile device, a zone in which the autonomous mobile device can possibly exist may continue to be calculated based on the above formula v × tₑ, and charging waves may be transmitted toward an inside of this zone. Long distance wireless charging of the autonomous mobile device in motion may be realized through the base station transmitting the charging wave and through the feedback information transmitted by the autonomous mobile device that indicates whether the charging wave is received.

Through the above embodiment, the second direction of the autonomous mobile device relative to the base station after the estimated time period has lapsed may be obtained, and the charging direction may be adjusted based on the second direction. As such, for example, the direction of the charging wave may be ensured to be facing the autonomous mobile device, thereby increasing the success rate and efficiency of the charging; and realizing real time charging of the autonomous mobile device that is in motion. Of course, when the charging wave has a shape of a cone that includes the transmitting point as a vertex, and its expansion area in a reasonable distance range (e.g., 3 meters to 5 meters) from the autonomous mobile device to the base station is sufficiently large, such that a bottom side of the cone at this place has a sufficiently large diameter (e.g., greater than or equal to 0.5 meters), a rough calculation may be carried out based on the moving velocity of the autonomous mobile device being 25 cm/s and the estimated time period tₑ being 1s, then the autonomous mobile device moves in the plane for at most 25 cm within the estimated time period tₑ of 1s. Then the charging wave transmitted by the base station in the first direction of the autonomous mobile device, where the first direction is a direction at the time instance t₀₁ when the feedback information is transmitted from the autonomous mobile device 110, can still be received by the autonomous mobile device at the time instance t₀₂ that is after the estimated time period tₑ. At this moment, it may not be necessary to calculate the second direction, i.e., the charging wave transmitted by base station directly in the first direction may charge the autonomous mobile device.

In some embodiments, the feedback information of the autonomous mobile device may also include charging power information; for example, the charging module of the base station may transmit a charging wave/tentative charging wave toward an inside of a zone in which the autonomous mobile device may possibly exist, or may transmit the charging waves/tentative charging waves toward an inside of the zone in different angles (the power of the tentative charging wave is smaller than that of the charging wave for normal charging of the autonomous mobile device, which may be, for example, only 1% of the power of the normal charging wave, the tentative charging wave may be configured as a precursor of the charging wave for normal charging, and configured for detecting whether the autonomous mobile device can receive the charging wave; the directional signal of the present disclosure may also be the tentative charging wave described herein), and at the base station, the charging efficiency (charging efficiency = charging power ÷ transmitting power × 100%) may be calculated based on the transmitting power recorded in the base station and the charging power information included in the feedback information. In some embodiments, the charging direction may be examined based on the charging efficiency, so as to determine whether the charging direction is accurate. For example, when the charging efficiency is within a reasonable range (e.g., the charging efficiency is greater than or equal to 60%), then it may be determined that the autonomous mobile device has been charged. Then the charging wave may continue to be transmitted in the first direction, in the second direction derived based on the first direction and/or possible zones surrounding the first direction; otherwise, it may be determined that the charging wave has not been received by the autonomous mobile device, and it may be needed to stop transmitting the charging wave or to change the transmitting direction of the charging wave.

In some embodiments, the charging wave may be transmitted in the second direction after the estimated time period and/or possible zones surrounding the second direction, and the charging efficiency may be calculated after the estimated time period. When the charging efficiency is within a reasonable range (e.g., the charging efficiency is greater than or equal to 60%), then the determination of the second direction is correct, and the next second direction may continue to be determined in the same manner; otherwise, it may be needed to stop transmitting the charging wave or change the determination method of the second direction.

During the movement of the autonomous mobile device, the charging wave may be transmitted according to the above method in the first direction or the second direction where the autonomous mobile device may possibly exist, and a real time determination may be made as to whether the charging wave is received by the autonomous mobile device by constantly detecting the charging efficiency, thereby realizing the long distance wireless charging of the autonomous mobile device in motion.

After the completion of execution of step S1150, the following step S1160 may be executed.

In step S1160, in response to the base station 120 transmitting the charging wave in the charging direction, the charging module 118 of the autonomous mobile device 110 may receive the charging wave transmitted by the base station 120 to perform charging, where, the charging module 118 may transform energy carried by the charging wave into electric energy and store it in a rechargeable battery configured to provide electricity to the autonomous mobile device. For example, the charging wave may be a directionally transmitted microwave, radio frequency, laser or other high-energy electromagnetic wave. The charging module 118 of the autonomous mobile device may receive the charging wave of corresponding form and transform the charging wave into a direct current to charge the rechargeable battery of the autonomous mobile device. Illustratively, magnetic resonance may be used to realize the long distance wireless charging of the present disclosure. For example, two resonant circuits having the same resonant frequency may be respectively provided in the power module 126 of the base station 120 and the charging module 118 of the autonomous mobile device 110 (which may be respectively referred to as a transmitting resonant circuit and a receiving resonant circuit). When the charging wave needs to be transmitted, electric power may be supplied to the transmitting resonant circuit such that the transmitting resonant circuit may oscillate. The receiving resonant circuit having the same resonant frequency as the transmitting resonant circuit may also generate an electric current due to the magnetic resonance effect. As such, the electric current is transmitted over the air, thereby realizing the long distance wireless charging. Through the magnetic resonance method, long distance wireless charging of the autonomous mobile device may be realized within a range of a few meters from the base station. Illustratively, a semiconductor amplifier may be provided on the base station, and a high-power infrared light generated by the semiconductor amplifier may be used as the directionally transmitted charging wave, for charging the autonomous mobile device located within a range of a few meters or even a range of more than ten meters and less than twenty meters from the base station. In addition, because the infrared light that functions as the charging wave does not generate an electromagnetic wave itself, potential harm to human bodies caused by electromagnetic contamination may be avoided. The present disclosure does not limit the specific form of the charging wave.

Wireless charging devices currently widely used in the market (e.g., wireless charging performed by placing a cell phone on an electromagnetic coil of a charger) are mostly based on electromagnetic induction technologies. This type of wireless charging technology is only suitable for short distances (a separation distance between a receiving end and a transmitting end is only a few millimeters to a few centimeters), because this type of wireless charging technology not only requires the separation distance between the receiving end and the transmitting end to be very small, in the meantime it also places a relatively high requirement on the disposition locations. Different from this type of short distance non-plug-in type wireless charging, the long distance wireless charging of the present disclosure is a spatial transmission type non-contact wireless charging, in which an energy transmitting unit and an energy receiving unit are respectively provided in the power supply module 126 of the base station 120 and in the charging module 118 of the autonomous mobile device 110, which are disposed relatively far apart. In this manner, the autonomous mobile device 110 may receive the charging wave transmitted by the power supply module 126 of the base station 120 in a relatively large range from the base station 120 (e.g., from 0.1 meters to 10 meters), thereby realizing free charging of the autonomous mobile device during indoor spatial movements.

After the autonomous mobile device 110 starts receiving the charging wave and performing charging, a determination regarding the pre-set stop charging condition may be made and the charging may be stopped when the pre-set stop charging condition is satisfied.

FIG. 2 also illustrates a flowchart showing stop charging operations of the charging control method according to an illustrative embodiment. In step S1210, a determination may be made as to whether the pre-set stop charging condition is satisfied. In some embodiments, the pre-set stop charging condition may include at least one of the following conditions: a current electric power of the autonomous mobile device is equal to or greater than a second electric power threshold; a distance between the autonomous mobile device and the base station is equal to or greater than a distance threshold; the distance between the autonomous mobile device and the base station is greater than distances between the autonomous mobile device and other base stations; and there is an obstacle between the autonomous mobile device and the base station. For example, the second electric power threshold may be 90%, when the current electric power of the autonomous mobile device 110 is equal to or greater than 90%, it may be determined that the pre-set stop charging condition is satisfied; of course the second electric power threshold may also be set to be 100%, at this moment, when the current electric power of the autonomous mobile device 110 is equal to 100%, a determination may be made that the pre-set stop charging condition is satisfied. For example, the distance threshold may be 5 meters, when the distance from the autonomous mobile device 110 to the base station 120 that is currently transmitting the charging wave is equal to or greater than 5 meters, a determination may be made that the pre-set stop charging condition is satisfied. For example, when there are multiple base stations that can charge the autonomous mobile device 110, when the distance between the autonomous mobile device 110 and the base station 120 that is currently transmitting the charging wave is greater than a distance between the autonomous mobile device 110 and another base station 20', it may be determined that the pre-set stop charging condition relating to the base station 120 is satisfied, and at this moment, the base station 120' that is closer to the autonomous mobile device 110 may charge the autonomous mobile device 110; of course, a prerequisite for determining the pre-set stop charging condition may typically also include: the directional signal transmitted by the base station 120' is also received by the autonomous mobile device 110, to ensure that the charging wave transmitted by the base station 120' to the autonomous mobile device 110 can also be received by the autonomous mobile device 110. For example, when detecting that there exists an obstacle such as a living organism or a metal object between the autonomous mobile device 110 and the base station 120 that is currently transmitting the charging wave, it may be determined that the pre-set stop charging condition is satisfied. In some embodiments, the pre-set stop charging condition may also include the charging efficiency of the autonomous mobile device 110 being equal to or smaller than a charging efficiency threshold (e.g., 60%). Specifically, in some embodiments, when the charging efficiency is equal to or smaller than the charging efficiency threshold, it may be determined that the pre-set stop charging condition is satisfied, and relevant actions may be executed: turning off the directional signal receiver of the autonomous mobile device, or transmitting, to the base station, a stop charging request configured to request the base station to stop charging the autonomous mobile device. In some other embodiments, a number of charging failures may be used as a pre-set stop charging condition. When the charging efficiency is equal to or smaller than the charging efficiency threshold, it may be determined that a charging failure occurred, and the number of charging failures may be counted; when the counted number of charging failures is greater than or equal to a count threshold (e.g., 5 times), it may be determined that the pre-set stop charging condition is satisfied, and relevant actions may be executed. The above-described pre-set stop charging conditions may be used individually, or multiple pre-set stop charging conditions may be used in combination.

In some embodiments, the pre-set stop charging condition may also include the directional signal having not been received within a first predetermined time period. After the base station 120 starts transmitting the charging wave in the charging direction, the base station 120 may continue transmitting the directional signal, and the autonomous mobile device 110 may continue receiving and detecting the directional signal. If after charging is started, the autonomous mobile device 110 constantly does not receive or detect the directional signal within the first predetermined time period, that is, the directional signal is lost, then it indicates that it is possible that there is an obstacle between the autonomous mobile device 110 and the base station 120 that blocks the directional signal that transmits in a straight line. Under this condition, it is determined that the pre-set stop charging condition is satisfied, and the charging is stopped to ensure safety (for example, to avoid supplying energy to the metal thereby avoiding fire, or to avoid supplying energy to a living organism thereby avoiding harm). Of course, if after the charging is started, the autonomous mobile device 110 constantly does not receive or detect the directional signal within the first predetermined time period, it is also possible that it is because the distance between the autonomous mobile device 110 and the base station 120 is too large such that the directional signal decays to such a level that the autonomous mobile device 110 cannot receive the directional signal, then it is possible that the autonomous mobile device 110 may not be able to receive the charging wave transmitted by the base station 120, or even if it can receive the charging wave, the charging efficiency is too low, which may result in waste of the energy. Under this condition, it is determined that the pre-set stop charging condition is satisfied, and the charging is stopped to save energy. Illustratively, the directional signal in this embodiment may be the above-described tentative charging wave.

When it is determined in step S1210 that the pre-set stop charging condition is not satisfied, the charging may continue. When it is determined in step S1210 that the pre-set stop charging condition is satisfied, then the following step S1220 may be executed.

In step S1220, the autonomous mobile device 110 may instruct the base station 120 to stop charging the autonomous mobile device 110.

In step S1230, the base station 120 may stop transmitting the charging wave in response to the instruction transmitted from the autonomous mobile device 110 and received through the wireless network 130, thereby stopping the charging of the autonomous mobile device.

In some embodiments, the feedback information transmitted by the autonomous mobile device 110 to the base station 120 through the wireless network 130 may include a stop charging request configured to request the base station 120 to stop charging the autonomous mobile device 110. Through the stop charging request, the base station may be instructed to stop transmitting the charging wave. The base station 120 may stop transmitting the charging wave in response to receiving the stop charging request, thereby no longer charging the autonomous mobile device.

In some embodiments, the base station 120 may transmit the charging wave in response to receiving the feedback information, and may not transmit the charging wave when the charging wave is not received. The base station 120 may continue transmitting the directional signal after starting transmission of the charging wave in the charging direction; the autonomous mobile device 110 may continue receiving and detecting the directional signal. If the directional signal is constantly not received or detected within the second predetermined time period, that is, the directional signal is lost, then it indicates that it is possible that there exists an obstacle between the autonomous mobile device 110 and the base station 120, which blocks the directional signal that transmits in a straight line, or it is because the distance between the autonomous mobile device 110 and the base station 120 is too large such that the directional signal decays to a level such that the autonomous mobile device 110 cannot receive the directional signal. Under these conditions, the autonomous mobile device 110 may stop transmitting the feedback information. Correspondingly, after starting the transmission of the charging wave, if the base station 120 does not receive the feedback information within a third predetermined time period, transmission of the charging wave may be stopped, thereby stopping the charging to ensure safety or to save energy.

In the above embodiment, the first predetermined time period may be the same as or different from the second predetermined time period, and the third predetermined time period may be equal to or greater than the second predetermined time period. The first predetermined time period and/or the second predetermined time period may be equal to 0, i.e., as long as the base station 120 does not receive or detect the directional signal, the transmission of the charging wave is stopped. The third predetermined time period may also be equal to 0, i.e., as long as the base station 120 does not receive the feedback information, the transmission of the charging wave is stopped.

In some embodiments, the charging efficiency may be calculated based on a ratio between a charging power of the autonomous mobile device and a transmitting power of the base station transmitting the charging wave; when it is determined that the charging efficiency is equal to or smaller than a charging efficiency threshold (e.g., smaller than or equal to 60%), it may be determined that the charging wave has not been sufficiently used for charging the autonomous mobile device. Therefore, the base station may stop transmitting the charging wave, thereby avoiding energy waste and possible danger caused by mistakenly charging metals or living organisms.

In some embodiments, the charging efficiency may be calculated based on a ratio between the charging power of the autonomous mobile device and the transmitting power of the base station transmitting the charging wave; when the charging efficiency is equal to or smaller than the charging efficiency threshold (e.g., smaller than or equal to 60%), it may be determined that a charging failure occurred. In the subsequent transmission of the charging wave, in the meantime, the charging efficiency may continue to be calculated, for example, the charging efficiency may be calculated based on a certain frequency or a pre-set condition. The number of charging failures may be counted. When the counted number of charging failures is greater than or equal to a count threshold, it may be determined that the charging wave has not been sufficiently used to charge the autonomous mobile device. Therefore, the base station may stop transmitting the charging wave, thereby avoiding energy waste and possible danger caused by mistakenly charging metals or living organisms.

Through the above embodiment, charging of the autonomous mobile device may be stopped under suitable conditions. As such, for example, the safety and/or the energy saving of the charging may be enhanced.

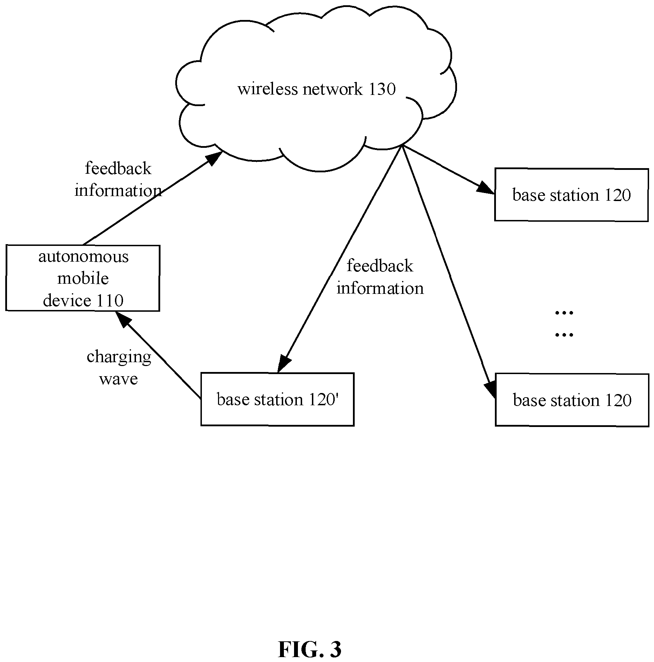

In some embodiments, there may exist multiple base stations that can charge the autonomous mobile device 110, and each base station can transmit identification information that uniquely corresponds to the base station that transmits the directional signal. FIG. 3 is a schematic illustration of an autonomous mobile device and multiple base stations according to an illustrative embodiment, where, the directional signal including unique identification information that is transmitted by each base station of the multiple base stations may be received, detected and identified by the autonomous mobile device 110. To increase charging efficiency and safety, it is desirable to use the base station 120', which is closest to the autonomous mobile device 110 and is not obscured by an obstacle from the autonomous mobile device 110, to charge the autonomous mobile device 10.

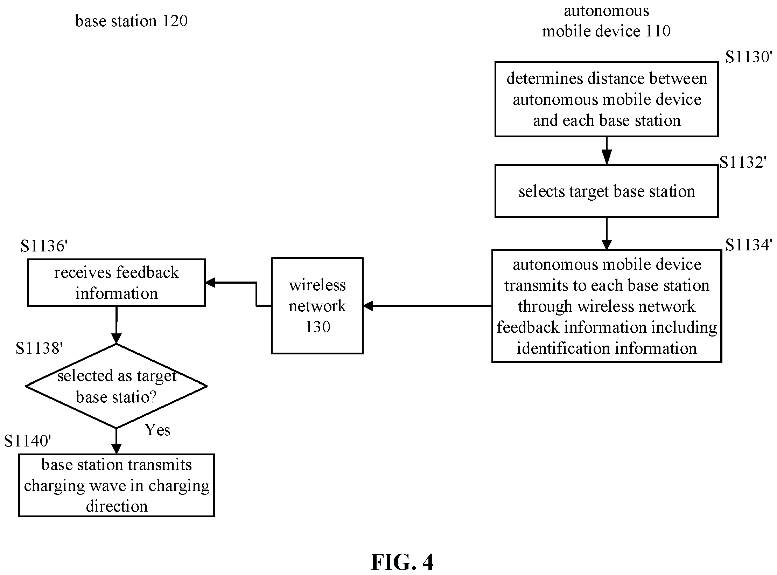

FIG. 4 is a flowchart showing charging operations when there are multiple base stations according to an illustrative embodiment.

In step S1130', a relative distance between the autonomous mobile device 110 and each base station may be determined based on the directional signal transmitted by each base station of the multiple base stations. In some embodiments, the relative distance is a quantitative distance, that is, first, an absolute distance value between the autonomous mobile device and each base station is calculated based on the coordinate location of the autonomous mobile device and the coordinate location of each base station. Then multiple absolute distance values are compared to obtain the minimum absolute distance value, thereby determining the closest base station. In some other embodiments, the distance may be a qualitative distance, that is, only a relative far-or-close state between the autonomous mobile device 110 and each base station may be determined, and the distance value between the autonomous mobile device 110 and each base station need not be obtained.

For example, a transmitting distance of the directional signal and a strength of the received directional signal at a location of this distance have an inverse proportional relationship. Therefore, when each base station transmits the directional signal having the same strength, the far-or-close state of the autonomous mobile device 10 relative to different base stations may be determined based on different strengths of respective directional signals received by the autonomous mobile device 110, where, when the strength of a certain directional signal received by the autonomous mobile device 110 is the greatest, it indicates that among all of the base stations, the base station that transmits this directional signal is the closest. The base station may be identified based on the identification information. The base station may be notified through the feedback information to transmit the charging wave to a location of the autonomous mobile device. Under this condition, the absolute distance between the autonomous mobile device 110 and each base station need not be determined, that is, detailed value of the distance between the autonomous mobile device and each base station need not be determined, and it is only needed to determine which base station is closest to the current location of the autonomous mobile device.

In some embodiments, a relative distance between the autonomous mobile device and each base station may be determined based on a transmission time period from a time instance when the base station transmits the directional signal to a time instance when the autonomous mobile device receives the directional signal. Because different directional signals transmitted by each base station have the same transmission speed in air (all being approximately the speed of light), the distance between the autonomous mobile device 110 and each base station is proportional to the transmission time period of the directional signal respectively transmitted by each base station. The directional signal transmitted by each base station may include a transmitting time instance when the directional signal is transmitted from the corresponding base station; the autonomous mobile device 110 may determine a detecting time instance when the directional signal is detected, i.e., the time instance the directional signal is received by the autonomous mobile device; the processing module of the autonomous mobile device may compare the transmitting time instance and the detecting time instance of the same directional signal, and calculate the transmission time period of the directional signal, where, when the transmission time period of a certain directional signal received by the autonomous mobile device is the smallest, it indicates that in all base stations transmitting the directional signals that can be received by the autonomous mobile device, the base station that transmits this directional signal is closest to the current location of the autonomous mobile device. In addition, the absolute distance between the autonomous mobile device 110 and each base station may be obtained based on the transmission time period.

In some embodiments, the processing module 116 of the autonomous mobile device 110 may create a map of the work environment and determine locations of the autonomous mobile device 110 and each base station in the map; then calculate a relative distance or an absolute distance between the autonomous mobile device 110 and each base station based on map data. Alternatively, the relative distance between each base station and the autonomous mobile device may be calculated based on the coordinate location of each base station under an absolute coordinate system and the current coordinate location of the autonomous mobile device.

After the completion of the execution of step S1130', the following step S1132' may be subsequently executed.

In step S1132', a target base station may be selected from the multiple base stations for priority charging of the autonomous mobile device based on a relative distance between the autonomous mobile device 110 and each base station and based on whether an obstacle exists between the autonomous mobile device 110 and each base station, and corresponding identification information of the target base station may be included in the feedback information. For example, among base stations where no obstacle exists between the autonomous mobile device 110 and the base stations, a base station that is closest to the autonomous mobile device 110 may be selected as the target base station, for priority charging of the autonomous mobile device 10.

In step S1134', the autonomous mobile device 110 may transmit the feedback information including the unique identification information of the target base station to each base station through the wireless network 130. In some embodiments, the feedback information may be in a form of a packet. For example, the feedback information may be a 128-byte packet, where the first 8 bytes may be header check digits for determining the header of the packet itself, the second 8 bytes may include information of the autonomous mobile device, the third 8 bytes may include the identification information of the target base station, the remaining bytes may be check bits. Of course, some bytes may be set for special information. For example, multiple bytes at different selected locations may be used to indicate direction or coordinate location of the autonomous mobile device, and/or time information of the above-described detecting time, and/or angle information of the directional signal, and/or information of the first direction, and/or information of the second direction, and/or charging power information, and/or the stop charging request, and/or instruction information for instructing the base station whether or not to transmit the charging wave, and/or the identification information of the target base station, etc. The above descriptions are only illustrative. The present disclosure does not limit the specific form of the feedback information.

In step S1136', the multiple base stations may respectively receive the feedback information through the wireless network 130.

In step S1138', each base station may perform self-identification based on the identification information included in the feedback information, to determine whether the base station is selected as the target base station. Because the identification information and the base station have a one-to-one corresponding relationship, only the target base station corresponding to the identification information included in the feedback information is identified. In some embodiments, each base station may identify whether the base station is selected as the target base station based on the identification information included in the third 8 bytes of the packet form feedback information. When it is determined that the base station has not been selected as the target base station, no further operation is performed. When it is determined that the base station has been selected as the target base station, step S1140' may be subsequently executed.

In step S1140', the base station that is selected as the target base station may transmit a charging wave in a charging direction. In some embodiments, the charging direction may be determined in a manner described in the above embodiments.

As the autonomous mobile device 110 moves, the selection of the target base station may change. For example, the base station currently performing the charging may not be the base station that is closest to the autonomous mobile device 110, or an obstacle may appear between the base station currently performing the charging and the autonomous mobile device 110, and therefore it may be needed to select a new base station as the target base station. In some embodiments, each base station may constantly transmit a directional signal, and the autonomous mobile device 110 may constantly receive the directional signal, and constantly update the distance between the autonomous mobile device and each base station, and update the selection of the target base station and corresponding identification information based on the obstacle information. Then the autonomous mobile device 110 may constantly transmit the feedback information that includes updated identification information through the wireless network 130. Each base station may constantly receive the feedback information and perform self-identification. When a base station currently not performing the charging determines, based on the updated identification information, that it has been selected as the target base station, it may start transmitting the charging wave as described in the above embodiment. When a base station currently performing the charging determines, based on the updated identification information, that it no longer is the target base station, then it may stop transmitting the charging wave.

As such, for example, it may be ensured that the charging of the autonomous mobile device is performed by a base station that is closest to the autonomous mobile device where no obstacle exists between the base station and the autonomous mobile device, thereby further increasing the safety and efficiency of the charging.

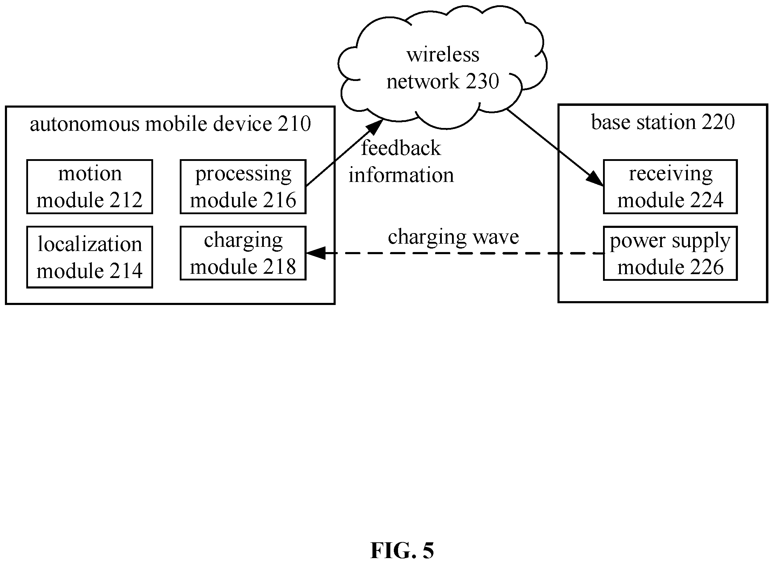

FIG. 5 is a schematic illustration of a charging control system according to an illustrative embodiment. The system may include an autonomous mobile device 210 and a base station 220, where, the autonomous mobile device 210 may be a cleaning robot or a mobile robot that performs other working tasks (e.g., patrolling, logistics carrying, following, etc.), which carries a rechargeable battery. The base station 220 may be a device operating in collaboration with the autonomous mobile device 210 and performing charging of the autonomous mobile device 210. The autonomous mobile device 210 and the base station 220 may communicate through a wireless network 230, and the wireless network 230 may be any wireless communication network (e.g., Wifi, Bluetooth, Zigbee, etc.) configured for data transmission. The base station 220 may include a receiving module 224 configured to receive, through the wireless network 30, feedback information transmitted by the autonomous mobile device 210, and a power supply module 226 configured to transmit the charging wave in the charging direction. The autonomous mobile device 210 may include a motion module 212 configured to move the autonomous mobile device, a localization module 214 configured to obtain real time direction and/or location information, a processing module 216 configured to transmit the feedback information to the base station 220 through the wireless network 230, and a charging module 218 configured to receive the charging wave transmitted by the base station 220 and perform charging.

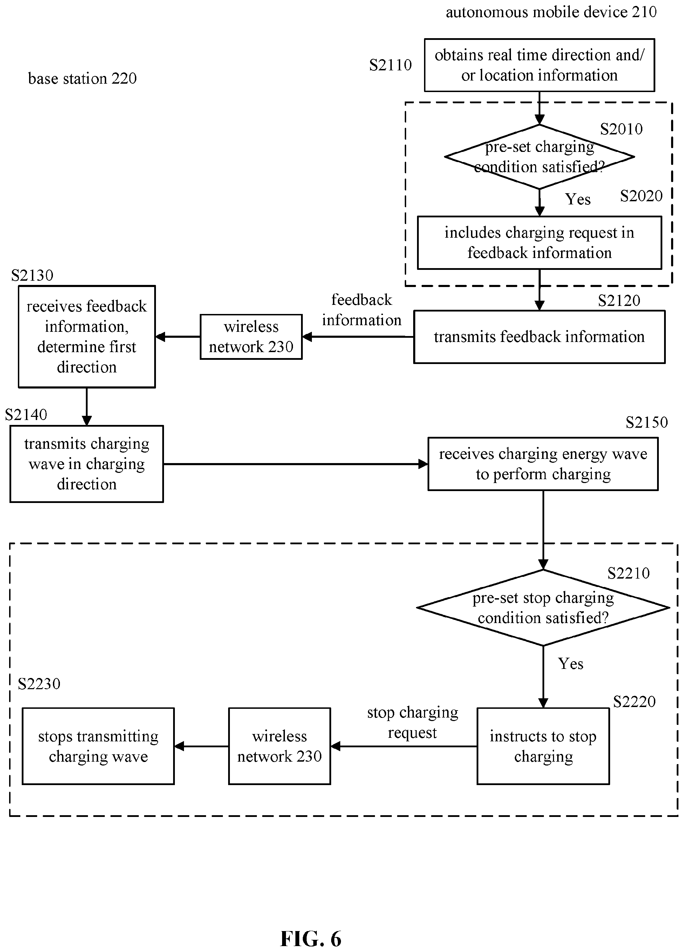

FIG. 6 is a flowchart showing a charging control method according to an illustrative embodiment. Referring to FIG. 6, the charging control method of the present disclosure may also include the following steps.

In step S2110, the localization module 214 of the autonomous mobile device 210 may obtain real time direction and/or location information of the autonomous mobile device 210.

In some embodiments, the autonomous mobile device typically moves autonomously in a limited space. For example, robotic cleaning devices, companion type mobile robots typically move in an indoor space, service type mobile robots typically move in a specific limited space such as hotels, meeting places, etc. The autonomous mobile device 210 may obtain locations of objects in the surrounding environment (e.g., walls, furniture and other objects in the limited space) through sensors (e.g., a collision sensor, a distance measuring sensor, etc.), thereby creating an environmental map of the space in which it moves. For example, a Lidar device may be used to obtain, through direct distance measurement, a distance between the autonomous mobile device and an object in the environment, and the distance may be transformed into a coordinate location in the coordinate system created by the autonomous mobile device, or the coordinate location of the object in the environment may be obtained through an encoder wheel of the autonomous mobile device, an Inertial Measurement Unit (IMU) of the autonomous mobile device and a collision sensor of the autonomous mobile device via collision, or the coordinate location of the object in the environment may be determined based on features extracted from images of the object in the environment captured by an ordinary camera, in combination with motion data of dead reckoning sensors such as the encoder wheel and IMU, through a visual simultaneous localization and mapping (vSLAM) algorithm, thereby creating the environmental map.

In some embodiments, a light reflecting pillar may be configured in the environment in which the autonomous mobile device 210 operates to assist the autonomous mobile device 210 to determine the location of itself. After a detecting beam transmitted by a distance measuring sensor of the autonomous mobile device 210 itself is reflected by the light reflecting pillar disposed at a specific location in the limited space is received by a receiver of the autonomous mobile device 210, the autonomous mobile device 210 may determine its real time direction and/or location information based on the reflected detecting beam. For example, when the autonomous mobile device is an AGV forklift, when it moves in a limited space of a warehouse, a logistics system, the above light reflecting pillar may be used to assist the autonomous mobile device in self-localization.

It should be understood that, in the present disclosure, the above-described manner is used as an example to describe how the autonomous mobile device 210 obtains real time direction and/or location information. However, the manner in which the autonomous mobile device 210 obtains the real time direction and/or location information is not limited to the described manner. The autonomous mobile device 210 may use other suitable manner to obtain the real time direction and/or location information, which is not described herein due to the limit of the space.

In step S2120, the autonomous mobile device 210 may transmit to the base station 220, through the wireless network 230, feedback information that includes the real time direction and/or location information and a charging request.

FIG. 6 also illustrates a flowchart showing determination of a charging request according to an illustrative embodiment. In this embodiment, in step S2010, the autonomous mobile device 210 may determine whether currently a pre-set charging condition is satisfied, where, the pre-set charging condition includes at least one of the following conditions: a remaining electric power of the autonomous mobile device is equal to or smaller than a first electric power threshold, a moving mileage of the autonomous mobile device is equal to or greater than a mileage threshold, a moving time period of the autonomous mobile device is equal to or greater than a time period threshold, a coverage area of a work zone covered by the autonomous mobile device is equal to or greater than an area threshold; and a ratio between the coverage area of the work zone covered by the autonomous mobile device and an area of the work zone is equal to or greater than a ratio threshold. For example, the first electric power threshold may be 20%, the autonomous mobile device 210 may determine that the pre-set charging condition is satisfied when the remaining electric power is equal to or smaller than 20%. For example, the mileage threshold may be 1000 meters, the autonomous mobile device 210 may determine that the pre-set charging condition is satisfied when the moving mileage since the completion of last charging is equal to or greater than 1000 meters. For example, the time period threshold may be 1 hour, the autonomous mobile device 210 may determine that the pre-set charging condition is satisfied when the moving time period since the completion of last charging is equal to or greater than 1 hour. For example, the area threshold may be 40 m², the autonomous mobile device 210 may determine that the pre-set charging condition is satisfied when the coverage area of the work zone already covered since the completion of last charging is equal to or greater than 40 m². For example, the ratio threshold may be 50%, the autonomous mobile device 210 may determine that the pre-set charging condition is satisfied when the ratio between the coverage area of the work zone already covered since the completion of last charging and the total area of the work zone is equal to or greater than 50%. The above pre-set charging conditions may be used individually, or multiple pre-set charging conditions may be used in combination.

When it is determined in step S2010 that the pre-set charging condition is not satisfied, the determination may continue.

When it is determined in step S2010 that the pre-set charging condition is satisfied, then in step S2020, the autonomous mobile device 210 may include the charging request in the feedback information, and execute step S2120.

In the above embodiment, a determination is realized as to whether charging of the autonomous mobile device needs to be started, and only when it is determined that the charging is needed, the feedback information that includes the charging request is transmitted, and subsequent steps are performed; as such, compared to a scenario in which the base station 220 transmits the charging wave to the autonomous mobile device 210 regardless of whether charging is needed, in this embodiment, requesting the base station 220 to perform charging is executed only when the charging is needed (a charging request is transmitted to the base station 220 only when the charging is needed), and no request for charging is transmitted to the base station 220 when the charging is not needed. As such, the base station 220 which does not receive the charging request would not transmit the charging wave to the autonomous mobile device 210. Therefore, energy can be saved, and in the meantime, safety risk caused by ineffective electromagnetic radiation generated by the base station to the external environment can be reduced.

After the completion of execution of step S2120, the following step S2130 may be executed.

In step S2130, the receiving module 224 of the base station 220 may receive the feedback information transmitted by the autonomous mobile device 210 through the wireless network 230, where, a first direction of the autonomous mobile device relative to the base station may be determined based on real time direction and/or location information of the autonomous mobile device carried by the feedback information.

In some embodiments, the autonomous mobile device 210 may have a localization capability. The processing module 216 may determine the coordinate location of the autonomous mobile device 210 in the created environmental map, and calculate a direction of the autonomous mobile device 210 relative to the base station 220 based on the coordinate location of the base station 220. Therefore, the real time direction and/or location information of the autonomous mobile device 210 relative to the base station 220 may be included in the feedback information. For example, in the environmental map, the autonomous mobile device typically starts up and begins execution of tasks at the location of the base station. Therefore, the coordinate location of the base station 220 in the environmental map created by the autonomous mobile device 210 is the coordinate origin of the global coordinate system, i.e., x=0, y=0. When the base station 220 receives the feedback information that includes the real time direction and/or location information of the autonomous mobile device 210, the first direction of the autonomous mobile device 210 relative to the base station 220 may be determined based on the coordinate location of the autonomous mobile device 210 and the coordinate location of the base station 220. For example, when the coordinate location of the base station 220 is the coordinate origin, the coordinate location of the autonomous mobile device 210 itself is the relative location and relative direction of the autonomous mobile device 210 relative to the base station 220, and the current relative direction, i.e., the first direction, of the autonomous mobile device 210 relative to the base station 220 may be calculated based on the coordinate location of the autonomous mobile device 210.

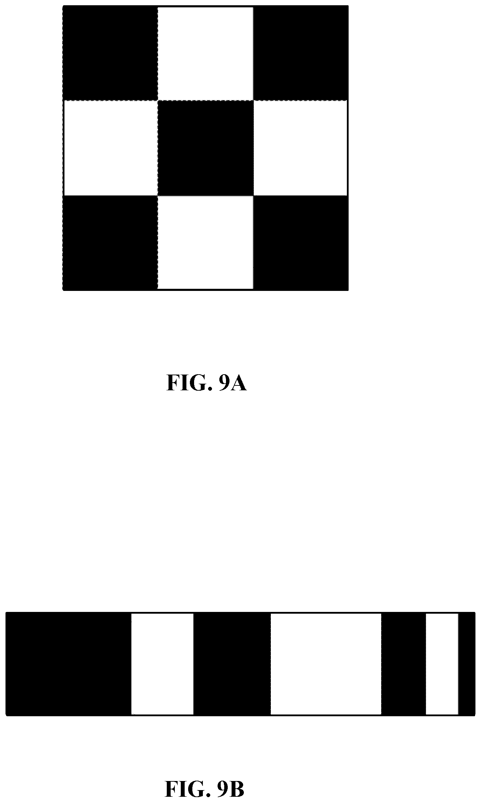

In some embodiments, the autonomous mobile device 210 may detect, through a Lidar device or a camera, a specific identification feature provided on the base station 220; determine a location of the base station 220 based on the identified identification feature, determine a direction of the autonomous mobile device 210 relative to the base station 220 based on the location of the base station 220 and the location of the autonomous mobile device 210, and using the determined direction as the real time direction and/or location information, which is included in the feedback information. The base station 220 may calculate the first direction, i.e., the charging direction, of the autonomous mobile device relative to the base station based on the received real time direction and/or location information. For example, the camera of the autonomous mobile device 210 may capture an image that includes the identification feature of the base station (e.g., a bright-dark alternatingly arranged chess board provided on a side wall of the base station 220 and is on a two-dimensional plane that is perpendicular to the floor, as shown in FIG. 9A; or bright-dark alternatingly arranged geometric patterns that are provided on a side wall of the base station 220 and that are horizontally arranged in parallel with the floor, as shown in FIG. 9B), the processing module 216 may perform image processing on the image and compare the processed image with sample patterns stored therein. A location and a direction of the camera relative to the identification feature (i.e., the base station) at a time instance when the image is captured may be derived based on the comparison between the patterns in the captured image and the sample patterns, thereby determining the direction and location of the autonomous mobile device relative to the base station. Of course, the Lidar device on the autonomous mobile device may be used to identify the identification feature on the base station and determine the direction and/or location of the autonomous mobile device relative to the base station. The present disclosure does not limit the manner in which the first direction is determined based on the real time direction and/or location information.

In step S2140, the base station 220 may transmit, through the power supply module 226, a charging wave that is configured for charging the autonomous mobile device 210 in the charging direction that is determined based on the first direction.

In some embodiments, the charging direction is the first direction. In other embodiments, the charging direction may be a second direction of the autonomous mobile device 210 relative to the base station 220 at a time instance when an estimated time period tₑ has lapsed after the autonomous mobile device transmits the feedback information, where, the estimated time period tₑ is a time period from a time instance when the autonomous mobile device 210 transmits the feedback information to a time instance when the base station 220 transmits the charging wave. For example, the autonomous mobile device 210 may transmit the feedback information to the base station 220 through the wireless network 230 at a time instance t₁, and may continue moving after transmitting the feedback information. The first direction determined based on time information, angle information included in the feedback information, and/or direction/location information of the autonomous mobile device, reflects a direction of the autonomous mobile device 210 relative to the base station 220 at the time instance t₁. However, if the base station 220 transmits the charging wave at a time instance t₂ that is after the time instance t₁, then because the autonomous mobile device 210 has moved for a distance within the estimated time period (tₑ = t₂ - t₁), the autonomous mobile device may miss the charging wave transmitted in the first direction. Therefore, to better aim the charging wave at the autonomous mobile device 210, it may be needed to determine the second direction of the autonomous mobile device 210 relative to the base station 220 after the estimated time period tₑ has lapsed, i.e., at the time instance t₂, and to adjust the charging direction based on the second direction.

In some embodiments, the estimated time period tₑ may adopt an empirical value. For example, the empirical value may be obtained based on time periods detected in multiple experiments from the time instance when the autonomous mobile device 210 transmits the feedback information to the time instance when the base station 220 transmits the charging wave. In other embodiments, the estimated time period tₑ may be calculated based on time consumed in various steps after the autonomous mobile device 210 transmits the feedback information. For example, the estimated time period tₑ may be obtained by adding up a time period t₀₁ theoretically calculated for the transmission of the feedback information from the autonomous mobile device 210 to the base station (for example, the calculation may be based on t₀₁ = l/c, l is approximately the distance from the autonomous mobile device to the base station, which may be obtained through calculation by the processing module 216 based on the relative locations of the autonomous mobile device and the base station; c is the speed of light), a time period t₀₂ for the base station to receive the feedback information and obtain the location of the autonomous mobile device (which may be calculated based on the latency of the software and hardware components or may be set based on empirical values), a time period for the base station to notify the power supply module, a time period for the charging wave transmitted by the power supply module of the base station to arrive at the autonomous mobile device (omitting the displacement of the autonomous mobile device occurring within such a short time period, then this time period is approximately equal to t₀₁). The present disclosure does not limit the calculation methods of the estimated time period.

In an embodiment, a possible second direction of the autonomous mobile device relative to the base station after the estimated time period may be calculated based on a typical moving velocity v of the autonomous mobile device recorded by the processing module 216, or a moving velocity v of the autonomous mobile device calculated by the processing module 216 based on the direction/location information of the autonomous mobile device included in the feedback information, and based on the above estimated time period tₑ. Because the autonomous mobile device is a plane-moving device that moves on a floor, locations that can be possibly reached within the estimated time period are only within a very small selection range, i.e., a zone in which the autonomous mobile device may possibly exist, which can be determined as follows: using the base station 220 as a center, a virtual connection from the base station to the autonomous mobile device in the first direction of the autonomous mobile device at the time instance t₀₁ when the feedback information is transmitted from the autonomous mobile device 210 as a radius, drawing an arc having a length of v × tₑ on both the left and right sides from the coordinate location of the autonomous mobile device at the time instance t₀₁, the sector-shaped areas represented by the arcs and the corresponding radii on both the left and right sides from the zone. For example, a charging wave may be transmitted toward an inside of this zone, or charging waves may be transmitted in different angles pointing to an inside of this zone. After the charging wave is received by the autonomous mobile device in a certain direction inside this zone (this direction is the second direction), the autonomous mobile device notifies, through the feedback information, the base station that the autonomous mobile device receives the charging wave in the second direction. As such, the base station may realize charging of the autonomous mobile device. In the subsequent movements of the autonomous mobile device, a zone in which the autonomous mobile device can possibly exist may continue to be calculated based on the above formula v × tₑ, and charging waves may be transmitted toward an inside of this zone. Long distance wireless charging of the autonomous mobile device in motion may be realized through the base station transmitting the charging wave and through the feedback information transmitted by the autonomous mobile device that indicates whether the charging wave is received.

Through the above embodiment, the second direction of the autonomous mobile device relative to the base station after the estimated time period may be obtained, and the charging direction may be adjusted based on the second direction. As such, for example, it may be ensured that the direction of the charging wave faces the autonomous mobile device, thereby increasing the success rate and efficiency of the charging; and real time charging of the autonomous mobile device that is in motion may be realized. Of course, when the charging wave has a shape of a cone that includes a transmitting point as a vertex, and its expansion area is sufficiently large in a reasonable distance range (e.g., 3 meters to 5 meters) from the autonomous mobile device to the base station, such that a bottom side of the cone at this place has a sufficiently large diameter (e.g., greater than or equal to 0.5 meters), a rough calculation may be carried out based on the moving velocity of the autonomous mobile device being 25 cm/s and the estimated time period tₑ being 1s, then the autonomous mobile device moves in the plane for at most 25 cm within the estimated time period tₑ of 1s. Then the charging wave transmitted by the base station in the first direction of the autonomous mobile device at the time instance t₀₁ when the feedback information is transmitted from the autonomous mobile device 10, can still be received by the autonomous mobile device at the time instance t₀₂ that is after the estimated time period tₑ. At this moment, it may not be necessary to calculate the second direction, i.e., the charging wave transmitted by base station directly in the first direction may charge the autonomous mobile device.

In some embodiments, the feedback information of the autonomous mobile device may also include charging power information; for example, the charging module of the base station may transmit a charging wave/tentative charging wave toward an inside of a zone in which the autonomous mobile device may possibly exist, or may transmit the charging wave/tentative charging wave in different angles toward an inside of the zone (the power of the tentative charging wave is smaller than that of the charging wave for normal charging of the autonomous mobile device, for example, only 1% of the power of the normal charging wave, the tentative charging wave may be configured as a precursor of the charging wave for normal charging, and configured for detecting whether the charging wave can be received by the autonomous mobile device). At the base station, the charging efficiency may be calculated based on the transmitting power recorded in the base station and the charging power information included in the feedback information. The charging efficiency is a ratio between the charging power of the autonomous mobile device and the transmitting power of the base station transmitting the charging wave (charging efficiency = charging power ÷ transmitting power × 100%). In some embodiments, the charging direction may be examined based on the charging efficiency, so as to determine whether the charging direction is accurate. For example, when the charging efficiency is within a reasonable range (e.g., the charging efficiency is greater than or equal to 60%), then it may be determined that the autonomous mobile device has been charged. Then the charging wave may continue to be transmitted in the first direction, in the second direction derived based on the first direction and/or possible zones surrounding the first direction; otherwise, it may be determined that the charging wave has not been received by the autonomous mobile device, and it may be needed to stop transmitting the charging wave or to change the transmitting direction of the charging wave.

In some embodiments, a determination may be made as to whether the charging direction is accurate based on the charging efficiency, and the charging direction may be adjusted based on a comparison between the charging efficiency and a charging efficiency threshold. For example, a charging wave may be transmitted toward a zone located in the first direction. After the base station receives the charging efficiency information included in the feedback information transmitted from the autonomous mobile device, and determines, through calculation based on the charging efficiency information, that the charging efficiency of the autonomous mobile device is smaller than the charging efficiency threshold (including the scenario in which the autonomous mobile device does not receive the charging wave so that the charging efficiency is approximately zero), then the base station may adjust the charging direction based on the second direction. For example, the base station may transmit the charging wave in the second direction after the estimated time period and/or toward a possible zone surrounding the second direction, and may re-calculate the charging efficiency after the estimated time period. When the current charging efficiency at the moment is within a reasonable range (e.g., the current charging efficiency at the moment is already greater than or equal to the charging efficiency threshold), then the determination of the second direction is correct, and the next second direction may continue to be determined in the same manner; otherwise it may be needed to stop transmitting the charging wave or change the determination manner of the second direction.

During the movement of the autonomous mobile device, the charging wave may be transmitted in the possible first direction or the second direction of the autonomous mobile device based on the above method, and through constant detection of the charging efficiency, a determination of whether the charging wave is received by the autonomous mobile device may be made in real time, thereby realizing long distance wireless charging of the autonomous mobile device in motion.

After the completion of execution of step S2140, the following step S2150 may be subsequently executed.

In step S2150, in response to the base station 220 transmitting the charging wave in the charging direction, the charging module 218 of the autonomous mobile device 210 may receive the charging wave transmitted from the base station 220 to perform charging, where, the charging module 218 may transform the energy carried by the charging wave into electric energy. For example, the charging wave may be a microwave or other high-energy electromagnetic wave. Transformation into the electric energy may be realized through electromagnetic induction by an electromagnetic coil provided on the autonomous mobile device.

After the autonomous mobile device 210 already starts receiving the charging wave to perform charging, a determination relating to the pre-set stop charging condition may be made and charging may be stopped when the pre-set stop charging condition is satisfied.

FIG. 6 is a flowchart showing stop charging operations of the charging control method according to an illustrative embodiment. In step S2210, a determination may be made as to whether the pre-set stop charging condition is satisfied. In some embodiments, the pre-set stop charging condition may include at least one of the following conditions: a current electric power of the autonomous mobile device is equal to or greater than a second electric power threshold, a distance between the autonomous mobile device and the base station is equal to or greater than a distance threshold, the distance between the autonomous mobile device and the base station is greater than distances between the autonomous mobile device and other base stations, and an obstacle exists between the autonomous mobile device and the base station. For example, the second electric power threshold may be 90%, the pre-set stop charging condition may be determined to be satisfied when the current electric power of the autonomous mobile device 210 is equal to or greater than 90%; of course the second electric threshold may be set as 100%, the pre-set stop charging condition may be determined to be satisfied when the current electric power of the autonomous mobile device 210 is equal to 100%. For example, the distance threshold may be 5 meters, the pre-set stop charging condition may be determined to be satisfied when the distance between the autonomous mobile device 210 and the base station 220 that is currently transmitting the charging wave is equal to or greater than 5 meters. For example, in the scenario in which multiple base stations are available to charge the autonomous mobile device 210, when the distance between the autonomous mobile device 210 and the base station 220 that is currently transmitting the charging wave is greater than a distance between the autonomous mobile device 210 and another base station 220', it may be determined that the pre-set stop charging condition relating to the base station 220 is satisfied. At this moment, the charging of the autonomous mobile device may be performed by the base station 220' that is closer to the autonomous mobile device 210. For example, when it is detected that an obstacle such as a living organism or a metal object exists between the autonomous mobile device 210 and the base station 220 that is currently transmitting the charging wave, it may be determined that the pre-set stop charging condition is satisfied. In some embodiments, the pre-set stop charging condition may also include the charging efficiency of the autonomous mobile device 210 being equal to or smaller than a charging efficiency threshold (e.g., 60%). Specifically, in some embodiments, when the charging efficiency is equal to or smaller than the charging efficiency threshold, it may be determined that the pre-set stop charging condition is satisfied, and relevant actions may be executed, such as transmitting a stop charging request to the base station to request the base station to stop charging the autonomous mobile device. In other embodiments, a number of charging failures may be used as a pre-set stop charging condition. When the charging efficiency is equal to or smaller than the charging efficiency threshold, it may be determined that a charging failure occurred, and a number of charging failures may be counted; when the counted number of charging failures is greater than or equal to a count threshold (e.g., 5 times), it may be determined that the pre-set stop charging condition is satisfied, and relevant actions may be executed. The above pre-set stop charging conditions may be used individually, or multiple pre-set stop charging conditions may be used in combination.

In some embodiments, an optical detector (not shown in FIG. 5) provided on the autonomous mobile device 210 may be used to transmit a detecting signal to the base station. The optical detector may be, for example, a Lidar device, which may be a motor-driven 360° rotating-and-scanning mechanical type Lidar device (e.g., constantly rotating and scanning at a frequency of 6 Hz, i.e., 6 rounds/second), or a solid state Lidar device that transmits multiple detecting signals in various directions simultaneously or that transmits the detecting signal toward a sector-shaped zone in a pre-set angle range. The base station 220 may be provided with a receiver (not shown in FIG. 5) configured to receive the detecting signal. When the receiver of the base station 220 receives the detecting signal, it indicates that there is no obstacle between the autonomous mobile device 210 and the base station 220. When the receiver of the base station 220 does not receive the detecting signal, it indicates that there is an obstacle between the autonomous mobile device 210 and the base station 220, or that the distance between the autonomous mobile device 210 and the base station 220 is too large such that the detecting signal decays to a level that is not receivable by the receiver. In other embodiments, the base station may calculate the distance between the autonomous mobile device and the base station based on the received detecting signal transmitted by the autonomous mobile device 210.

In some embodiments, an optical detector (e.g., a Lidar device or a camera) provided on the autonomous mobile device 210 may be used to detect an identification feature provided on the base station 220. For example, when the optical detector can detect the identification feature, it may indicate that there is no obstacle between the autonomous mobile device 210 and the base station 220, therefore the charging wave transmitted by the base station toward the location/direction of the autonomous mobile device would not be blocked by an obstacle. When the optical detector does not detect the identification feature, it may indicate that there is an obstacle between the autonomous mobile device 210 and the base station 220, or the identification feature does not straightly face the optical detector of the autonomous mobile device. At this moment, to avoid safety issues, for security, the base station may not transmit the charging wave toward the location/direction of the autonomous mobile device.

In some embodiments, when the autonomous mobile device 210 creates the environmental map, the autonomous mobile device may mark the obstacles in the environmental map. Therefore the determination of whether there is an obstacle between the autonomous mobile device 210 and the base station 220 may be made based on the locations of the base station and the autonomous mobile device in the environmental map; under this circumstance, it may not need to use the optical detector to identify the identification feature on the base station in order to detect whether there exists an obstacle between the autonomous mobile device and the base station, as described in the above embodiment. The present disclosure does not limit the specific manner for determining whether there exists an obstacle between the autonomous mobile device and the base station.

When it is determined in step S2210 that the pre-set stop charging condition is not satisfied, charging may be continued. When it is determined in step S2210 that the pre-set stop charging condition is satisfied, the following step S2220 may be executed.

In step S2220, the autonomous mobile device 210 may instruct the base station 220 to stop charging the autonomous mobile device 210.

In step S2230, the base station 220 may stop transmitting the charging wave in response to receiving the instruction from the autonomous mobile device 210 through the wireless network 30, thereby stopping charging the autonomous mobile device.

In some embodiments, the feedback information transmitted by the autonomous mobile device 210 to the base station 220 through the wireless network 230 may include a stop charging request configured to request the base station 220 to stop charging the autonomous mobile device 210. This stop charging request is configured to instruct the base station to stop transmitting the charging wave. The base station 220 may stop transmitting the charging wave in response to receiving the stop charging request, thereby no longer charging the autonomous mobile device.

Through the above embodiment, charging of the autonomous mobile device by the base station may be stopped under suitable conditions. As such, for example, the safety and/or energy-saving capability of the charging can be enhanced.

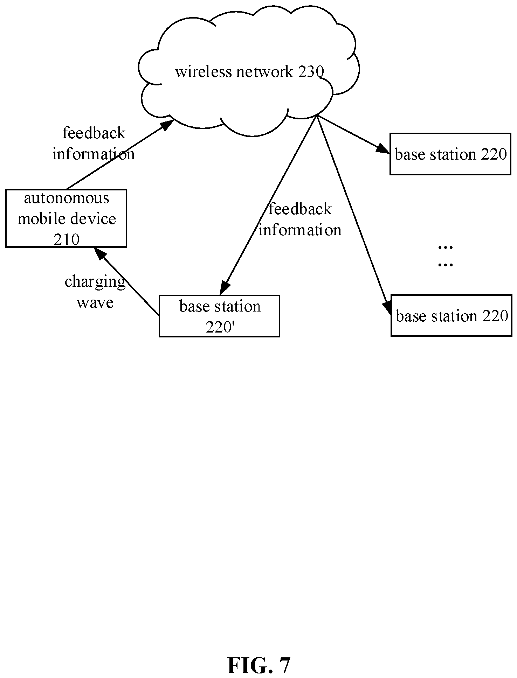

In some embodiments, there may exist multiple base stations that can charge the autonomous mobile device 210, and each base station may include an identification number that uniquely corresponds to the base station. FIG. 7 is a schematic illustration of the autonomous mobile device and multiple charging base stations according to an illustrative embodiment. To increase charging efficiency and safety, it is desirable to use the base station 220', which is closest to the autonomous mobile device 210 and is not obscured by an obstacle from the autonomous mobile device 210, to charge the autonomous mobile device 210.

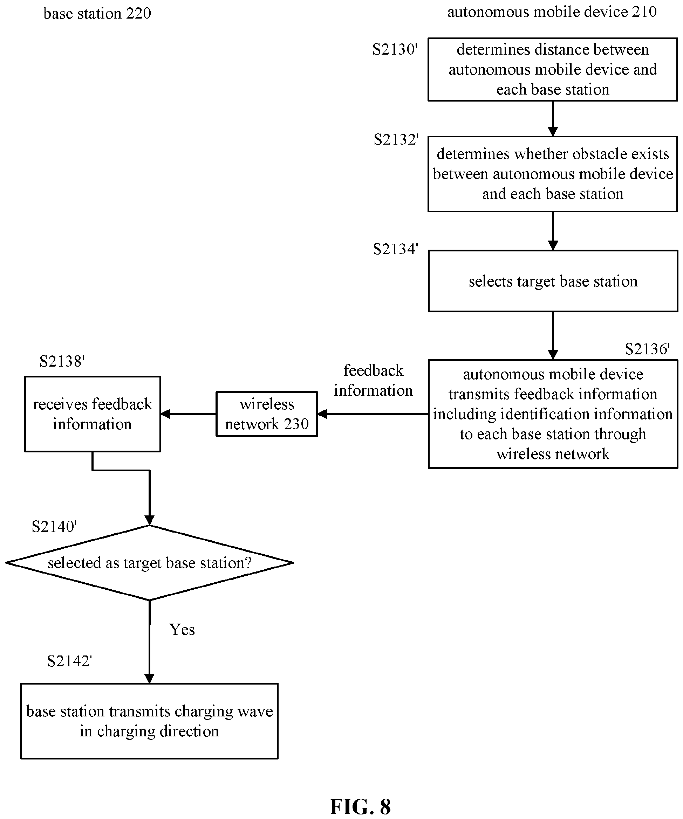

FIG. 8 is a flowchart showing charging operations when there are multiple charging base stations according to an illustrative embodiment.

In step S2130', a location of each base station of multiple base stations may be obtained in the created map, and a relative distance between each base station and the autonomous mobile device may be obtained based on the real time direction/location information of the autonomous mobile device and location information of each base station. In some embodiments, the distance may be a quantitative distance, that is, first, an absolute distance value between the autonomous mobile device and each base station is calculated based on the coordinate location of the autonomous mobile device and the coordinate location of each base station. Then multiple absolute distance values are compared to obtain the minimum absolute distance value, thereby determining the closest base station. In some other embodiments, the distance may be a qualitative distance, that is, only a relative far-or-close state between the autonomous mobile device 210 and each base station may be determined, and the specific distance value between the autonomous mobile device 210 and each base station need not be obtained.

In step S2132', a determination may be made as to whether there exists an obstacle between the autonomous mobile device and each base station. Specifically, the determination may be made through the above embodiment, but the specific manner is not limited. For example, when the autonomous mobile device 210 detects the identification feature of the base station 220 (e.g., the patterns shown in FIG. 9A and FIG. 9B), it may be determined that there is no obstacle between the autonomous mobile device 210 and the base station 220.

In step S2134', a target base station may be selected from multiple base stations for priority charging of the autonomous mobile device based on a respective relative distance between the autonomous mobile device 210 and each base station calculated based on a coordinate location of the autonomous mobile device 210 and a coordinate location of each base station, and based on whether there exists an obstacle between the autonomous mobile device 210 and each base station. Corresponding identification information for the self-identification of the target base station may be included in the feedback information. For example, a base station among base stations that are not obscured from the autonomous mobile device 210 by obstacles, which is closest to the autonomous mobile device 210, may be selected as the target base station, for priority charging of the autonomous mobile device 210. The processing module 216 may calculate a distance between the current location of the autonomous mobile device and each base station based on the current location of the autonomous mobile device in the environmental map and locations of multiple base stations in the environmental map, and determine whether there exists an obstacle between the current location of the autonomous mobile device and each base station, thereby determining and selecting the target base station that is not obscured from the current location of the autonomous mobile device by an obstacle and that is closest to the current location of the autonomous mobile device.

In step S2136', the autonomous mobile device 210 may transmit feedback information that includes the unique identification information of the target base station to each base station through the wireless network 230. In some embodiments, the feedback information may be in the form of a packet. For example, the feedback information may be a packet having a size of 128 bytes, where the first 8 bytes may be header check digits for determining the header of the packet itself, the second 8 bytes may include information of the autonomous mobile device, the third 8 bytes may include the identification information of the target base station, the remaining bytes may be check bits. Of course, some bytes may be set for special information. For example, multiple bytes at different selected locations may be used to indicate the real time direction and/or location information of the autonomous mobile device, and/or information of the first direction, and/or information of the second direction, and/or charging power information, and/or the stop charging request, and/or instruction information for instructing the base station whether or not to transmit the charging wave, and/or the identification information of the target base station, etc. The above are only illustrative. The present disclosure does not limit the specific form of the feedback information.

In step S2138', the multiple base station may respectively receive the feedback information through the wireless network 230.

In step S2140', each base station may perform self-identification based on the identification information included in the feedback information, to determine whether the base station is selected as the target base station. For example, each base station may determine whether the base station is selected as the target base station by determining whether the identification number of the base station matches the identification information. Because the identification number and the base station have a one-to-one corresponding relationship, only the base station having the identification number that corresponds to the identification information included in the feedback information is uniquely identified as the target base station. In some embodiments, each base station may determine whether the base station is selected as the target base station based on the identification information included in the third 8 bytes of the feedback information that is in the form of a packet. When it is determined that the base station is not selected as the target base station, no further operations are executed. When it is determined that the base station is selected as the target base station, step S2142' may be subsequently executed.

In step S2142', the base station that is selected as the target base station may transmit a charging wave in a charging direction. In some embodiments, the charging direction may be determined as described in the above embodiment.

As the autonomous mobile device 210 moves, the selection of the target base station may change. For example, the base station currently performing the charging may no longer be the base station that is closest to the autonomous mobile device 210, or an obstacle may appear between the base station currently performing the charging and the autonomous mobile device 210, and therefore it may be needed to select a new base station as the target base station. In some embodiments, the autonomous mobile device 210 may constantly obtain the distance between the autonomous mobile device and each base station and corresponding obstacle information, update the selection of the target base station, and transmit the feedback information that includes the updated identification information through the wireless network 230. Each base station may constantly receive the feedback information and perform self-identification. When a base station that is currently not performing the charging determines, based on the updated identification information, that it is selected as the target base station, it may start transmitting the charging wave according to the above embodiment. When the base station that is currently performing charging determines, based on the updated identification information, that it is no longer the target base station, it may stop transmitting the charging wave.

As such, for example, it may be ensured that the charging of the autonomous mobile device is performed by a base station that is closest to the autonomous mobile device and that is not obscured from the autonomous mobile device by an obstacle, thereby further increasing the safety and efficiency of the charging.

In some embodiments, the number of the target base stations may not be limited to 1, i.e., the number of the target base stations may be two or more than two. In the meantime, the target base station is a base station selected from the multiple base stations based on the principle that a relative distance between the target base station and the autonomous mobile device is smaller than relative distances between other base stations in the multiple base stations excluding the target base station and the autonomous mobile device. Therefore, the number of the target base stations is smaller than the total number of the base stations. As such, the number of target base stations may be two or more than two, but less than the total number of the base stations. In addition, a relative distance between each target base station and the autonomous mobile device is smaller than relative distances between the other base stations in the multiple base stations excluding the target base stations and the autonomous mobile device.

When there are multiple target base stations, charging of the autonomous mobile device may be performed by target base stations ranked in a pre-set priority order; or, the charging of the autonomous mobile device may be performed by a target base station that has the smallest relative distance to the autonomous mobile device; or, one target base station of the multiple target base stations may be set as a main target base station, and the remaining target base stations may be set as auxiliary target base stations. The main target base station may be used to charge the autonomous mobile device, and when the main target base station cannot charge the autonomous mobile device, a new main target base station may be selected from the remaining target base stations and the new main target base station may be used to charge the autonomous mobile device.

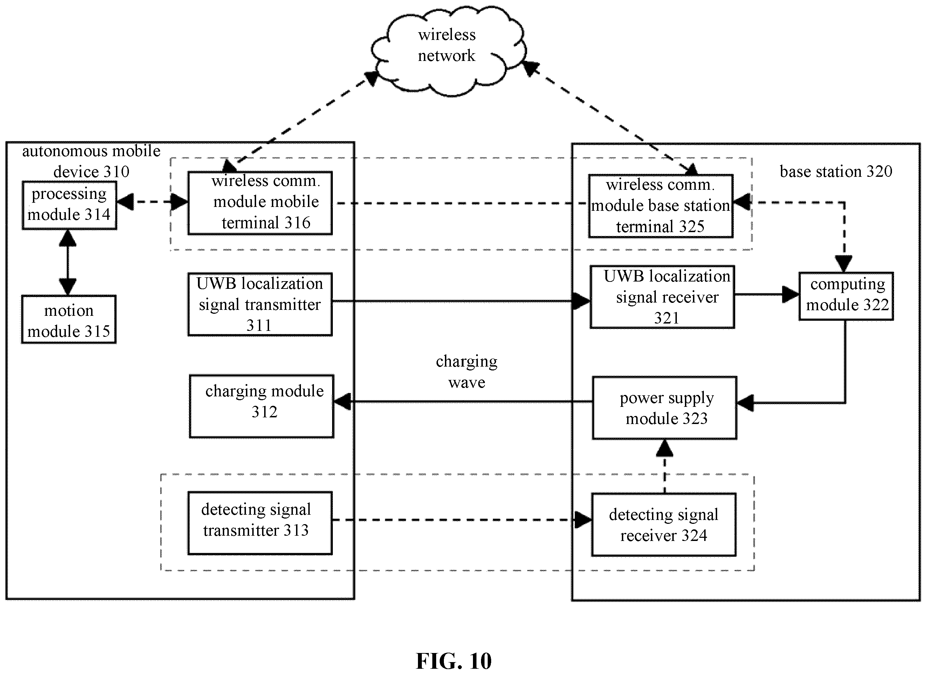

FIG. 10 is a schematic illustration of a charging control system according to an illustrative embodiment. The charging control system may include an autonomous mobile device 310 and a base station 320, where, the autonomous mobile device 310 may be a cleaning robot or a mobile robot executing other working tasks (e.g., patrolling, logistics carrying, following, etc.), which carries a rechargeable battery. The base station 320 may be a device configured to operate in collaboration with the autonomous mobile device 310 and to charge the autonomous mobile device 310.

As shown in FIG. 10, the autonomous mobile device 310 may include a UWB localization signal transmitter 311 configured to transmit an Ultra-Wide Band (UWB) localization signal (the UWB localization signal transmitter 311 is also referred to as a transmitting module); a charging module 312 configured to receive the charging wave transmitted by the base station 320; a motion module 315 configured to execute motions, for example, a wheel type motion module formed together by a wheel group including two driving wheels and a follower omnidirectional wheel, or a track type motion module formed by a track; and a processing module 314 configured to execute functions such as computation, determination, transmitting instructions, etc. Specifically, the processing module 314 may be configured to execute functions such as determination of whether the pre-set charging condition or the stop charging condition is satisfied, and performing numerical determination, etc. The instructions transmitted by the processing module 314 may be, for example, instructions for stopping charging, instructions for stopping transmitting the UWB localization signal, instructions for stopping transmitting a detecting signal, etc. The charging module 312 may include a receiving antenna and an energy storage unit (not shown in FIG. 10), where the receiving antenna may be configured to receive the charging wave transmitted by the base station 320, and the energy storage unit may be configured to store energy.

As shown in FIG. 10, the base station 320 may include a UWB localization signal receiver 321 configured to receive the UWB localization signal transmitted by the autonomous mobile device 310 (the UWB localization signal receiver 321 is also referred to as a receiving module); a power supply module 323 configured to transmit a charging wave to the autonomous mobile device 310 (the power supply module 23 is also referred to as a charging wave transmitting module); a computing module 322 configured to execute computations such as calculating time, coordinates, etc. Here, the power supply module 323 may include a control unit and a transmitting antenna (not shown in FIG. 10). The computing module 322 of the base station 320 may determine the location of the autonomous mobile device 310 based on the UWB localization signal. The transmitting direction of the charging wave (also referred to as the charging direction) may be determined based on the location of the autonomous mobile device 310. The transmitting antenna may be configured to transmit the charging wave in the charging direction.

In some embodiments, on the basis of the embodiments of the above basic composing elements, other modules represented by the lower dashed frame in FIG. 10 may be included. For example, the autonomous mobile device 310 may also include a detecting signal transmitter 313 configured to transmit a detecting signal; the base station 320 may also include a detecting signal receiver 324 configured to receive the detecting signal transmitted by the autonomous mobile device 310.

In some embodiments, on the basis of the embodiments of the above basic composing elements or on the basis of the expanded embodiments that additionally include the detecting signal transmitter 313 and the detecting signal receiver 324, the component represented by the upper dashed frame shown in FIG. 10 may also be included. For example, the autonomous mobile device 310 may also include a wireless communication module mobile terminal 316 and the base station 320 may also include a wireless communication module base station terminal 325. Here, the wireless communication module mobile terminal 316 and the wireless communication module base station terminal 325 may communicate through a wireless network. For example, the wireless communication module mobile terminal 316 may transmit various information and/or instructions of the processing module 314 to the wireless communication module base station terminal 325, the wireless communication module mobile terminal 316 may receive various information and/or instructions transmitted by the wireless communication module base station terminal 325. For example, the wireless communication module base station terminal 325 may transmit information and/or instructions to the wireless communication module mobile terminal 316, or the wireless communication module base station terminal 325 may receive the information and/or instructions transmitted by the wireless communication module mobile terminal 316. Here, the wireless network may be any wireless communication network configured for transmission of data, information and/or instructions, such as Wifi, Bluetooth, Zigbee, etc.

Illustratively, the communication between the wireless communication module base station terminal 325 and the wireless communication module mobile terminal 316 may be one-way communication, i.e., the wireless communication module base station terminal 25 may transmit various information and/or control instructions to the wireless communication module mobile terminal 316. The communication between the wireless communication module base station terminal 325 and the wireless communication module mobile terminal 316 may be two-way communication, which is not limited by the present disclosure.

It should be understood that, the power supply module 323 may transmit the charging wave in the charging direction, where the charging direction may be the direction/location (hereinafter referred to as the first direction) of the autonomous mobile device 310 when transmitting the UWB localization signal, which may be calculated based on the direction of the received UWB localization signal. Alternatively, on the basis of the direction/location of the autonomous mobile device 310 when transmitting the UWB localization signal that may be calculated based on the direction of the received UWB localization signal, the charging direction may be the estimated (approximated) direction/location (hereinafter referred to as the second direction) of the autonomous mobile device 310 at a next time instance (the time instance after the estimated time period tₑ has lapsed) subsequent to the time instance when the autonomous mobile device 310 transmits the UWB localization signal. The calculation of the first direction and/or the second direction is typically executed on the base station 320 (e.g., through the computing module 322 on the base station).

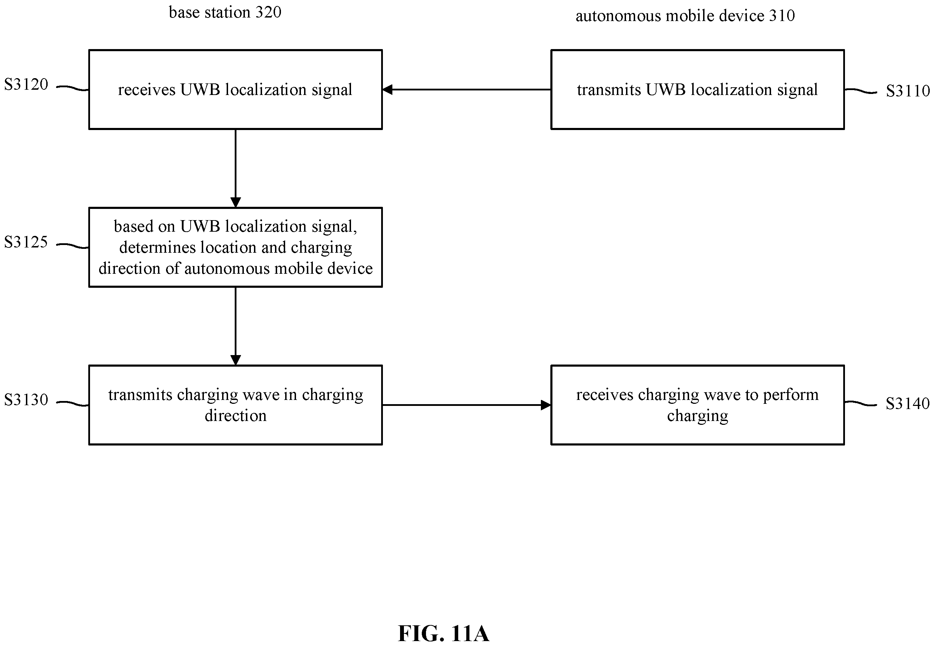

FIG. 11A is a flowchart showing a charging control method according to an illustrative embodiment. Referring to FIG. 11A, in the charging control method of the present disclosure, the autonomous mobile device 310 may execute the following steps.

In step S3110, the UWB localization signal transmitter 311 on the autonomous mobile device 310 may constantly transmit circumferential or directional UWB localization signals to the environment as the autonomous mobile device moves in the work zone. Based on the condition that the UWB localization signal transmitted by the autonomous mobile device 310 can be received by the base station 320, the base station 320 may determine the location of the autonomous mobile device 310. The circumferential UWB localization signal may be, for example, UWB localization signals transmitted simultaneously in 360° directions, or may be circumferentially scanning UWB localization signals that scan in 360° according to a predetermined frequency. The directional UWB localization signal may be, for example, UWB localization signals that are transmitted from a transmitting tube only within a certain small angle range by limiting the transmitting angles of the UWB localization signals through the transmitting tube, or may be UWB localization signals simultaneously transmitted within a certain range by limiting the circumferential UWB localization signals through a shielding apparatus to be within a certain relatively large angle range (e.g., 180°). The present disclosure does not limit the transmitting range and manner of the UWB localization signal.

After the completion of execution of step S3110, step S3120 may be subsequently executed.

In step S3120, the UWB localization signal receiver 321 on the base station 320 may receive the UWB localization signal transmitted from the autonomous mobile device 310. Typically, regardless of whether or not the UWB localization signal transmitter 311 on the autonomous mobile device 310 transmits the UWB localization signal to an external environment, as long as the base station 320 is provided with electric power, the UWB localization signal receiver 321 on the base station 320 is in a turned-on state, so as to detect the UWB localization signal at any time. Only when the UWB localization signal receiver 321 receives the UWB localization signal transmitted from the autonomous mobile device 310, the subsequent steps may continue to be executed.

In step S3125, after the UWB localization signal receiver 321 on the base station 320 receives the UWB localization signal transmitted from the autonomous mobile device 310, the computing module 322 of the base station 320 may determine the location of the autonomous mobile device 310 based on the UWB localization signal, and may determine the charging direction based on the location of the autonomous mobile device 310. Here, the charging direction may be the direction/location (i.e., the above-mentioned first direction) of the autonomous mobile device 310 when transmitting the UWB localization signal, which may be calculated based on the direction of the received UWB localization signal. Alternatively, on the basis of the direction/location of the autonomous mobile device 310 when transmitting the UWB localization signal that may be obtained through calculation based on the direction of the received UWB localization signal, the charging direction may be the estimated direction/location (i.e., the above-mentioned second direction) of the autonomous mobile device 310 at a next time instance after the estimated time period tₑ has lapsed. Then step S3130 may be executed.

Next, illustratively, step S3125 is described in detail.

In some embodiments, a localization tag disposed in the UWB localization signal transmitter 311 on the autonomous mobile device 310 may transmit a UWB localization signal, which may be received by multiple different antennae disposed on the UWB localization signal receiver 321 on the base station 320. The computing module 322 on the base station 320 may calculate a time difference in time instances when the multiple different antennae receive the UWB localization signal transmitted by the localization tag, and may calculate coordinates of the localization tag based on a TDOA: Time Difference of Arrival, that is, the coordinates of the autonomous mobile device 310, thereby obtaining the location of the autonomous mobile device 310.

Specifically, the number of different antennae disposed on the UWB localization signal receiver 321 of the base station 320 is at least 3, or may be 4 or more. When the number of antennae is 3, coordinates of the localization tag in a 2D plane space may be calculated. When the number of antennae is 4 or more, coordinates of the localization tag in a 3D stereoscopic space may be calculated. Because the autonomous mobile device 310 is normally a smart device moving in a two-dimensional plane, setting the number of antennae to be 3 is sufficient for calculating the two-dimensional coordinate location of the autonomous mobile device 310 in the plane. Of course, localization techniques such as Time of Flight (TOF), Time of Arrival (TOA), Angle of Arrival (AOA or referred to as DOA estimation) and a mixture of the above techniques may be used as a localization algorism for calculating the coordinate location of the localization tag. Techniques that use the UWB method for indoor localization have the following features: frequency range is 3.1 - 10.6 GHz, bandwidth is greater than 500 MHz; in time domain it is represented by a pulse having a very short time; excellent compatibility with other antenna devices; low energy consumption, low transmitting duty cycle; insensitive to Rayleigh decay; strong penetrating capability, high localization accuracy. Because the localization accuracy of the techniques that use UWB for indoor localization is high, it is suitable for precise localization of the autonomous mobile device 310.

After the location of the autonomous mobile device 310 is calculated, the computing module 322 of the base station 320 may set/adjust the charging direction based on the location of the autonomous mobile device 310 obtained through calculation (i.e., the coordinate location of the localization tag). In some embodiments, the computing module 322 of the base station 320 may directly use the location of the autonomous mobile device 310 as the charging direction. In other embodiments, after the base station 320 calculates the location of the autonomous mobile device 310, further in view of constant movement of the autonomous mobile device 310 in the work zone plane, i.e., the charging direction changes in real time within a certain range, the base station 320 may subsequently adjust the charging direction in real time to more efficiently charge the autonomous mobile device 310.

After the charging direction is determined, step S3130 may be executed.

In step S3130, the power supply module 323 of the base station 320 may transmit the charging wave in the charging direction, to charge the autonomous mobile device 310.

After the completion of execution of step S3130, step S3140 may be executed.

In step S3140, in response to the base station 320 transmitting the charging wave in the charging direction, the charging module 312 of the autonomous mobile device 310 may receive the charging wave transmitted by the base station 320 and perform charging, where, the charging module 12 can transform the energy carried by the charging wave into electric energy and store it in the rechargeable battery configured to provide electric power to the autonomous mobile device 310. For example, the charging wave may be a directionally transmitted microwave, a radio frequency, a laser or other high-energy electromagnetic wave. The charging module 312 on the autonomous mobile device 310 may receive the charging wave of a corresponding form and transform it into a direct current to charge the rechargeable battery of the autonomous mobile device 310. Illustratively, long distance wireless charging of the present disclosure may be realized using a magnetic resonance method. For example, two resonant electric circuits having the same resonant frequency (respectively referred to as a transmitting resonant electric circuit and a receiving resonant electric circuit) may be respectively provided on the power supply module 322 of the base station 320 and the charging module 312 of the autonomous mobile device 310. When it is needed to transmit the charging wave, the transmitting resonant circuit may be supplied with electric power such that it may oscillate, then an electric current may be generated in the receiving resonant circuit that has the same resonant frequency as the transmitting resonant circuit due to the magnetic resonance effect. Thus, electric current may be transmitted over the air, thereby realizing long distance wireless charging. Through the magnetic resonance method, long distance wireless charging of the autonomous mobile device that is located within a range of a few meters from the base station may be realized. Illustratively, a semiconductor amplifier may be disposed on the base station, and the semiconductor amplifier may generate a high-power infrared light, which may be used as the directionally transmitted charging wave, for charging the autonomous mobile device located within a range of a few meters or even a range of more than ten meters and less than twenty meters. In addition, because the infrared light used as the charging wave does not generate an electromagnetic wave itself, harm to human bodies caused by electromagnetic contamination can be avoided. The present disclosure does not limit the specific form of the charging wave.

Wireless charging devices currently widely used in the market (e.g., wireless charging performed by placing a cell phone on an electromagnetic coil of a charger) are mostly based on electromagnetic induction technologies. This type of wireless charging technology is only suitable for short distances (a separation distance between a receiving end and a transmitting end is only a few millimeters to a few centimeters), because this type of wireless charging technology not only requires the separation distance between the receiving end and the transmitting end to be very small, it also places a relatively high requirement on the disposition locations. Different from this type of short distance non-plug-in type wireless charging, the long distance wireless charging of the present disclosure is a spatial transmission type non-contact wireless charging, in which an energy transmitting unit and an energy receiving unit are respectively provided in the power supply module 322 of the base station 320 and the charging module 312 of the autonomous mobile device 310, which are relatively far apart. In this manner, the autonomous mobile device 310 may receive the charging wave transmitted by the power supply module 322 of the base station 320 within a relatively large range from the base station 320 (e.g., from 0.1 meters to 10 meters), thereby realizing free charging of the autonomous mobile device during movements in an indoor space.

The above embodiment uses the UWB localization signal to determine the relative location of the autonomous mobile device relative to the base station. Because the UWB localization has a high accuracy, and a long localization distance, compared to the existing technology in which the autonomous mobile device is charged only when the autonomous mobile device moves to the location of the base station and the charging contact point of the autonomous mobile device is aligned with the charging contact plate of the base station, in the present disclosure, the base station determines the location of the autonomous mobile device based on the UWB localization signal transmitted by the autonomous mobile device and determines the charging direction based on the location of the autonomous mobile device. Then the base station transmits the charging wave in the determined charging direction. The autonomous mobile device can receive the charging wave and use the received charging wave to perform charging. As such, long distance non-contact charging of the autonomous mobile device by the base station may be realized, and there is no need for the autonomous mobile device to move to the location of the base station and align the charging contact point of the autonomous mobile device with the charging contact plate of the base station.

Next, illustratively, the manner for determining the charging direction in step S3125 is described in further details.

In some embodiments, the charging direction may be the direction/location of the autonomous mobile device 310 when transmitting the UWB localization signal, which is determined based on the UWB localization signal, i.e., the charging direction is the first direction. In other embodiments, the charging direction may be the direction/location of the autonomous mobile device 310 at a next time instance after an estimated time period tₑ has lapsed since the autonomous mobile device transmits the UWB localization signal, i.e., the charging direction is the second direction, where, the estimated time period tₑ is a time period from a time instance when the autonomous mobile device 310 transmits the UWB localization signal to a time instance when the base station 320 transmits the charging wave. For example, the UWB localization signal transmitted by the autonomous mobile device 310 at a time instance t₁ may be received by the UWB localization signal receiver 321 of the base station 320 at a time instance t₂, and then be transmitted to the computing module 322 and the computing module 322 may calculate the direction/location of the autonomous mobile device 310 at the time instance t₁, and the time instance when the instructions are transmitted to the power supply module 323 is t₃. Considering that the time for the charging wave transmitted by the power supply module 323 to arrive at the autonomous mobile device 310 (approximately equal to (t₂-t₁)), then the time instance t₄ when the autonomous mobile device receives the charging wave is: t₄ = t₁ + (t₂ - t₁) × 2 + (t₃ - t₂) = t₁ + (t₂ - t₁) + (t₃ - t₁) = t₂ + t₃ - t₁. Then the estimated time period tₑ = t₄ - t₁ = t₂ + t₃ - 2 × t₁. Because the autonomous mobile device 310 may continue moving after transmitting the UWB localization signal, a moving range of the autonomous mobile device within the estimated time period tₑ may be calculated based on the moving velocity of the autonomous mobile device 310, thereby determining the direction/location of the autonomous mobile device at the time instance t₄ based on the direction/location of the autonomous mobile device 310 when transmitting the UWB localization signal, i.e., the second direction. The charging direction may be adjusted to the second direction, and the charging wave may be transmitted toward the current direction/location of the autonomous mobile device 310.

In some embodiments, the estimated time period tₑ may adopt an empirical value. For example, the empirical value of tₑ may be obtained based on time periods detected in multiple experiments from the time instance when the autonomous mobile device 310 transmits the UWB localization signal to the time instance when the base station 320 transmits the charging wave. In other embodiments, the estimated time period tₑ may be calculated based on time consumed in various steps after the autonomous mobile device 310 transmits the UWB localization signal. For example, the estimated time period tₑ may be obtained by adding up a time period t₀₁ theoretically calculated from a time instance when the autonomous mobile device 310 transmits the UWB localization signal to a time instance when the base station 320 receives the UWB localization signal (in the above embodiment, t₀₁ = t₂ - t₁; the calculation may be based on t₀₁ = l / c, where l is approximately the distance between the autonomous mobile device 310 and the base station 320, which may be estimated based on a typical indoor spatial distance, e.g., an average of 5 meters; c is the speed of light), a time period t₀₂ from a time instance when -the computing module 322 of the base station 320 calculates the direction/location of the autonomous mobile device 310 and transmits instructions to the power supply module 323, which are processed by the power supply module 323, to a time instance when the power supply module 323 transmits the charging wave in the charging direction (in the above embodiment, t₀₂ = t₃ - t₂; which may be calculated based on the latency of the software and hardware components or which may be set based on an empirical value), a time period for the charging wave transmitted by the power supply module 323 of the base station 320 to arrive at the autonomous mobile device 310 (omitting the displacement of the autonomous mobile device 310 in such a short time period, then this time period is approximately equal to t₀₁). The present disclosure does not limit the calculating methods of the estimated time period.

In some embodiments, the calculation of the second direction of the autonomous mobile device 310 that may possibly appear after the estimated time period tₑ is described as follows: a typical moving velocity v of the autonomous mobile device 310 may be pre-input into the computing module 322, or the computing module 322 may calculate the recent moving velocity v of the autonomous mobile device 310 based on the direction change and time difference of multiple times of receiving the UWB localization signals, and then may calculate the possible direction/location of the autonomous mobile device 310 based on the estimated time period tₑ. Because the autonomous mobile device 310 is a plane-moving device that moves on a floor, locations that it can possibly reach within the estimated time period tₑ are only within a very small selection range, i.e., a zone which may be determined as follows: using the base station as a center, a virtual connection from the base station to the autonomous mobile device in the first direction that the base station 320 faces as a radius, drawing an arc having a length of v × tₑ on both the left and right sides from the coordinate location of the autonomous mobile device, the sector-shaped areas represented by the arcs and corresponding radii on both the left and right sides form the zone in which the autonomous mobile device 310 may possibly exist. For example, a charging wave may be transmitted toward this zone or charging waves may be transmitted in different angles pointing to an inside of this zone. When the charging wave is received by the autonomous mobile device 310 in a certain direction within this zone (this direction is the actually detected second direction), then based on the method for calculating the charging efficiency, which is to be described below, it may be determined that the autonomous mobile device 310 receives the charging wave in the second direction, or the base station 320 may be notified by the autonomous mobile device 310 through the feedback information that the autonomous mobile device has received the charging wave in the second direction. In subsequent movements of the autonomous mobile device 310, a zone in which the autonomous mobile device 310 may possible exist may be continuously calculated for multiple times or may be calculated in real time based on the above formula v × tₑ, and the charging wave may be transmitted in a possible direction or multiple directions within this zone. The transmitting direction of the charging wave may be determined and adjusted in real time based on methods that are based on the charging efficiency or feedback information, thereby realizing long distance wireless charging of the autonomous mobile device 310 in motion.

Through the above embodiment, the second direction of the autonomous mobile device 310 relative to the base station 320 after an estimated time period has lapsed may be obtained, and the charging direction may be adjusted based on the second direction. As such, for example, it may be ensured that the direction of the charging wave faces the autonomous mobile device 310, thereby increasing the success rate and efficiency of the charging, and realizing real time charging of the autonomous mobile device 310 that is in motion.

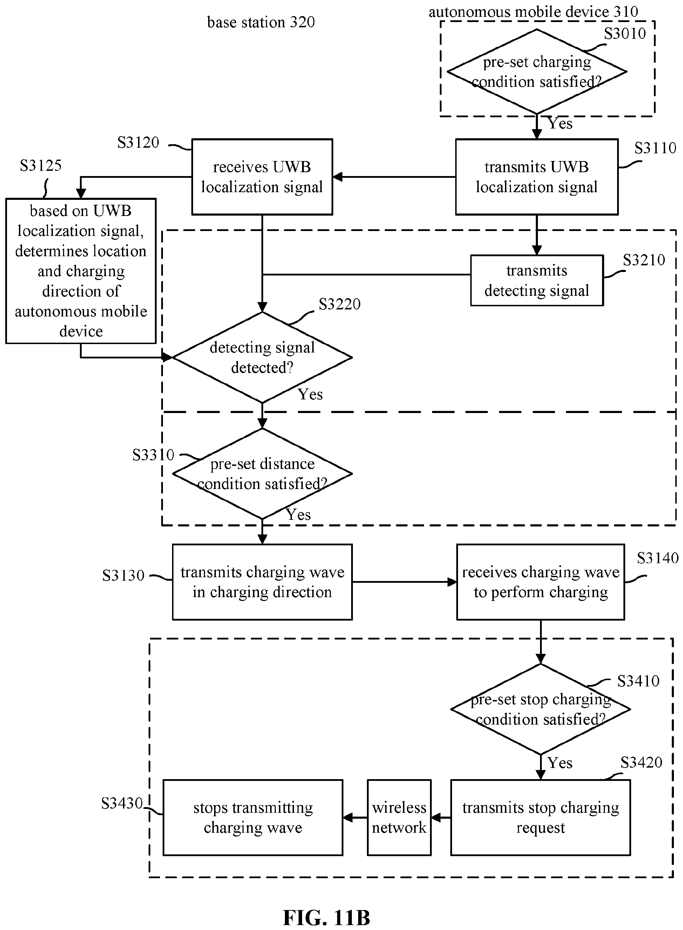

FIG. 11B is a flowchart showing a charging control method that includes a charging request operation according to an illustrative embodiment. In some embodiments, on the basis of the above embodiment of the charging control method, step S3010 may be executed before the autonomous mobile device 310 transmits the UWB localization signal in step S3110, in which the processing module 314 of the autonomous mobile device 310 may determine whether a pre-set charging condition is satisfied; step S3110 is executed only when it is determined that the pre-set charging condition is satisfied.

In some embodiments, the pre-set charging condition includes at least one of the following conditions: a remaining electric power of the autonomous mobile device 310 is smaller than or equal to a first electric power threshold; a moving mileage of the autonomous mobile device 310 is greater than or equal to a mileage threshold; a moving time period of the autonomous mobile device 310 is greater than or equal to a time period threshold; a coverage area of the work zone already covered by the autonomous mobile device 310 is greater than or equal to an area threshold; a ratio between the coverage area of the work zone already covered by the autonomous mobile device 310 and an area of the current work zone is greater than or equal to a ratio threshold. For example, the first electric power threshold may be 20%, the autonomous mobile device 310 may determine, through the processing module 314, that the pre-set charging condition is satisfied when the remaining electric power is smaller than or equal to 20%. For example, the mileage threshold may be 1000 meters, the autonomous mobile device 310 may determine, through the processing module 314, that the pre-set charging condition is satisfied when a moving mileage since the startup after the completion of last charging to moving to the current location is equal to or greater than 1000 meters. For example, the time period threshold may be 1 hour, the autonomous mobile device 310 may determine, through the processing module 314, that the pre-set charging condition is satisfied when a moving time period since the startup after the completion of last charging to moving to the current time instance is equal to or greater than 1 hour. For example, the area threshold may be 40 m² (square meters), the autonomous mobile device 310 may determine, through the processing module 314, that the pre-set charging condition is satisfied when a coverage area of the work zone already covered by the autonomous mobile device from the startup after the completion of last charging to moving to the current location is equal to or greater than 40 m². For example, the ratio threshold may be 50%, the autonomous mobile device 310 may determine, through the processing module 314, that the pre-set charging condition is satisfied when a ratio between a coverage area of the work zone already covered since the startup after completion of last charging to moving to the current location and the total area of the work zone is equal to or greater than 50%.

The above-described multiple pre-set charging conditions may be used individually, or the above-described multiple pre-set charging conditions may be used in combination. For example, the pre-set charging conditions that are configured in combination according to an order may be: condition (1) a ratio between a coverage area of the current work zone already covered by the autonomous mobile device 310 and the total area of the current work zone is greater than or equal to a ratio threshold, condition (2) the coverage area of the work zone already covered by the autonomous mobile device 310 is greater than or equal to an area threshold; then when the autonomous mobile device 310 has not created a complete map, the total area of the work zone is not known. Thus, the ratio between the coverage area and the total area of the current work zone cannot be obtained, and hence a determination as to whether charging should be performed through condition (1) cannot be made. At this moment a determination as to whether the coverage area of the work zone already covered by the autonomous mobile device 310 is greater than or equal to the area threshold may be made based on condition (2).

When it is determined in step S3010 that the pre-set charging condition is not satisfied, the determination of whether the pre-set charging condition is satisfied may continue; when it is determined in step S3010 that the pre-set charging condition is satisfied, then steps S3110, S3120, S3125, S3130 and S3140 may be subsequently executed, i.e., after determining that the pre-set charging condition is satisfied, the above embodiment may be carried out. Due to the limit of space, descriptions of steps S3110, S3120, S3125, S3130 and S3140 are not repeated.

Through the above embodiment, a determination may be made as to whether charging of the autonomous mobile device 310 needs to be performed (i.e., determining whether the pre-set charging condition is satisfied). Only when it is determined that there is a need to charge the autonomous mobile device 310, the autonomous mobile device 310 may execute step S3110 to transmit the UWB localization signal, and perform subsequent steps; when the autonomous mobile device 310 does not transmit the UWB localization signal, the base station 320 of course will not receive the UWB localization signal, and therefore, will not transmit the charging wave. Therefore, whether or not to transmit the charging wave by the base station 320 may be controlled based on whether or not to transmit the UWB localization signal by the autonomous mobile device 310. As such, compared to the scenario in which the autonomous mobile device 310 transmits the UWB localization signal regardless of whether there is a need to charge the autonomous mobile device 310, in the above embodiment, the autonomous mobile device 310 transmits the UWB localization signal only when there is a need to charge the autonomous mobile device 310. Therefore, transmission of the UWB localization signal by the autonomous mobile device 310 at unnecessary times may be avoided, thereby saving energy and reducing the electromagnetic radiation generated by the autonomous mobile device 310 to the external environment.

Typically, the UWB localization signal can circumvent many obstacles. Therefore, typically, it is not feasible to detect whether there exists an obstacle between the autonomous mobile device 310 and the base station 320 based on the UWB localization signal itself. On the other hand, when an obstacle exists between the base station 320 and the autonomous mobile device 310, the obstacle may block the charging wave transmitted by the base station 320, causing the normal charging of the autonomous mobile device 310 to fail. Meanwhile, if the obstacle is a metal, the metal may be charged and may heat up to cause a fire, if the obstacle is a living organism (e.g., a human being or an animal), the charging wave may cause harm to the living organism. Therefore, it is needed to avoid charging of the autonomous mobile device 310 when there is an obstacle between the base station 320 and the autonomous mobile device 310. Tus, there is a need for other methods of detecting whether there exists an obstacle between the base station and the autonomous mobile device.

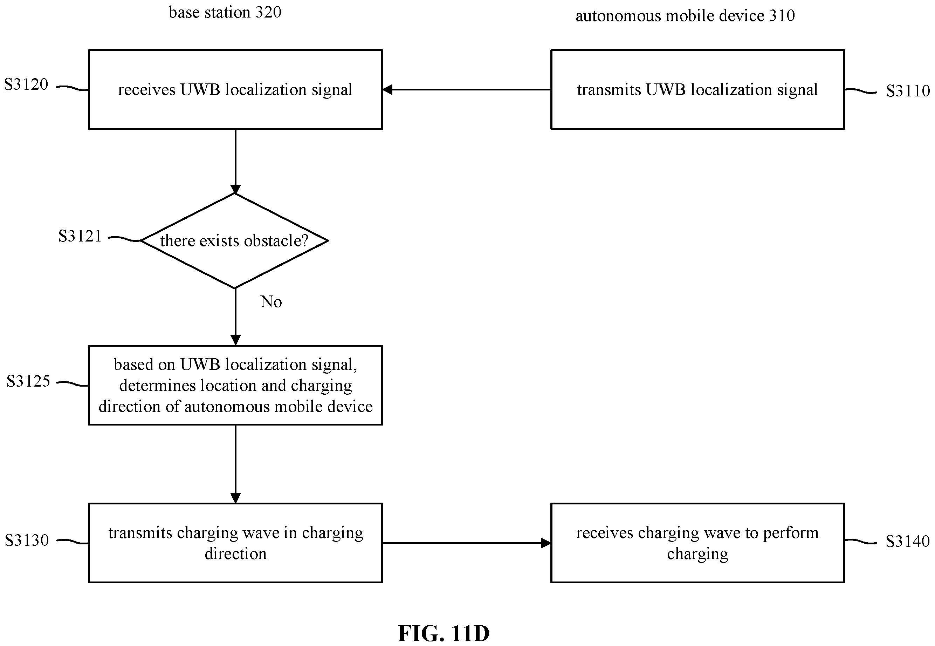

In some embodiments, on the basis of the embodiment of the charging control method shown in FIG. 11A, referring to FIG. 11D, after the autonomous mobile device 310 transmits the UWB localization signal in step S3110, after the base station 320 receives the UWB localization signal in step S3120, then in step S3121, the base station 320 may detect whether there exists an obstacle between the autonomous mobile device 310 and the base station 320. When no obstacle is detected between the autonomous mobile device 310 and the base station 320, steps S3125, S3130 and S3140 may be sequentially executed. The descriptions of steps S3125, S3130 and S3140 may refer to the embodiment shown in FIG. 11A, which are not repeated.

In some embodiments, the base station 320 may transmit a directional signal after receiving the UWB localization signal, and may detect whether an obstacle exists between the autonomous mobile device 310 and the base station 320 based on whether the feedback information transmitted by the autonomous mobile device 310 is received, which includes an indication that the directional signal is received. When the feedback information is received, the base station 320 may detect that no obstacle exists between the autonomous mobile device 310 and the base station 320, the determination in step S3121 is "No," and steps S3125, S3130 and S3140 may be sequentially executed; conversely, when the base station 320 does not receive the feedback information, then it is possible that an obstacle exists between the autonomous mobile device 310 and the base station 320, or the autonomous mobile device 310 is too far away from the base station 320 such that the autonomous mobile device 310 does not receive the directional signal transmitted by the base station 320. These two situations are not suitable for transmitting the charging wave. Of course, it is also possible that the base station 320 not receiving the feedback information is caused by disconnection of the network. For safety, the base station 320 may stop transmitting the charging wave or change the transmitting direction of the charging wave.

Specifically, on the basis of the embodiment shown in FIG. 11A, after the base station 320 receives the UWB localization signal transmitted by the autonomous mobile device 310 in step S3120, the base station 320 may transmit a directional signal for detecting whether there exists an obstacle between the autonomous mobile device 310 and the base station 320. When the autonomous mobile device 310 detects the directional signal, the autonomous mobile device 310 may transmit, through the wireless communication module mobile terminal 316 and the wireless network, the feedback information that includes an indication that the directional signal is received; when the wireless communication module base station terminal 325 receives the feedback information and extracts relevant information of the directional signal, in step S3130 the base station 320 may transmit the charging wave in the charging direction. The base station 320 may execute step S3125 that is before the step S3130, to determine the charging direction, or may directly use the direction of the directional signal (typically also the direction of the UWB localization signal) as the charging direction. Illustratively, the base station 320 may transmit directional signals that scan in different directions over time. The directional signal may be an electromagnetic wave transmitting in a straight line, such as a laser, or a light emitter/light source having a focusing device; the autonomous mobile device 310 may detect the directional signal, and may include a result of detecting the directional signal in the feedback information. The feedback information may be transmitted to the base station 320 through the wireless network. Through the feedback indicating that the autonomous mobile device 310 receives the directional signal, which is included in the feedback information, the computing module 322 of the base station 320 may determine that there is no obstacle between the autonomous mobile device 310 and the base station 320.

In other embodiments, at the same time of the autonomous mobile device 310 transmitting the UWB localization signal or after the autonomous mobile device 310 transmits the UWB localization signal, the autonomous mobile device 310 may transmit a detecting signal. The base station 320 may detect whether there exists an obstacle between the autonomous mobile device 310 and the base station 320 based on whether the detecting signal is received. When the detecting signal is received, the base station 320 may detect that no obstacle exists between the autonomous mobile device 310 and the base station 320, the determination in step S3121 may be "No," and steps S3125, S3130 and S3140 may be sequentially executed; conversely, when the detecting signal is not received, then it is possible that there exists an obstacle between the autonomous mobile device 310 and the base station 320, or that the autonomous mobile device 310 is too far away from the base station 320 such that the base station 320 does not detect the detecting signal. These two situations are not suitable for transmitting the charging wave. The base station 320 may stop transmitting the charging wave or change the transmitting direction of the charging wave.

Specifically, referring to FIG. 11B, on the basis of the embodiment of the charging control method shown in FIG. 11A, at the same time of the autonomous mobile device 310 transmitting the UWB localization signal or after the autonomous mobile device 310 transmits the UWB localization signal in step S3110, step S3210 may be executed: the detecting signal transmitter 313 on the autonomous mobile device 310 may transmit, in real time, the detecting signal, for detecting whether an obstacle exists between the autonomous mobile device 310 and the base station 320. In step S3220, the detecting signal receiver 324 on the base station 320 may determine whether the detecting signal from the autonomous mobile device 310 is received; when the base station 320 receives the detecting signal, it indicates that no obstacle exists between the autonomous mobile device 310 and the base station 320, at this moment, the subsequent steps of the embodiment shown in FIG. 11A may be executed, such as step S3130 in which the base station 320 transmits the charging wave in the charging direction, thereby realizing safe charging of the autonomous mobile device 310. Of course, in step S3220 when it is determined that the detecting signal from the autonomous mobile device 310 is received, subsequent steps of other embodiments may be executed, these subsequent steps will be described in other embodiments. The base station 320 may determine the charging direction in step S3125 that is before step S3130, or may directly use the direction of the detecting signal (typically also the direction of the UWB localization signal) as the charging direction in step S3125. In some embodiments, the detecting signal may be an electromagnetic wave transmitting in a straight line, such as a laser or a light emitter/light source having a focusing device. A determination of whether an obstacle exists between the autonomous mobile device 10 and the base station 320 may be made through detecting the detecting signal that transmits in a straight line. In some embodiments, the detecting signal transmitter 313 on the autonomous mobile device 310 may transmit a circumferential detecting signal. Illustratively, the detecting signal transmitter 313 may transmit a scanning signal that scans in a 360° range, such as, a distance measuring laser emitted by a mechanical type Lidar device. In other embodiments, the detecting signal transmitter 313 may simultaneously transmit circumferential signals, such as, 360° circumferential signals that are transmitted simultaneously toward surroundings of a horizontal plane by a point light source disposed at a top portion of the autonomous mobile device 310.

Because when there exists an obstacle such as a living organism or a metal object between the base station 320 and the autonomous mobile device 310, the obstacle may block the detecting signal transmitted by the detecting signal transmitter 313 of the autonomous mobile device 310, causing the base station 320 to be typically unable to detect the detecting signal. Conversely, when there is no obstacle between the base station 320 and the autonomous mobile device 310, it is possible that the base station 320 can detect the detecting signal (the distance between the autonomous mobile device 310 and the base station 320 is within a pre-set range), therefore, the base station 320 may determine whether there exists an obstacle such as a living organism or a metal object between the base station 320 and the autonomous mobile device 310 based on whether the detecting signal is detected, thereby further controlling whether to continue transmitting the charging wave to the autonomous mobile device 310, or to suspend transmitting the charging wave, or to change the transmitting direction of the charging wave.

Illustratively, when the base station 320 determines, in step S3220, that the detecting signal is not detected ("No" in step S3220), it indicates that an obstacle exists between the base station 320 and the autonomous mobile device 310, or that the autonomous mobile device 310 is too far away from the base station 320 such that the base station 320 does not detect the detecting signal, and the base station 320 may stop transmitting the charging wave or change the transmitting direction of the charging wave. Conversely, when the base station 320 determines in step S3220 that the detecting signal is detected ("Yes" in step S3220), it indicates that no obstacle exists between the base station 320 and the autonomous mobile device 310, and the base station 320 may continue transmitting the charging wave to the autonomous mobile device 310.

The present disclosure does not limit the manner for detecting whether there is an obstacle between the base station 320 and the autonomous mobile device 310, as long as it can detect whether there exists an obstacle between the base station 320 and the autonomous mobile device 310, such a manner should be within the protection scope of the claims relating to the determination of whether there exists an obstacle between the autonomous mobile device and the base station.

As described in the above multiple embodiments, by the base station 320 transmitting the directional signal or the autonomous mobile device 310 transmitting the detecting signal, a detection may be made as to whether there is an obstacle between the autonomous mobile device 310 and the base station 320, and when it is detected that an obstacle exists between the base station 320 and the autonomous mobile device 310, the base station 320 may stop transmitting the charging wave or change the transmitting direction of the charging wave. Therefore, charging of a metal that is an obstacle and heating up the metal and even possibly causing a fire may be avoided, harm caused to the living organism that is an obstacle by the charging wave may be avoided, thereby eliminating safety risks associated with the long distance wireless charging.

In some embodiments, on the basis of the embodiments of the charging control method such as those shown in FIG. 11A, FIG. 11B and/or FIG. 11D, referring to FIG. 11B, after the autonomous mobile device 310 transmits the UWB localization signal in step S3110, after the base station 320 receives the UWB localization signal in step S3120, the base station 320 may execute step S3310, to determine whether a distance between the autonomous mobile device 310 and the base station 320 satisfies a pre-set distance condition; when it is determined that the pre-set distance condition is satisfied, the subsequent step S3130 for transmitting the charging wave may be executed.

In some embodiments, the pre-set distance condition may include at least one of the following conditions: a distance between the autonomous mobile device 310 and the base station 320 is smaller than or equal to a distance threshold; the distance between the base station 320 and the autonomous mobile device 310 is smaller than distances between other base stations 320' and the autonomous mobile device 310. For example, based on the work zone of the autonomous mobile device 310, the distance threshold may be set as 5 meters. When the distance between the autonomous mobile device 310 and the base station 320 is smaller than or equal to 5 meters, the base station 320 may determine that the pre-set distance condition is satisfied. For example, when there are multiple base stations 320 that can charge the autonomous mobile device 310, when a distance between the autonomous mobile device 310 and the base station 320 that is currently transmitting the charging wave is smaller than a distance between the autonomous mobile device 310 and another base station 320', the base station 320 may determine that the pre-set distance condition is satisfied. At this moment, the base station 320 is the base station that is closer to the autonomous mobile device 310, and this base station 320 may charge the autonomous mobile device 310. In step S3310, when it is determined that the pre-set distance condition is satisfied, then step S3130 may be executed by the base station 320; when it is determined that the pre-set distance condition is not satisfied, then the base station 320 may stop charging the autonomous mobile device 310, or the charging of the autonomous mobile device 310 may be performed by a base station that satisfies the pre-set distance condition, such as base station 320'.

In some embodiments, after the autonomous mobile device 310 already starts receiving the charging wave to perform charging, a determination relating to a pre-set stop charging condition may be made, and the charging may be stopped when the pre-set stop charging condition is satisfied. In other words, in some embodiments, on the basis of the embodiments of the charging control method such as those shown in FIG. 11A, FIG. 11B and/or FIG. 11D, referring to FIG. 11B, after the autonomous mobile device 310 starts receiving the charging wave to perform charging in step S3140, the autonomous mobile device 310 may execute step S3410, to determine whether a pre-set stop charging condition is satisfied; when it is determined that the pre-set stop charging condition is satisfied, the autonomous mobile device 310 may transmit a stop charging request to the base station 320 in step S3420. In response to receiving the stop charging request by the base station 320 through the wireless network, the base station 320 may stop transmitting the charging wave in step S3430, to stop the charging of the autonomous mobile device 310.

Next, illustratively, the stop charging operations of steps S3410-S3430 are described in further details.

In step S3410, the processing module 314 of the autonomous mobile device 310 may determine whether the charging needs to be stopped (i.e., whether a pre-set stop charging condition is satisfied). In some embodiments, the pre-set stop charging condition may include at least one of the following conditions: a current electric power of the autonomous mobile device 310 is equal to or greater than a second electric power threshold; a distance between the autonomous mobile device 310 and the base station 320 is equal to or greater than a distance threshold; the distance between the autonomous mobile device 310 and the base station 320 is greater than distances between the autonomous mobile device 310 and other base stations 320'; and there exists an obstacle between the autonomous mobile device 310 and the base station 320. For example, the second electric power threshold may be 90%, when the current electric power of the autonomous mobile device 310 is equal to or greater than 90%, the autonomous mobile device 310 may determine that the pre-set stop charging condition is satisfied; of course the second electric power threshold may be set as 100%. At this moment when the current electric power of the autonomous mobile device 310 is equal to 100%, it may be determined that the pre-set stop charging condition is satisfied. For example, the distance threshold may be 5 meters, when the distance between the autonomous mobile device 310 and the base station 320 that is currently transmitting the charging wave is equal to or greater than 5 meters, the autonomous mobile device 310 may determine that the pre-set stop charging condition is satisfied. An example of determining whether the distance between the autonomous mobile device 310 and the base station 320 is greater than distances between the autonomous mobile device 310 and other base stations 320' may refer to the relevant descriptions of the above embodiment. An example of determining whether an obstacle exists between the autonomous mobile device 310 and the base station 320 may refer to the relevant descriptions of the embodiments shown in FIG. 11A, FIG. 11B and FIG. 11D, which are not repeated. In some embodiments, the pre-set stop charging condition may also include the charging efficiency of the autonomous mobile device 310 being equal to or smaller than a charging efficiency threshold (e.g., 60%). Specifically, in some embodiments, when the charging efficiency is equal to or smaller than the charging efficiency threshold, it may be determined that the pre-set stop charging condition is satisfied, and relevant actions may be executed: stopping charging or changing the charging direction. When the step of stop charging is executed, then: the UWB localization signal transmitter 311 of the autonomous mobile device 310 may be turned off, such that it no longer transmits the UWB localization signal; or a stop charging request may be transmitted to the base station 320 through the wireless network for requesting the base station 320 to stop charging the autonomous mobile device 310. In other embodiments, a number of charging failures may be counted and the number of charging failures may be used as a pre-set stop charging condition: when the charging efficiency is equal to or smaller than the charging efficiency threshold, it may be determined that a charging failure occurred, and the number of charging failures may be counted; when the counted number of charging failures is greater than or equal to a count threshold (e.g., 5 times), it may be determined that the pre-set stop charging condition is satisfied, and the above-described relevant actions may be executed. The above-described multiple pre-set stop charging conditions may be used individually, or multiple pre-set stop charging conditions may be used in combination.

Stopping charging may adopt the following manner of operations: the autonomous mobile device 310 no longer transmits the UWB localization signal such that the base station 320 cannot determine the direction of the autonomous mobile device 310; or the feedback information transmitted by the wireless communication module mobile terminal 316 of the autonomous mobile device 310 through the wireless network to the base station 320 includes stop charging information (also referred to as a stop charging request), after the wireless communication module base station terminal 325 receives the stop charging information, it may instruct the power supply module 323 to stop transmitting the charging wave; or when a detecting signal transmitter 313 is provided on the autonomous mobile device 310, the detecting signal transmitter 313 may be turned off. At this moment, the pre-set stop charging condition corresponding to the base station 320 includes detecting an obstacle between the autonomous mobile device 310 and the base station 320. When the base station 320 does not receive the detecting signal, it may be determined that the pre-set stop charging condition is satisfied, and thus the transmission of the charging wave is stopped, thereby realizing stopping the charging.

When the autonomous mobile device 310 determines that the pre-set stop charging condition is satisfied in step S3410, subsequent steps may be executed.

In step S3420, the wireless communication module mobile terminal 316 of the autonomous mobile device 310 may transmit, through the wireless network, to the wireless communication module base station terminal 325, the feedback information that includes the stop charging request, to request the base station 320 to stop the power supply. Alternatively, in step S3420, instructions may be directly sent to the UWB localization signal transmitter 311 to instruct it to stop transmitting the UWB localization signal.

In step S3430, the base station 320 may stop transmitting the charging wave in response to the stop charging request received from the autonomous mobile device 310 through the wireless network, thereby stopping the charging of the autonomous mobile device 310, or changing the charging direction. In some embodiments, the charging efficiency may be calculated based on a ratio between the charging power of the autonomous mobile device 310 and the transmitting power of the base station 320 transmitting the charging wave; when it is determined that the charging efficiency is equal to or smaller than a charging efficiency threshold (e.g., smaller than or equal to 60%), it indicates that the charging wave has not been sufficiently used to charge the autonomous mobile device 310, and therefore the base station 320 may stop transmitting the charging wave, to avoid energy waste and possible risk caused by mistakenly charging the metal or the living organism. A cause of an overly low charging efficiency may be: due to factors such as the locations or distance between the base station 320 and the autonomous mobile device 310, the charging wave transmitted by the base station 320 in the charging direction cannot be effectively received by the autonomous mobile device 310, so the base station 320 may change the charging direction, such that the charging wave can be more effectively received by the autonomous mobile device 310 that is in motion.

In some embodiments, the charging efficiency may be calculated based on a ratio between the charging power of the autonomous mobile device 310 and the transmitting power of the base station 320 transmitting the charging wave; when the charging efficiency is equal to or smaller than the charging efficiency threshold (e.g., smaller than or equal to 60%), it may be determined that a charging failure occurred. In subsequent transmissions of the charging wave, in the meantime, the calculation of the charging efficiency is continued, for example, the charging efficiency may be calculated according to a certain frequency or a pre-set condition. The number of charging failures may be counted. When the counted number of charging failures is greater than or equal to a count threshold, it indicates that the charging wave has not been sufficiently used to charge the autonomous mobile device 310, therefore, the base station 20 may stop transmitting the charging wave, to avoid energy waste and the possible risks caused by mistakenly charging the metal or living organism. Of course, the charging direction may be changed, such that the charging wave can be more effectively received by the autonomous mobile device 310 in motion.

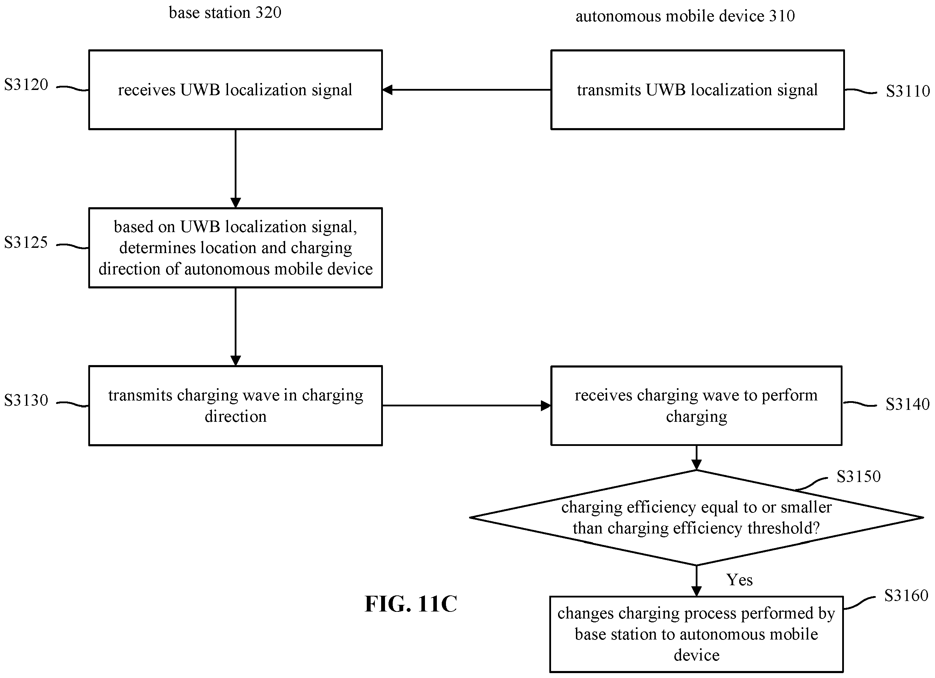

Referring to FIG. 11C, after the base station 320 transmits the charging wave in the charging direction in step S3130, after the autonomous mobile device 310 starts receiving the charging wave to perform charging in step S3140, the autonomous mobile device 310 may execute step S3150, to determine whether the charging efficiency of the autonomous mobile device 310 is equal to or smaller than the charging efficiency threshold, and when it is determined that the charging efficiency is equal to or smaller than the charging efficiency threshold, the autonomous mobile device 310 may change the charging process performed by the base station 320 to the autonomous mobile device 310 in step S3160.

In some embodiments, the charging process performed by the base station 320 to the autonomous mobile device 310 may include any of the following manners: the autonomous mobile device 310 may stop transmitting the UWB localization signal; the autonomous mobile device 310 may transmit a stop charging request to the base station 320, and the base station 320 may stop transmitting the charging wave or change the charging direction in response to receiving the stop charging request; the autonomous mobile device 310 may stop transmitting the detecting signal, as described in the above embodiment, it may be determined whether there exists an obstacle between the autonomous mobile device 310 and the base station 320 based on the detecting signal.

Correspondingly, when the base station 320 receives the stop charging request, or the base station 320 does not receive the UWB localization signal, or the base station 320 does not receive the detecting signal (corresponding to step S3220 in the above embodiment), for a measure of changing the charging direction corresponding to step S3430, the charging direction may be changed through the multiple manners for determining the charging direction as shown in step S3125 of the above embodiment, which are not repeated.

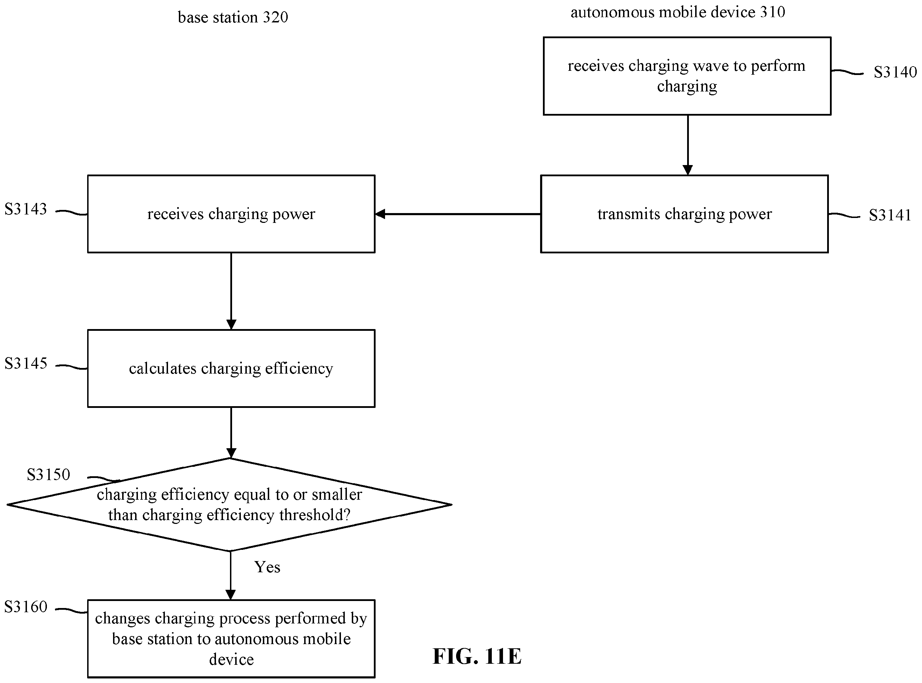

In some embodiments, as shown in FIG. 11E, after the base station 320 transmits the charging wave in the charging direction in step S3130, after the autonomous mobile device 310 starts receiving the charging wave to perform charging in step S3140, the autonomous mobile device 310 may execute step S3141, to transmit its charging power toward the surrounding environment through the wireless network, or directionally transmit the charging power toward the base station 320 through a cluster signal transmitter installed on the autonomous mobile device 310. The base station 320 may execute step S3143, to receive the charging power transmitted by the autonomous mobile device 310. The manner in which the base station 320 receives the charging power and the manner in which the autonomous mobile device 310 transmits the charging power may match one another. When the autonomous mobile device 310 includes its charging power in the feedback information and transmits the feedback information toward the surrounding space through the wireless communication module mobile terminal 316 and the wireless network, then the base station 320 may receive, through the wireless communication module base station terminal 325, the feedback information and extract the charging power from the feedback information. When the autonomous mobile device 310 transmits the charging power as content of a cluster signal through the cluster signal transmitter in a direction facing the base station 320 (i.e., the opposite direction of the charging direction), then the base station 320 may use a corresponding receiver to receive it. When the base station 320 receives the charging power, step S3145 may be executed, to calculate the charging efficiency of the autonomous mobile device 310. The charging efficiency may be a ratio between the charging power of the autonomous mobile device 310 and the transmitting power of the base station 320 transmitting the charging wave. Then the base station 320 may execute step S3150, to determine whether the charging efficiency of the autonomous mobile device 310 is equal to or smaller than the charging efficiency threshold, and when it is determined that the charging efficiency is equal to or smaller than the charging efficiency threshold, execute step S3160, such that the base station 320 may change the charging process performed to the autonomous mobile device 310. The charging process may include the base station 320 stopping transmitting the charging wave or changing the charging direction; if a charging failure is determined when the charging efficiency is equal to or smaller than the charging efficiency threshold, the charging process may also include counting the number of charging failures, and when the counted number of charging failures is greater than or equal to the count threshold, the base station 320 may stop transmitting the charging wave or change the charging direction.

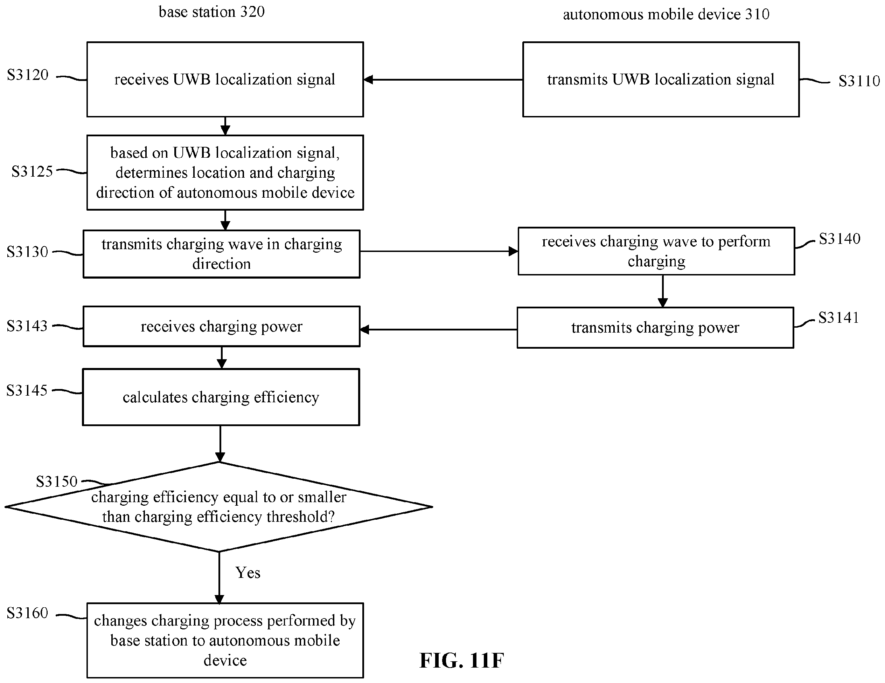

It should be noted that, by comparing the charging efficiency and the charging efficiency threshold, it may be determined as to whether or not the base station needs to stop transmitting the charging wave or change the charging direction, and the specific manner for determining the charging direction is not limited. In other words, even if the manner in which the relative location/direction of the autonomous mobile device 310 relative to the base station 320 is determined based on the UWB localization signal as described in the embodiments shown in FIG. 11A to FIG. 11E is not adopted, as long as the autonomous mobile device can successfully receive the charging wave and perform charging, in subsequent steps a determination of whether the base station needs to stop transmitting the charging wave or change the charging direction may be made by comparing the charging efficiency and the charging efficiency threshold. Specifically, referring to the flowchart shown in FIG. 11F, after the autonomous mobile device 310 completes the execution of step S3140 and successfully receives the charging wave to perform charging, subsequent steps S3141, S3143, S3145, S3150 and S3160 may be executed. Regarding the descriptions of these steps, for the purpose of conciseness, the relevant descriptions of these steps can refer to the above embodiments, which are not repeated. Illustratively, an example of the specific manner for determining the charging direction is described as follows:

In some embodiments, the autonomous mobile device may be provided with an identification feature. Correspondingly, the base station may be provided with an identification module such as a camera or a Lidar device, etc. The base station may determine the charging direction by identifying, through the identification module, the identification feature on the autonomous mobile device, and may further transmit the charging wave in the charging direction. The autonomous mobile device may successfully receive the charging wave to perform charging. Illustratively, the identification feature may be a geometric pattern or a spatial 3D pattern that includes a visually identifiable color contrast, which may be identified by a camera, or at least a partial profile/shape of the autonomous mobile device. The identification feature may also be a barcode or a chess board formed by different materials having at least two reflectances that are alternatingly arranged in a horizontal direction, which may be identified by a Lidar device.

In some embodiments, the relative direction of the autonomous mobile device relative to the base station may be determined based on the directional signal. For example, the base station may transmit the directional signal, and the autonomous mobile device may detect the directional signal. After the autonomous mobile device detects the directional signal, it may notify the base station through the wireless network that the directional signal is received. The base station may determine the charging direction facing the autonomous mobile device, and may further transmit the charging wave in the charging direction. The autonomous mobile device may successfully receive the charging wave to perform charging. Of course the autonomous mobile device may transmit the directional signal. When the base station receives the directional signal, it may determine the direction of the autonomous mobile device (i.e., the charging direction) based on the directional signal, and may further transmit the charging wave in the charging direction. The autonomous mobile device may successfully receive the charging wave to perform charging.

In some embodiments of the autonomous mobile device that has a map creation capability, the autonomous mobile device may transmit, through the wireless network, its coordinate location to the base station, such that the base station may determine the charging direction based on the coordinate location of the autonomous mobile device, and may further transmit the charging wave in the charging direction. The autonomous mobile device may successfully receive the charging wave to perform charging.

This embodiment does not limit the manner for determining the charging direction, as long as the charging direction can be determined such that the autonomous mobile device can receive the charging wave transmitted by the base station to perform charging. These are all within the protection scope defined by the technical solutions of this embodiment.

Through the above embodiment, during the time period when the base station charges the autonomous mobile device (i.e., since the base station transmits the charging wave in the charging direction, and the autonomous mobile device starts receiving the charging wave to perform charging), through the above charging control method, the charging process performed by the base station to the autonomous mobile device may be changed under a suitable condition, such as stopping transmitting the charging wave or changing the charging direction. As such, the safety and/or energy-saving capability of the charging can be enhanced.

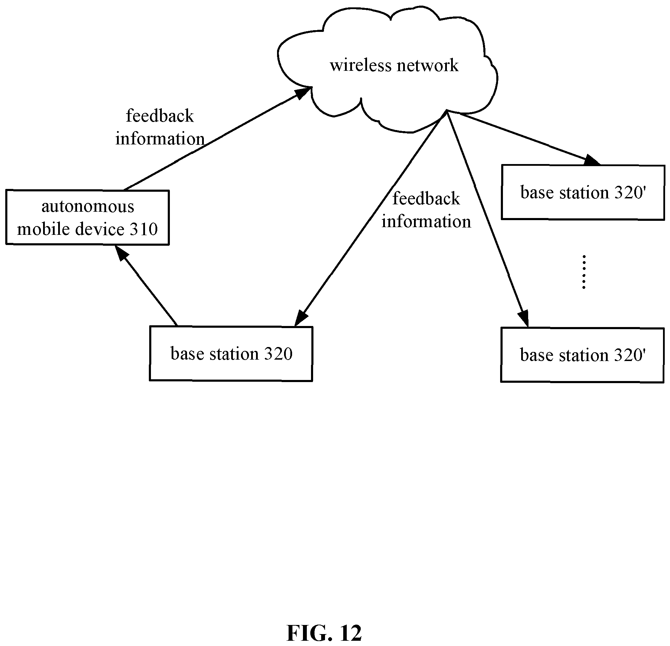

In some embodiments, it is possible that multiple base stations may be available to charge the autonomous mobile device 310. FIG. 12 is a schematic illustration of an autonomous mobile device and multiple base stations according to an illustrative embodiment. The autonomous mobile device 310 may transmit to each base station, through the wireless network, feedback information that includes identification information configured for identifying a target base station. After each base station receives the feedback information, it may determine whether it is a target base station based on the received feedback information that includes the identification information, thereby realizing selection of a target base station from multiple base stations. Typically, to enhance the charging efficiency and safety, it is desirable to use the base station that is closest to the autonomous mobile device 310 and that is not obscured by an obstacle from the autonomous mobile device 310 to charge the autonomous mobile device 310.

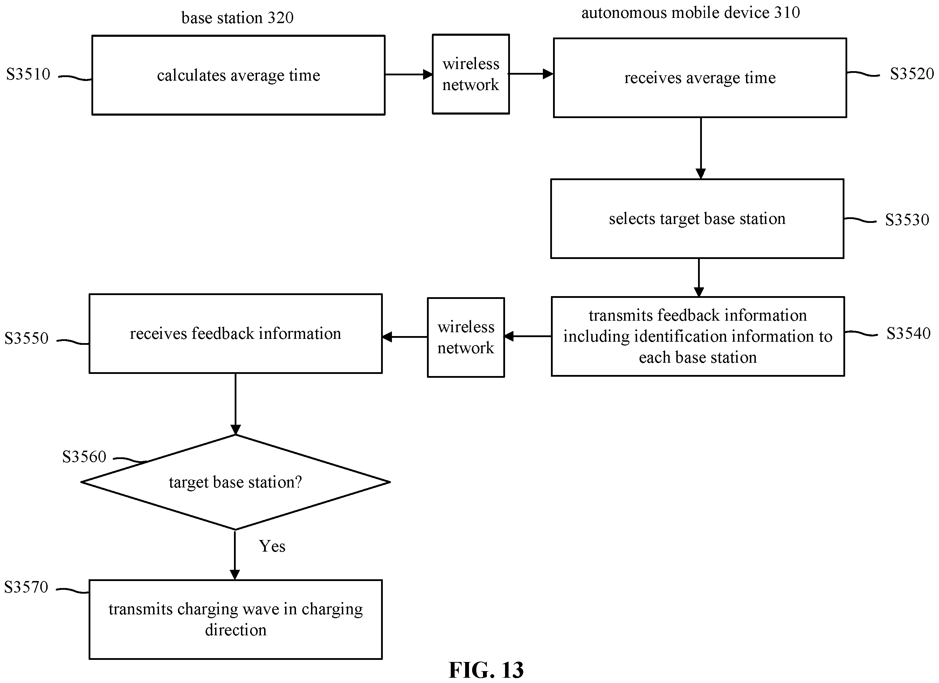

FIG. 13 is a flowchart showing charging operations when there are multiple base stations according to an illustrative embodiment.

When there are multiple base stations, in some embodiments, a closest base station may be selected to perform charging rather than having multiple base stations to perform charging together. As such, not only decay of the charging energy can be reduced, risks of charging a living organism can also be reduced. Of course, it is possible to have multiple base stations that are all relatively close to the autonomous mobile device 310 to charge the autonomous mobile device 310, to shorten the charging time.

After the base station receives the UWB localization signal in step S3120, step S3510 may be executed, the computing module 322 of the base station that receives the UWB localization signal may calculate, through UWB localization techniques, times for the signal to transmit from a localization tag on the autonomous mobile device 310 (i.e., the UWB localization signal transmitter 311) to multiple (at least three, but it may also be four or more) different antennae on the base station, and may calculate multiple time differences associated with the UWB localization signal transmitted by the localization tag arriving at the multiple antennae of the base station, and then calculate an average value of the multiple time differences, which may be used as the average time for the UWB localization signal to transmit from the localization tag to the base station. Respective average times of multiple base stations may be transmitted to the autonomous mobile device 310 through the wireless network.

In step S3520, the autonomous mobile device 310 may receive the average time transmitted from each base station through the wireless network.

After the completion of execution of step S3520, the following step S3530 may be subsequently executed.

In step S3530, in the scenario in which the autonomous mobile device 310 receives, within a predetermined time period, the average time transmitted from each base station, the processing module 314 of the autonomous mobile device 310 may select a target base station based on information indicating whether an obstacle exists between the autonomous mobile device 310 and each base station, i.e., select a base station that is not obscured by an obstacle from the autonomous mobile device 310 and that is closest to the autonomous mobile device 310 as the target base station. In some embodiments, the processing module 314 of the autonomous mobile device 310 that receives the respective average times may compare the respective average times of various base stations, to find a base station corresponding to the shortest average time, and determine this base station as the target base station. In other words, the base station that is closest to the autonomous mobile device 310 may be determined as the target base station. Therefore, the autonomous mobile device 310 may use the received average times as one of the above conditions for selecting a potential target base station.

In step S3540, the wireless communication module mobile terminal 316 of the autonomous mobile device 310 may constantly transmit, through the wireless network, feedback information including identification information of the selected target base station to the wireless communication module base station terminal 325 of each base station. The identification information corresponding to the base station is information, which after being received by the base station, can be used by the base station to perform self-identification to differentiate the base station from a number of other base stations, which may be, for example, device ID, name, numbering of the base station, or other information that uniquely identifies the base station.

In some embodiments, the feedback information may be a packet including the identification information of a base station that is closest to the autonomous mobile device 310. The packet form may be, for example, a 128-byte packet, where the first 8 bytes may be header check digits configured for determining a header of the packet itself, the second 8 bytes may include information of the autonomous mobile device 310, the third 8 bytes may be information of the base station that needs to respond, the fourth 8 bytes may be direction information or direction code for the charging wave that needs to be transmitted by the base station, and the remaining bytes may be check digits. Of course some of the bytes may be configured for special information, for example, multiple bytes at different selected positions may be used to indicate the direction or coordinate location of the autonomous mobile device, and/or the charging power information, and/or the stop charging request, and/or instruction information for instructing the base station whether or not to transmit the charging wave, and/or identification information of the target base station, etc. The above are only illustrative. The present disclosure does not limit the specific format of the feedback information.

In step S3550, the wireless communication base station terminal 325 of the base station may receive, through the wireless network, the feedback information from the autonomous mobile device 310.

The wireless communication module mobile terminal 316 may constantly transmit, through the wireless network, the feedback information that includes the identification information. The wireless communication module base station terminal 325 may constantly receive the feedback information and determine, by verifying the header check digits of the packet and the identification information included therein, whether the base station is selected as the target base station, so as to determine whether the base station needs to transmit the charging wave. In addition, in subsequent steps, if the header check digits and the identification information are both correct, then the charging direction may be determined based on direction information included in the fourth 8 bytes in the packet, or the charging direction may be directly determined based on the direction of the UWB localization signal determined by the base station, or the charging direction may be determined using other methods described in other embodiments. In an embodiment in which the base station can receive the feedback information (e.g., the embodiments shown in FIG. 11A, FIG. 11B and FIG. 11D), if the wireless communication module base station terminal 325 does not receive, at a certain time instance, the feedback information, or if the identification information included in the received feedback information does not match with the base station, then the charging wave is no longer transmitted.

In step S3560, each base station may perform self-identification based on the identification information included in the received feedback information that includes the identification information, to determine whether the base station itself is selected as the target base station. In some embodiments, each base station may determine whether the base station is selected as the target base station based on the identification information included in the third 8 bytes of the feedback information that is in the form of a packet. When it is determined that itself is a target base station, then the determination of step S3560 is "Yes," and step S3570 may be subsequently executed; when it is determined that itself is not a target base station, then the determination of step S3560 is "No," then it may continue to receive the feedback information and continue to identify the identification information included in the feedback information.

In step S3570, the target base station may transmit a charging wave in the charging direction. In some embodiments, the charging direction may be determined as described in the above embodiment.

Therefore, the target base station may be selected using the method shown in FIG. 13, and after the target base station is selected, the method shown in FIG. 11B may be respectively executed between the autonomous mobile device 310 and the selected target base station.

As the autonomous mobile device 310 moves, the selection of the target base station may change. For example, the base station currently performing the charging may no longer be the base station that is closest to the autonomous mobile device 310, or an obstacle may appear between the base station currently performing the charging and the autonomous mobile device 310, then it may be needed to select a new base station as the target base station. In some embodiments, the autonomous mobile device 310 may constantly transmit the UWB localization signal. Each base station may constantly receive the UWB localization signal and calculate the average time. The time and distance information of the autonomous mobile device 310 and each base station may be constantly updated. In combination with obstacle information, the selection of the target base station and the corresponding identification information may be constantly updated. Then, the autonomous mobile device 310 may constantly transmit the feedback information including the updated identification information through the wireless network. Each base station may constantly receive the feedback information and perform self-identification. If a base station that is currently not performing the charging determines, based on the updated identification information, that it is selected as the target base station, then it may start transmitting the charging wave as described in the above embodiments. If a base station currently performing the charging determines, based on the updated identification information, that it is no longer a target base station, then it may stop transmitting the charging wave. As such, it may be ensured that the charging of the autonomous mobile device is performed by a base station that is closest to the autonomous mobile device and that is not obscured from the autonomous mobile device by an obstacle, thereby further increasing the safety and efficiency.

In some embodiments, the number of the target base stations may not be limited to 1, that is, the number of the target base stations may be two or more than two. In the meantime, the target base station is a base station selected from multiple base stations based on a principle that the relative distance between the target base station and the autonomous mobile device is smaller than relative distances between other base stations of the multiple base stations excluding the target base station and the autonomous mobile device. Therefore, the number of the target base stations is smaller than the total number of the multiple base stations. As such, the number of the target base stations may be two or more than two, but less than the total number of the base stations. In addition, the relative distance between each base station and the autonomous mobile device is smaller than the relative distances between other base stations of the multiple base stations excluding the target base station and the autonomous mobile device.

In a scenario in which multiple target base stations exist, target base stations ranked in a pre-set priority order may be used to charge the autonomous mobile device; or, multiple base stations satisfying certain requirements may be used to charge the autonomous mobile device simultaneously, to shorten the charging time; or, a closest target base station among the multiple base stations may be set as a main target base station, other target base stations may be set as auxiliary target base stations. All of the target base stations may charge the autonomous mobile device simultaneously, but the power of the charging wave transmitted by the main target base station is the largest, and the powers of the charging wave transmitted by the auxiliary target base stations are relatively smaller, thereby shortening the charging time and in the meantime reducing safety risks and energy loss.

Illustratively, each step in the above embodiment may be repeatedly executed. In this situation, the above average time, location, UWB localization signal may be calculated or transmitted in real time, all feedback information may be constantly transmitted, the charging direction may be adjusted in real time and constantly, the transmission of the charging wave may be real time determination and transmission. Therefore, while the autonomous mobile device 310 moves, the base station may charge the autonomous mobile device 310 in the calculated charging direction in real time. Because the accuracy of the UWB localization technique is high, when combined with the realization of the real time, constant adjustment of the charging direction in the present disclosure, long distance charging may be performed at a relatively high efficiency.

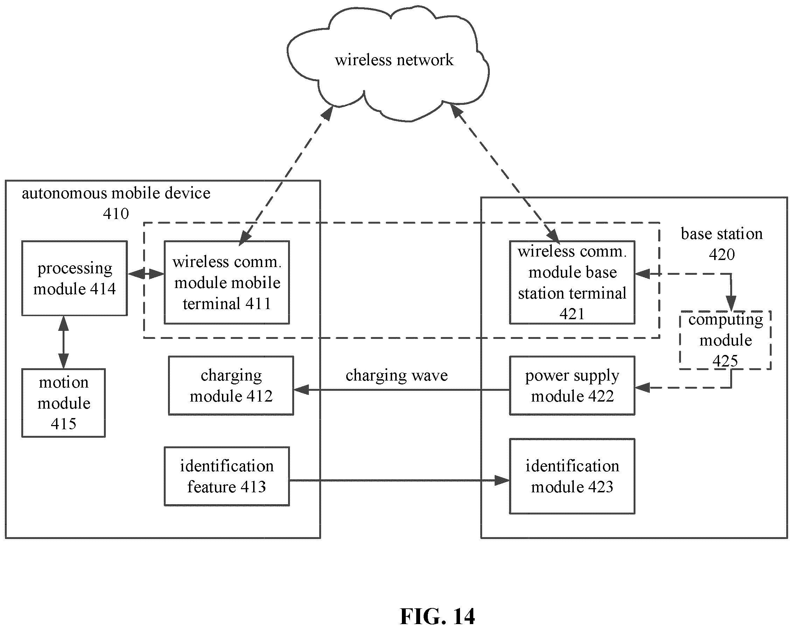

FIG. 14 is a schematic illustration of a charging control system according to an illustrative embodiment. As shown in FIG. 14, the charging control system may include an autonomous mobile device 410 and a base station 420, where, the autonomous mobile device 410 may be a cleaning robot or other mobile robot executing other working tasks (e.g., patrolling, logistics carrying, following, etc.) and that may carry a rechargeable battery. The base station 420 may be a device configured to operate in collaboration with the autonomous mobile device 410 and perform charging of the autonomous mobile device 410. The autonomous mobile device 410 and the base station 420 may not be connected by a network, or may communicate through a wireless network. The wireless network may be any wireless communication network configured for data transmission (e.g., Wifi, Bluetooth, Zigbee, etc.).

As shown in FIG. 14, the autonomous mobile device 410 may include a charging module 412 configured to receive the charging wave transmitted from the base station 420. An identification feature 413 may be provided on the autonomous mobile device 410, which may be configured for the base station 420 to identify the autonomous mobile device 410. An identification module 423 of the base station 420 may identify the autonomous mobile device 410 by identifying the specific identification feature 413. The autonomous mobile device 410 may also include a motion module 415 configured for motion, for example, a wheel type motion module formed by a wheel group including two driving wheels and a follower omnidirectional wheel or a track motion module formed by a track. The autonomous mobile device 410 may also include a processing module 414 configured for various data processing and computations, where the various data processing and computations may include, according to different embodiments: obtaining motion parameter data from various dead reckoning sensors, calculating a distance between the autonomous mobile device 410 and the base station 420, and/or deriving or estimating, through computation, a first direction of the autonomous mobile device 410 at a next time instance in the current direction; determining whether relevant data satisfy various conditions such as a pre-set charging condition, a pre-set stop charging condition, a pre-set distance condition, etc., and executing corresponding operations or transmitting corresponding instructions; obtaining a load power from the charging module 412, of course also including other processing and/or computation functions. In addition, the charging module 412 of the autonomous mobile device 410 may include a receiving antenna and an energy storage unit (not shown in FIG. 14), where the receiving antenna is configured to receive the charging wave from the base station 420, and the energy storage unit is configured to store energy.

As shown in FIG. 14, the base station 420 may include a power supply module 422 configured to transmit a charging wave to the autonomous mobile device 410 (also referred to as a charging wave transmitting module); an identification module 423 configured to identify the identification feature 413 of the autonomous mobile device 410. The identification module 423 and the identification feature 413 are configured in a matching manner. The identification module 423 may be, for example, a Lidar device and/or a camera. Here, the power supply module 422 may include a transmitting antenna (not shown in FIG. 14), configured to transmit a charging wave in the charging direction determined by the identification module 423 through identifying the identification feature 413. In addition, in some embodiments, the base station 420 may also include a computing module 425 configured for performing computation.

In some embodiments, on the basis of the embodiments of the above basic composing elements, other modules represented by the dashed frames in FIG. 14 may be included, for example, the autonomous mobile device 410 may also include a wireless communication module mobile terminal 411 (also simply referred to as a mobile terminal 411); correspondingly, the base station 420 may also include a wireless communication module base station terminal 421 (also simply referred to as a base station terminal 421). Here, the wireless communication module mobile terminal 411 may be configured to communicate with the base station 420 through the wireless network, for example, to transmit or receive information and/or instructions (also referred to as the feedback information in the present disclosure); correspondingly, the wireless communication module base station terminal 421 may be configured to communicate with the autonomous mobile device 410 through the wireless network. For example, the base station terminal 421 may receive information and/or instructions transmitted by the mobile terminal 411, or the base station terminal 421 may transmit information and/or instructions to the mobile terminal 411.

Illustratively, the communication between the wireless communication module base station terminal 421 and the wireless communication module mobile terminal 411 may be one-way communication, i.e., the wireless communication module base station terminal 421 may transmit various information and/or control instructions to the wireless communication module mobile terminal 411. The communication between the wireless communication module base station terminal 421 and the wireless communication module mobile terminal 411 may be two-way communication, which is not limited by the present disclosure.

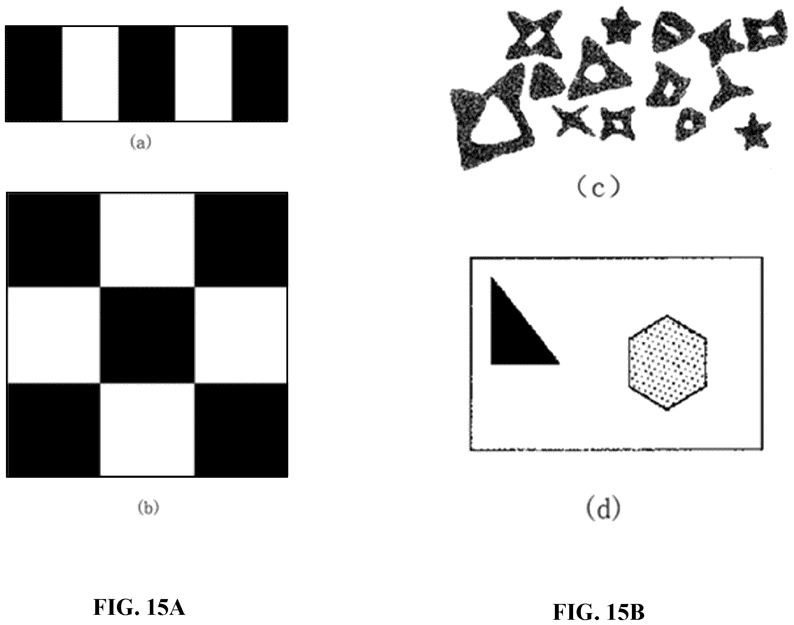

FIG. 15A is a schematic illustration of the identification feature 413 that can be identified by a Lidar device and/or a camera according to an illustrative embodiment. The identification module 423 and the identification feature 413 may be configured in a matching manner: when the identification module 423 uses a Lidar device (also referred to as a distance measuring sensor, a laser based distance measuring device), then the identification feature 413 may be formed by different materials having at least two reflectances that are alternatingly arranged in non-perpendicular directions; when the identification module 423 uses a camera, then the identification feature 413 may be formed by materials having at least two different colors that are alternatingly arranged (the materials to which the two different colors are associated with may be the same type of material or may be different types of materials). As shown in FIG. 15A, the identification feature 413 may be a barcode or a chess board (collectively referred to as Bar code) formed by black and white vertical strips alternatingly arranged in the horizontal direction, which may be identified by a Lidar device or a camera. The multiple black vertical strips and white vertical strips of the Bar code may be arranged in any encoding rules, which are not limited by the present disclosure.

In some embodiments, referring to sub-figure (a) of FIG. 15A, the black portions and white portions of the barcode respectively correspond to, for a laser emitted by a Lidar device, a high-absorption material and a high-reflectance material. The Lidar device may identify the identification feature 413 based on a ratio between the bottom widths of the vertical strips of different materials. For example, the identification and matching may be based on a ratio between widths of three black high-absorption materials, i.e., 1:1:1, or, the identification and matching may be based on a ratio between widths of each black high-absorption material and each white high-reflectance material, i.e., 1:1:1:1:1; of course other matching methods may also be used, such as a matching method based on peak and valley of absorption, etc. Similarly, when a camera is used as the identification module 423, then the identification feature 413 may be a barcode formed by two portions of different colors as shown in sub-figure (a) of FIG. 15A, and the camera may identify the identification feature 413. Similarly, when the black-white-alternating chess board pattern shown in sub-figure (b) of FIG. 15A is used as the identification feature 413, then a Lidar device may be used as the identification module 423 and the Lidar device can identify the identification feature 413. Examples of the barcode, in addition to the black-white vertical strips shown in sub-figure (a) of FIG. 15A, may also be a pattern formed by non-horizontal strips of other two materials having different laser absorptions/reflectances that are alternatingly arranged in non-perpendicular directions (corresponding to the identification feature 413 that can be identified by the Lidar device), or may be a pattern formed by non-horizontal strips of different colors that are alternatingly arranged in non-perpendicular directions (corresponding to the identification feature 413 that can be identified by a camera). A ratio between a distance within which the Lidar device can identify the identification feature 413 and a width of the identification feature 413 in the horizontal direction may be defined as a Lidar device identification ratio. Illustratively, the Lidar device identification ratio may be smaller than or equal to 20:1. For example, a typical width of the identification feature 413 in the horizontal direction may be 10 centimeters, then the largest distance within which the Lidar device can identify the identification feature 413 is 2 meters. In other words, if the autonomous mobile device is out of the 2 meters range from the base station, even if the identification feature 413 faces the Lidar device on the base station and there is no obstacle between the autonomous mobile device and the base station, and the Lidar device on the base station scans the identification feature 413 on the autonomous mobile device, it is likely that the Lidar device cannot successfully identify the identification feature 413. When the Lidar device identification ratio is equal to or smaller than 10:1, the identification effect may be significantly increased. Under some conditions, the Lidar device identification ratio may be selected, such that as long as the Lidar device can identify the identification feature 413, the autonomous mobile device is within the charging range of the base station. In other words, the charging range of the base station matches with the Lidar device identification ratio. For example, if the largest distance within which the Lidar device can effectively identify the identification feature 413 is 2 meters, and the largest charging range of the base station is 10 meters, then under this condition, the effective charging range of the base station with respect to the autonomous mobile device is 2 meters. The Lidar device may be a motor-driven 360° rotating-and-scanning mechanical type Lidar device (e.g., constantly rotating and scanning at a frequency of 6 Hz, i.e., 6 rounds/second), or may be a solid state Lidar device that transmits a distance measuring beam toward a sector-shaped zone. The present disclosure does not limit the type of the Lidar device.

In the above embodiment, the identification feature 413 that can be identified by the Lidar device may include a pattern formed by different blocks having at least two reflectances, such as the pattern shown in sub-figure (a) of FIG. 15A, which is formed by different blocks having high reflectance and low reflectance with respect to the laser emitted by the Lidar device, which are alternatingly arranged in the horizontal direction, where the low reflectance block is a block formed by a high absorption material in the above embodiment. It can be understood that the materials of blocks having different reflectances may be different. Illustratively, the identification feature 413 may be a pattern including a first block having a first reflectance and a second block having a second reflectance that is different from the first reflectance. In addition, the blocks included in the pattern of the identification feature 413 may be alternatingly arranged in a corresponding direction such as a non-perpendicular direction in the horizontal direction. Of course, the present disclosure does not limit the reflectances, quantity and/or arranging manner of the blocks included in the pattern of the identification feature. Any suitable reflectances, quantity and/or arranging manner may be adopted, as long as according to the arranging manner, after the quantity of blocks having corresponding reflectances are arranged, the formed pattern may be used as the identification feature that can uniquely identify the autonomous mobile device (the base station can identify the autonomous mobile device by identifying the identification feature).

FIG. 15B is a schematic illustration of an identification feature 13 that can be identified by a Lidar device and/or a camera according to an illustrative embodiment. When the identification module 423 is a camera, the identification feature 413 may be a pattern having a visually identifiable color contrast, the pattern may be a plane pattern having various geometric shapes, such as triangle, parallelogram, rectangle and any combination thereof; the pattern may be a spatial pattern having a shaded area or bright-dark contrasting areas formed by partially protruding or depressing 3D spatial shapes (the bright-dark contrasting pattern shown in images captured by the camera includes at least two different colors, therefore the bright-dark contrasting spatial pattern also belongs to a pattern having at least two different colors with respect to the camera). When the identification module 423 uses a Lidar device, the Lidar device may use the above-described matching method to identify the identification feature 413 shown in FIG. 15B. The present disclosure does not limit the quantity and shape, manner of the pattern forming the identification feature 413. Increasing the resolution of the camera and adjusting the focal length may increase the distance within which the above-described various patterns, which may be included in the identification feature, can be identified. But increasing the resolution of the camera may cause the size of the captured images to be relatively large. When the storage capacity is the same, the quantity of images that can be saved is reduced. To balance the tradeoff between the resolution of the camera and the storage capacity, sometimes the resolution of the camera for capturing images may be set as 640 pixels × 480 pixels. Under this resolution, illustratively, if the actual horizontal width of the identification feature 413 is 10 centimeters, in an ideal situation, when there is no obstacle between the Lidar device of the base station to which the identification feature 413 faces and the autonomous mobile device and the base station, the camera on the base station can identify the identification feature 413 within 3 meters from the autonomous mobile device. Beyond this distance, it is possible that the identification feature 413 may not be identified. Under some conditions, the resolution of the camera may be selected, such that as long as the camera can identify the identification feature 413, the autonomous mobile device is within the charging range of the base station, that is, the charging range of the base station matches with the resolution of the camera. For example, if the largest distance within which the camera can effectively identify the identification feature 413 is 3 meters, the largest charging range of the base station is 10 meters, then under this condition, the effective charging range of the base station with respect to the autonomous mobile device is 3 meters. The camera of the present disclosure may be an ordinary camera, a fisheye camera, etc. The present disclosure does not limit the type of the camera.

In some embodiments, as shown in sub-figure (c) of FIG. 15B, the identification feature 413 may be an irregular graph. As shown in sub-figure (d) of FIG. 15B, the identification feature 413 may include various geometric shapes. Of course, it can be understood that the identification feature 413 may be any suitable combination of an irregular graph, geometric shapes, etc. Due to the limit of space, descriptions are not repeated.

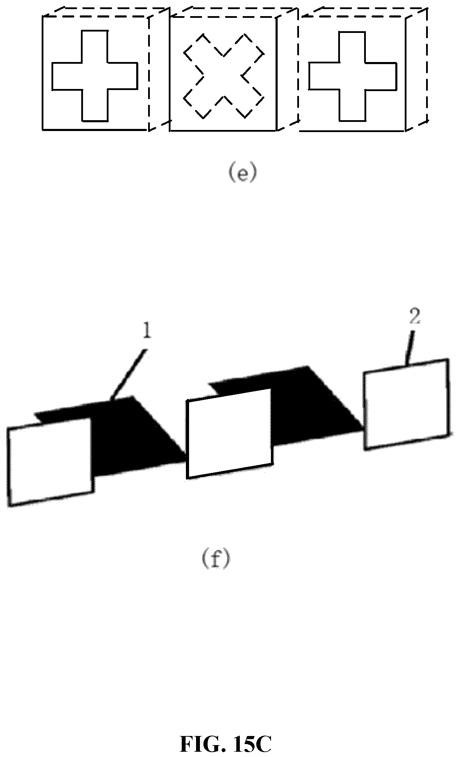

FIG. 15C is a schematic illustration of the identification feature 413 that can be identified by a Lidar device and/or a camera according to an illustrative embodiment. In some embodiments, as shown in sub-figure (e) and sub-figure (f) of FIG. 15C, the identification feature 413 may be a spatial shape or any suitable combination of various spatial shapes. Referring to sub-figure (f) of FIG. 15C, vertically arranged reflecting plate 2 and reflecting plate 1 that has an inwardly inclining upper portion may form the identification feature 413 having a spatial shape. Because the reflecting angle of the reflecting plate 1 and the reflecting angle of the reflecting plate 2 are different, there are differences in the direction, strength of the lights reflected back to the base station 420 through the reflecting plate 2 and the reflecting plate 1. Therefore, the identification feature 413 shown in sub-figure (f) of FIG. 15C may be provided on the autonomous mobile device 410, and the reflecting angles of the reflecting plates may be adjusted such that the identification module 423 on the base station 420 can identify the identification feature 413.

In the above embodiment, the identification feature 413 that can be identified by the camera may be a pattern including different blocks having at least two colors. Illustratively, the identification feature 413 may include a first block having a first color such as black and a second block having a second color that is different from the first color, such as white, as shown in sub-figure (b) of FIG. 15A. Of course, the present disclosure does not limit the colors, quantity and/or arranging manner of the blocks included in the pattern of the identification feature. Any suitable colors, quantity and/or arranging manner may be used, as long as according to the arranging manner, after the quantity of blocks having corresponding colors are arranged, the formed pattern can be used as the identification feature to uniquely identify the autonomous mobile device.

In the above embodiment, the identification feature 413 that can be identified by the camera may be a pattern having a pre-set shape, such as triangle, rectangle, trapezoid, hexagon, etc. Alternatively, the identification feature 413 that can be identified by the camera may also be a pattern including different blocks having at least two pre-set shapes. Illustratively, as shown in sub-figure (d) of FIG. 15B, the identification feature 413 may be a pattern having a first block having a first shape such as triangle and a second block having a second shape different from the first shape, such as hexagon. In the meantime, the relative position relationship and the relative distance relationship between these two blocks may also make it easier for the camera to identify the identification feature 413 that is formed by a combination of multiple patterns. Of course, the present disclosure does not limit the shapes, quantity and/or arranging manner of the blocks included in the pattern of the identification feature. Any suitable pre-set shapes, quantity and/or arranging manner may be used, as long as according to the arranging manner, after the quantify of blocks having the corresponding pre-set shapes are arranged, the formed pattern can be used as the identification feature to uniquely identify the autonomous mobile device.

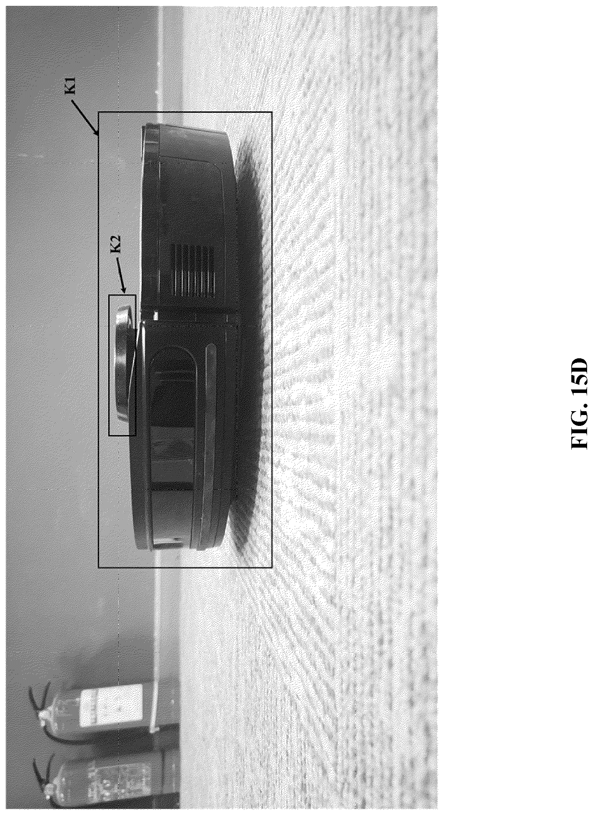

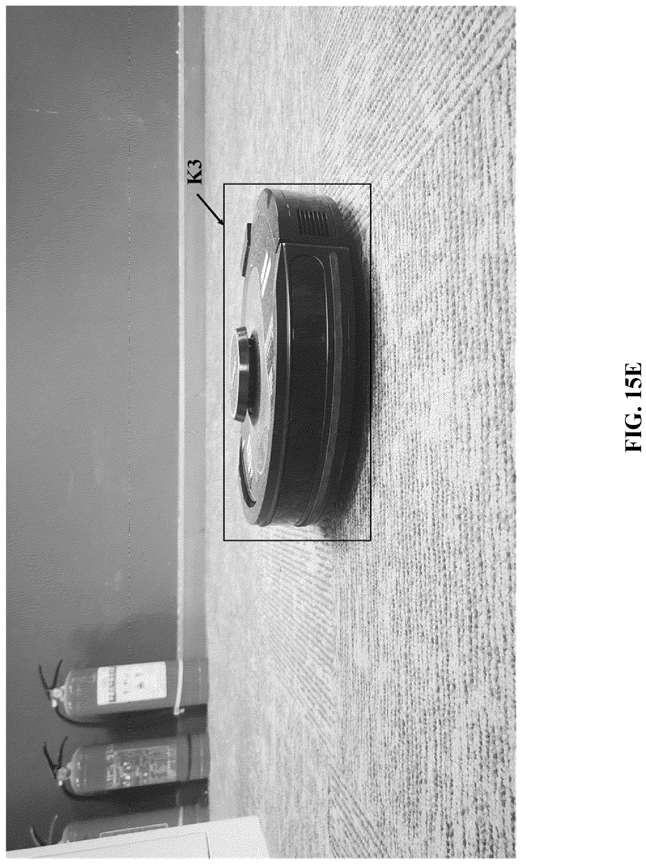

FIG. 15D, FIG. 15E are schematic illustrations of the identification feature 413 that can be identified by the camera according to an illustrative embodiment. In this embodiment, the identification feature 413 may be an outer profile/shape or a partial profile/shape of the autonomous mobile device, here, the outer profile/shape of the autonomous mobile device or a partial profile/shape is a relatively unique profile/shape that differentiates from an ordinary object, which may be successfully identified at a relatively high probability by the camera of the base station as an autonomous mobile device, for example, the side profile of the entire body of the autonomous mobile device as shown in the photo of FIG. 15D that is captured by the camera of the base station (e.g., as shown by the outer black frame K1 in the photo), or a unique trapezoidal side shape of a tower structure of the Lidar device disposed at the top portion of the autonomous mobile device (e.g., as shown by the inner black frame K2 in the photo), both of which can be identified by the computing module 425 of the base station from the photos captured by the camera and be uniquely determined that the object having such a profile/shape is an autonomous mobile device to be charged. The computing module 25 on the base station may be trained through a machine learning algorithm and a large quantity of photos of the autonomous mobile device under various distances, angles, light intensities, such that the computing module can identify the autonomous mobile device that need to be identified from various photos that include the autonomous mobile device. Then, if the photo captured by the camera on the base station shows the profile/shape indicated by the black frame K3 as shown in FIG. 15E, then the computing module 425 can identify it as the identification feature 413 of the autonomous mobile device, thereby recognizing that the photo includes the autonomous mobile device that may be charged. The computing module 425 may derive a direction of the autonomous mobile device 410 relative to the base station 420 in the actual space based on the location of the identification feature 413 having this profile/shape in the photo, thereby determining the charging direction. Illustratively, if the resolution of the camera for capturing the photos is set to be 640 pixels × 480 pixels, under this resolution, illustratively, if the side profile of the entire body of the autonomous mobile device within the black frame K1 shown in FIG. 15D is used as the identification feature 413, if the actual horizontal width of the side profile is 30 centimeters, in an ideal situation, when there is no obstacle between the Lidar device of the base station to which the identification feature 413 faces and the autonomous mobile device and the base station, the camera on the base station can identify the autonomous mobile device within 9 meters from the autonomous mobile device. Beyond this distance, it is possible that the autonomous mobile device may not be identified.

In the above embodiment, the identification feature 413 that can be identified by the camera may be a profile/shape corresponding to the outer profile/shape of the autonomous mobile device. Illustratively, the identification feature 413 may include a profile/shape that is substantially the same as the outer profile/shape of the autonomous mobile device, such as one indicated by the outer black frame K1 in FIG. 15D, or the identification feature 413 may include a profile/shape that can roughly reflect the outer profile/shape of the autonomous mobile device, such as one indicated by the outer black frame K3 in FIG. 15E.

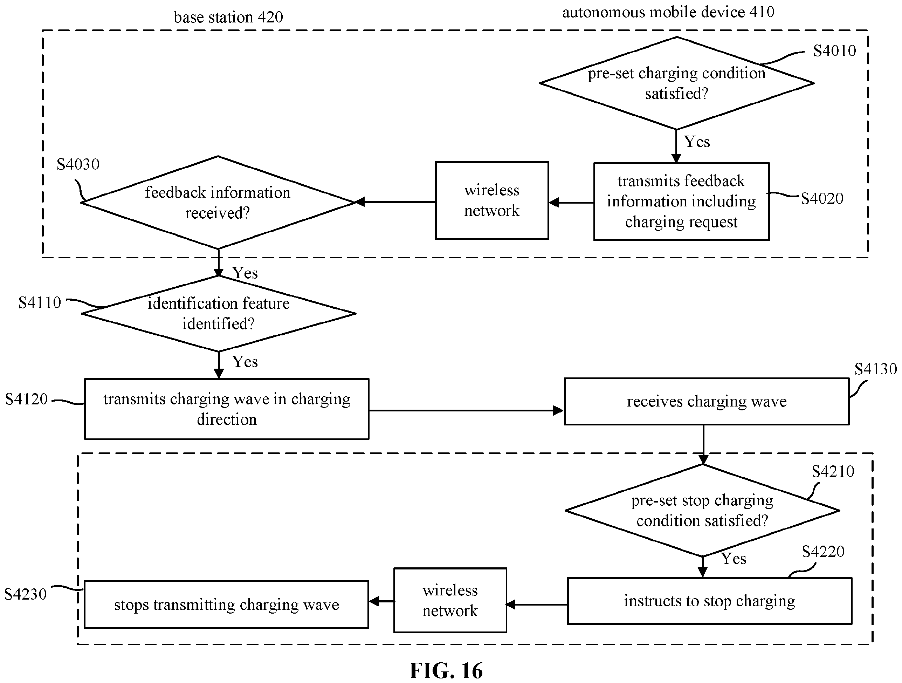

In the above embodiment, the identification feature 413 that can be identified by the camera may be a profile/shape corresponding to a component/part of the autonomous mobile device that can differentiate from profiles/shapes of other objects. Illustratively, as shown by the inner black frame K2 in FIG. 15D, the tower structure of the Lidar device installed on the autonomous mobile device is a relatively unique component that can differentiate from other objects in the environment, therefore the side profile or the trapezoidal side shape of the tower structure of the Lidar device may be used as the identification feature 413. The camera installed on the base station may identify the autonomous mobile device through identifying the side profile or the trapezoidal side shape of the Lidar device and determine the direction/location of the autonomous mobile device. FIG. 16 is a flowchart showing a charging control method according to an illustrative embodiment. Referring to FIG. 16, the charging control method of the present disclosure may include the following steps.

In step S4110, the base station 420 may detect whether there is an identifiable identification feature 413 on the autonomous mobile device 410, that is, the base station 420 may perform identification of the identification feature 413 disposed on the autonomous mobile device 410. When the identification feature 413 is identified, the determination in step S4110 is "Yes," and step S4120 may be subsequently executed; when the identification feature 413 is not identified, the determination in step S4110 is "No," then, for example, detection of the identification feature 413 may be continued after a detecting direction is changed. It should be noted that the identification module 423 on the base station 420 may be a rotatable Lidar device that can rotate in a horizontal plane at a certain velocity or may be a camera, such as a mechanical type Lidar device that can rotate in a 360° horizontal range at a 50 Hz frequency, or an ordinary camera (e.g., with a field of view of 90°) that can reciprocatively move at a 10°/s angular velocity within a 180° range in a horizontal plane in a forward direction of the base station 420, or that can rotate within a horizontal 360° range and capture photos of surrounding environment at a speed of 2 frames/s. The identification module 423 may also be a single or multiple identification modules 423 that are fixedly disposed at the front side of the base station 420 and that cover a 180° - 240° range in front of the base station. For example, two solid state Lidar devices having a 120° field of view may be fixedly disposed side by side at the front side of the base station 420 to cover a range of not exceeding 240° of the front side of the base station 420 (for example, identification of the identification feature 413 within the coverage range may be performed at a 50 Hz frequency), or 3 ordinary cameras may be fixedly disposed side by side at the front side of the base station 420 (e.g., the field of view of each ordinary camera may be 90°) (e.g., photos may be captures within a fixed coverage range at a 50 Hz frequency; here, the field of views of multiple ordinary cameras may have overlap, for the convenience of precisely detect the direction in which the identification feature 413 is located), or a 180° field of view fisheye camera may be fixedly disposed at the front side of the base station 420 (e.g., photos may be captured within a fixed coverage range at a 50 Hz frequency). When a rotatable identification module 423 is disposed, the direction of the identification feature 413 may be determined based on an angle of the identification module 423 when detecting the identification feature 413. When the identification module 423 is fixedly disposed, for example in an embodiment in which a 180° single field of view fisheye camera is fixedly disposed, the direction of the identification feature 413 in the actual environment may be derived based on the relative location of the identification feature 413 in the photo in which the identification feature 413 is detected, thereby determining the direction of the identification feature 413. The direction of the identification feature 413 is the charging direction in the subsequent step S4120. In scenarios in which the distance between the autonomous mobile device 410 and the base station 420 is too large, or there is an obstacle between the two, or the identification module 423 does not face the autonomous mobile device 410, or the identification feature 413 is not disposed on a side of the autonomous mobile device 410 that faces the identification module 423 of the base station 420, the identification module 423 on the base station 420 may not be able to "see" the identification feature 413. In other words, the determination in step S4110 may be "No." But as the autonomous mobile device 410 moves, it is possible that at the next time instance the identification module 423 may identify the identification feature 413 on the autonomous mobile device 410 without any hinder. At this moment, the determination in step S4110 is "Yes," and subsequent step S4120 may be executed.

In some embodiments, when multiple cameras are disposed at the front side of the base station 420, for example, each camera may capture photos within a respective coverage angle in a horizontal range at a 50 Hz frequency. For example, the camera may pre-store each pixel of the identification feature 413. Therefore, when a certain camera captures the identification feature 413, matching may be performed based on the specific information of each pixel of the stored identification feature 413, i.e., the corresponding pixel feature. When the matching is successful, a direction of the identification feature 413 of the autonomous mobile device 410 may be determined based on the camera that captures the identification feature 413. For example, in the pattern shown in sub-figure (d) of FIG. 15B, with respect to the pixel point at the right angle located at the left lower angle of the left side black triangle, using the pixel as a circle center, a small circle may be drawn around the circle center. Each pixel on the circumference of the small circle may be referred to as a descriptor of this circle center pixel (or referred to as a feature point). Then the white descriptors within zones defined by the upper left, lower left, and lower right 3/4 of the circumference of the small circle of the feature point and the black descriptors within a zone defined by the upper right 1/4 of the circumference can uniquely describe the circle center feature point. That is, surrounding descriptors of each other feature point in the photo (e.g., in sub-figure (d) of FIG. 15B, feature points located at the right acute angle and the left upper acute angle in the black triangle on the left side of the pattern) and each feature point described by a combination of the descriptors and the relative location and distance relationship of the feature point, are different from the specific feature points described by a combination of surrounding descriptors of the specific feature points and the relative location and distance relationship of the specific feature points. Therefore, the specific feature points can be uniquely determined in the photo. The identification feature 413 may be identified by identifying a number of feature points.

In some embodiments, the charging direction may be the first direction of the autonomous mobile device 410 relative to the base station 420 at a time instance that is after the estimate time period tₑ has lapsed since the identification module 423 of the base station 420 identifies the identification feature 413, where, the estimated time period tₑ is a time period from a time instance when the identification module 423 identifies the identification feature 413 to the base station 420 transmits the charging wave. For example, when the identification module 423 is a camera, when the camera captures a photo that includes the identification feature 413 at a time instance t₁, a direction of the identification feature 413 at the time instance t₁ may be obtained through computation that takes a computing time of t₂. Because the autonomous mobile device 410 moves for a certain distance within the estimated time period (tₑ = t₂ - t₁), it may miss the charging wave transmitted in the direction of the identification feature 413 at the time instance t₁. Therefore, to better aim the charging wave at the autonomous mobile device 410 for charging, it may be needed to determine the first direction of the autonomous mobile device 410 relative to the base station 420 after the estimated time period tₑ, i.e., at the time instance t₂, and to adjust the charging direction based on the first direction.

In some embodiments, the estimated time period tₑ may adopt an empirical value, such as an empirical value based on statistical time periods determined in multiple experiments from the identification module 423 identifies the identification feature 413 to the based station 420 transmits the charging wave. In other embodiments, the estimated time period tₑ may be calculated based on the time consumed by various steps after the identification module 423 identifies the identification feature 413. The estimated time period tₑ may be estimated based on a specific identification module type and its component parameters. The present disclosure does not limit the calculation methods of the estimated time period tₑ.

In addition, it may be needed to determine a possible first direction of the autonomous mobile device 410 appearing after the estimated time period tₑ. In an embodiment, an average moving velocity of the autonomous mobile device 410 may be calculated based on a time period when the identification feature 413 is obtained for multiple times and a direction change of the identification feature 413 within the time period, and a current possible direction of the autonomous mobile device 410 may be calculated based on the estimated time period tₑ in combination with the average moving velocity. Because the autonomous mobile device 410 is a plane-moving device that moves on a floor, the locations it can possibly reach within the estimated time period tₑ are only within a very small selection range, that is, a zone that may be determined as follows: using the base station as a center, a virtual connection from the base station to the autonomous mobile device in the current direction of the identification feature 413 that the base station 420 currently faces as a radius, drawing an arc having a length of v × tₑ on both the left and right sides from the coordinate location of the autonomous mobile device, the sector-shaped areas represented by the arcs and the corresponding radii on both the left and right sides form the zone in which the autonomous mobile device 410 can possibly exist. For example, the charging wave may be transmitted toward this zone or charging waves may be respectively transmitted in different angles that point toward an inside of this zone. After the charging wave is received by the autonomous mobile device 410 within this zone in a certain direction (this direction is the first direction), the autonomous mobile device 410 may notify the base station 420 through the feedback information that it has received the charging wave in the first direction. As such the base station 420 can perform charging on the autonomous mobile device 410. In subsequent movements of the autonomous mobile device 410, the zone in which the autonomous mobile device 410 can possibly exist may continue to be calculated based on the above formula v × tₑ, and the charging wave may be transmitted toward an inside of this zone. Long distance wireless charging of the autonomous mobile device 410 may be realized through the base station 420 transmitting the charging wave and the autonomous mobile device 410 transmitting the feedback information that includes an indication of whether the charging wave is received.

Through the above embodiment, the first direction of the autonomous mobile device 410 relative to the base station 420 after the estimated time period tₑ may be obtained, and the charging direction may be adjusted based on the first direction. As such, it can be ensured that the direction of the charging wave faces the autonomous mobile device 410, thereby increasing the success rate and efficiency of the charging. Real time charging of the autonomous mobile device 410 that is in motion may be realized.

In some embodiments, the charging wave may be transmitted in the first direction that is after the estimated time period tₑ and/or possible zones surrounding the first direction, and the charging efficiency may be calculated after the estimated time period tₑ. To realize such functions, the wireless communication module mobile terminal 411 provided on the autonomous mobile device 410 may transmit, through the wireless network, the charging power of the autonomous mobile device (e.g., by including the charging power in the feedback information) to the wireless communication module base station terminal 421 that is disposed on the base station 420 and that matches with the mobile terminal 411, which is received by the base station terminal 421. The charging efficiency is a ratio between the charging power of the autonomous mobile device 410 and the transmitting power of the base station 420 transmitting the charging wave (charging efficiency = charging power ÷ transmitting power × 100%). This function may be, for example, executed through computation by the computing module 425 of the base station 420. If the charging efficiency is within a reasonable range (e.g., the charging efficiency is greater than or equal to 60%), it may be determined that the determination of the first direction is correct, and the same manner may be used to continue determining the next first direction; otherwise, it may be needed to stop transmitting the charging wave or change the determination manner of the first direction.

During the movement of the autonomous mobile device 410, the charging wave may be transmitted in the possible current direction or the first direction of the autonomous mobile device 410 through the above method. Through constantly monitoring the charging efficiency, real time determination of whether the charging wave is received by the autonomous mobile device 410 may be realized, thereby realizing the long distance wireless charging of the autonomous mobile device 410 that is in motion.

After determining the charging direction, the following step S4120 may be subsequently executed.

In step S4120, the base station 420 may transmit the charging wave in a direction in which the identification module 423 identifies the identification feature 413, i.e., the charging direction.

In step S4130, in response to the base station 420 transmitting the charging wave in the charging direction, the charging module 412 of the autonomous mobile device 410 may receive the charging wave transmitted by the base station 420, and perform charging using the charging wave, where, the charging module 412 may transform energy carried by the charging wave into electric energy and store it in a rechargeable battery configured to provide electricity to the autonomous mobile device 410. For example, the charging wave may be a directionally transmitted microwave, radio frequency, laser or other high-energy electromagnetic wave. The charging module 412 on the autonomous mobile device 410 may receive the charging wave of a corresponding form, and transform the charging wave into a direct current to charge the rechargeable battery of the autonomous mobile device 410. Illustratively, the long distance wireless charging of the present disclosure may be performed based on a magnetic resonance method. For example, two resonant circuits having the same resonant frequency (respectively referred to as a transmitting resonant circuit and a receiving resonant circuit) may be respectively disposed on the power supply module 422 of the base station 420 and the charging module 412 of the autonomous mobile device 410. When it is needed to transmit the charging wave, electric power may be supplied to the transmitting resonant circuit such that the transmitting resonant circuit may oscillate. An electric current may be generated in the receiving resonant circuit that has the same resonant frequency as the transmitting resonant circuit due to the magnetic resonance effect. As such, the electric current can be transmitted over the air, thereby realizing long distance wireless charging. Illustratively, a semiconductor amplifier may be disposed on the base station, and a high-power infrared light emitted by the semiconductor amplifier may be used as the directionally transmitted charging wave, to charge the autonomous mobile device disposed within a range of a few meters or a range of more than ten meters and less than twenty meters. In addition, because the infrared light that is used as the charging wave does not generate an electromagnetic wave, harm to human bodies caused by electromagnetic contamination can be avoided. The present disclosure does not limit the specific form of the charging wave.

Wireless charging devices currently widely used in the market (e.g., wireless charging performed by placing a cell phone on an electromagnetic coil of a charger) are mostly based on electromagnetic induction technologies. This type of wireless charging technology is only suitable for short distances (a separation distance between a receiving end and a transmitting end is only a few millimeters to a few centimeters), because this type of wireless charging technology not only requires the separation distance between the receiving end and the transmitting end to be very small, it also places a relatively high requirement on the disposition locations. Different from this type of short distance non-plug-in type wireless charging, the long distance wireless charging of the present disclosure is a spatial transmission type non-contact wireless charging, in which an energy transmitting unit and an energy receiving unit are respectively provided in the power supply module 422 of the base station 420 and in the charging module 412 of the autonomous mobile device 410, which are relatively far apart. In this manner, the autonomous mobile device 410 may receive the charging wave transmitted by the power supply module 422 of the base station 420 within a relatively large range from the base station 420 (e.g., from 0.1 meters to 10 meters), thereby realizing free charging of the autonomous mobile device during movements in an indoor space.

It should be noted that in some embodiments, to enable the identification module 423 on the base station to effectively identify the identification feature 413, the charging range of the current base station with respect to the autonomous mobile device needs to be suitable for the specific forms of the identification module 423 and the identification feature 413. For example, if the distance within which the identification module 423 can effectively identify the identification feature 413 is 2 meters, then the charging range of the base station with respect to the autonomous mobile device may also be limited to be 2 meters.

In some embodiments, the charging control method may also include a step in which the autonomous mobile device 410 determines whether a pre-set charging condition is satisfied. Referring to FIG. 16, in step S4010, the autonomous mobile device 410 may determine whether a pre-set charging condition is satisfied. Here, the pre-set charging condition includes at least one of the following conditions: a remaining electric power of the autonomous mobile device 410 is smaller than or equal to a first electric power threshold, the moving mileage of the autonomous mobile device 410 is greater than or equal to a mileage threshold, a moving time period of the autonomous mobile device 410 is greater than or equal to a time period threshold, a coverage area of the work zone already covered by the autonomous mobile device 410 is greater than or equal to an area threshold, and a ratio between the coverage area of the work zone already covered by the autonomous mobile device 410 and an area of the work zone is greater than or equal to a ratio threshold. For example, the first electric power threshold may be 20%, the autonomous mobile device 410 may determine, through the processing module 414, that the pre-set charging condition is satisfied when the remaining electric power is smaller than or equal to 20%. For example, the mileage threshold may be 1000 meters, the autonomous mobile device 410 may determine, through the processing module 414, that the pre-set charging condition is satisfied when the moving mileage since the completion of last charging is equal to or greater than 1000 meters. For example, the time period threshold may be 1 hour, the autonomous mobile device 410 may determine, through the processing module 414, that the pre-set charging condition is satisfied when the moving time period since the completion of last charging is equal to or greater than 1 hour. For example, the area threshold may be 40 m², the autonomous mobile device 410 may determine, through the processing module 414, that the pre-set charging condition is satisfied when the coverage area of the work zone already covered since the completion of last charging is equal to or greater than 40 m². For example, the ratio threshold may be 50%, the autonomous mobile device 410 may determine, through the processing module 414, that the pre-set charging condition is satisfied when the ratio between the coverage area of the work zone already covered sine the completion of last charging and a total area of the work zone is equal to or greater than 50%.

The above multiple pre-set charging conditions may be used individually, or multiple pre-set charging conditions may be used in combination. For example, the pre-set charging conditions combined according to an order may be: (1) a ratio between a coverage area of the current work zone already covered by the autonomous mobile device 410 and the total area of the current work zone is greater than or equal to a ratio threshold, (2) the coverage area of the work zone already covered by the autonomous mobile device 410 is greater than or equal to an area threshold; then when the autonomous mobile device 410 has not created a complete map, the total area of the work zone is not known. Thus, the ratio between the coverage area and the total area of the current work zone cannot be obtained, and hence a determination as to whether charging should be performed through condition (1) cannot be made. At this moment only a determination as to whether the coverage area of the work zone already covered by the autonomous mobile device 410 is greater than or equal to the area threshold may be made based on condition (2).

When it is determined in step S4010 that the pre-set charging condition is not satisfied, the determination may continue; when it is determined in step S4010 that the pre-set charging condition is satisfied, step S4020 may be subsequently executed.

In step S4020, the wireless communication mobile terminal 411 may transmit the feedback information that includes the charging request to the wireless communication module base station terminal 421 through the wireless network. In other words, the autonomous mobile device 410 may transmit the charging request to the base station 420 through the wireless network. The charging request may be configured to request the base station 420 to transmit the charging wave to the autonomous mobile device 410 in subsequent steps to perform charging.

Correspondingly, in step S4030, the base station 420 may determine whether the feedback information transmitted from the autonomous mobile device 410 is received, i.e., determine whether the charging request is received. When the feedback information including the charging request is received, the determination in step S4030 is "Yes," and it is needed to charge the autonomous mobile device 410, the base station 420 may turn on the identification module 423 to identify the identification feature 413 provided on the autonomous mobile device 410; when the feedback information including the charging request is not received, the determination in step S4030 is "No," charging of the autonomous mobile device 410 is not performed temporarily, and therefore the base station 420 does not need to turn on the identification module 423 to identify the identification feature 413 provided on the autonomous mobile device 410.

In the above embodiment, a determination may be made as to whether there is a need to charge the autonomous mobile device 410, and only on the basis of determining that charging is needed, the base station 420 starts to identify the identification feature 413 provided on the autonomous mobile device 410 and perform subsequent charging steps. As such, compared to the scenario in which the base station 420 charges the autonomous mobile device 410 regardless of whether there is a need to charge the autonomous mobile device 410, in the above embodiment, charging is performed only when there is a need to charge the autonomous mobile device 410. As such, transmission of the charging wave by the base station 420 at unnecessary times can be avoided, thereby saving energy and reducing the electromagnetic radiation by the base station 420 to the external environment.

In some embodiments, after the autonomous mobile device 410 starts to receive the charging wave to perform charging, a determination regarding the pre-set stop charging condition may be made, and when the pre-set stop charging condition is satisfied, the identification feature 413 provided on the autonomous mobile device 410 may be obscured, or the transmission of the charging wave may be stopped, thereby stopping the charging.

In some embodiments, the charging control method may also include a step in which the autonomous mobile device 410 determines whether a pre-set stop charging condition is satisfied. Referring to FIG. 16, in step S4210, the autonomous mobile device 410 may determine whether the pre-set stop charging condition is satisfied. In some embodiments, the pre-set stop charging condition may include at least one of the following conditions: a current electric power of the autonomous mobile device 410 is equal to or greater than a second electric power threshold; a distance between the autonomous mobile device 410 and the base station 420 is equal to or greater than a distance threshold; the distance between the autonomous mobile device 410 and the base station is greater than distances between the autonomous mobile device 410 and other base stations; and there is an obstacle between the autonomous mobile device 410 and the base station 420; and the identification feature 413 has not been again identified by the base station 420. For example, the second electric power threshold may be 90%, the autonomous mobile device 410 may determine that the pre-set stop charging condition is satisfied when the current electric power of the autonomous mobile device 410 is equal to or greater than 90%; of course the second electric power threshold may be set as 100%, the autonomous mobile device 410 may determine that the pre-set stop charging condition is satisfied when the current electric power of the autonomous mobile device 410 is equal to 100%. For example, the distance threshold may be 5 meters, the autonomous mobile device 410 may determine that the pre-set stop charging condition is satisfied when the distance between the autonomous mobile device 410 and the base station 420 that is currently transmitting the charging wave is equal to or greater than 5 meters. For example, when there are multiple base stations that can charge the autonomous mobile device 410, if the distance between the autonomous mobile device 410 and the base station 420 that is currently transmitting the charging wave is greater than a distance between the autonomous mobile device 410 and another base station, it may be determined that the pre-set stop charging condition is satisfied. At this moment, the other base station that is closer to the autonomous mobile device 410 may be used to charge the autonomous mobile device 410. For example, when an obstacle such as a living organism or a metal object is detected between the autonomous mobile device 410 and the base station 420 that is currently transmitting the charging wave, it may be determined that the pre-set stop charging condition is satisfied. For example, if after the base station 420 has already identified the identification feature 413 and after the power supply module 422 transmits the charging wave, in subsequent time periods, it is possible that due to the distance between the autonomous mobile device 410 and the base station 420 being too large, or there being an obstacle between the two, or the autonomous mobile device 410 making a turn, the identification feature 413 may be caused to leave the side that faces the identification module 423 of the base station 420, such that the identification module 423 on the base station 420 may not again identify the identification feature 413. At this moment, for safety, it may be determined that the pre-set stop charging condition is satisfied.

In some embodiments, the pre-set stop charging condition may also include the charging efficiency of the autonomous mobile device 410 being equal to or smaller than a charging efficiency threshold (e.g., 60%). Specifically, in some embodiments, when the charging efficiency is equal to or smaller than the charging efficiency threshold, it may be determined that the pre-set stop charging condition is satisfied, and relevant actions may be executed: for example, transmitting a stop charging request to the base station 420 to request the base station 420 to stop charging the autonomous mobile device 410 (e.g., the stop charging request may be included in the feedback information). In other embodiments, the number of charging failures may be used as a pre-set stop charging condition. When the charging efficiency is equal to or smaller than the charging efficiency threshold, it may be determined that a charging failure occurred, and the number of charging failures may be counted; when the counted number of charging failures is greater than or equal to a count threshold (e.g., 5 times), it may be determined that the pre-set stop charging condition is satisfied, and relevant actions may be executed. The above pre-set stop charging conditions may be used individually, or multiple pre-set stop charging conditions may be used in combination.

In some embodiments, when the identification module 423 of the base station 420 includes a Lidar device, because the Lidar device itself is a distance measuring device, the distance between the base station 420 and the autonomous mobile device 410 may be directly measured, therefore a determination may be made, based on the directly obtained distance, as to whether the distance between the base station 420 and the autonomous mobile device 410 exceeds the distance threshold.

In some embodiments, the detecting signal transmitter on the autonomous mobile device 410 (not shown in FIG. 14) may transmit a detecting signal to the base station 420. A determination of whether there exists an obstacle between the autonomous mobile device 410 and the base station 420 may be made based on whether the base station 420 can receive the detecting signal. The detecting signal may be a signal that transmits in a straight line, e.g., an infrared, etc. In some implementations, the detecting signal transmitter on the autonomous mobile device 410 may transmit a circumferential detecting signal. For example, the detecting signal transmitter may transmit a scanning signal that scans in a 360° range, such as, a laser signal of a Lidar device. In other implementations, the detecting signal transmitter may simultaneously transmit circumferential signals. For example, a point light source may simultaneously transmit circular signals toward the surrounding environment. After the detecting signal receiver receives the detecting signal, it may be determined that there is no obstacle between the base station 420 and the autonomous mobile device 410.

When it is determined in step S4210 that the pre-set stop charging condition is not satisfied, the charging may continue. When it is determined in step S4210 that the pre-set stop charging condition is satisfied, the following step S4220 may be subsequently executed.

In step S4220, the autonomous mobile device 410 may instruct the base station 420 to stop charging the autonomous mobile device 410.

In step S4230, the base station 420 may stop transmitting the charging wave in response to the stop charging request instruction received from the autonomous mobile device 10 through the wireless network.

In some embodiments, the feedback information transmitted by the autonomous mobile device 410 to the base station 420 through the wireless network may include the stop charging request that is configured to request the base station 420 to stop charging the autonomous mobile device 410. Through this stop charging request, the base station 420 is requested to stop transmitting the charging wave. The base station 420 may stop transmitting the charging wave in response to receiving the stop charging request, thereby no longer charging the autonomous mobile device 410.

In addition, because the base station 420 and the autonomous mobile device 410 are provided with the identification feature 413 and the identification module 423 respectively, stop charging operations with respect to the identification feature 413 and the identification module 423 may be adopted.

In some embodiments, the identification feature 413 may be obscured by an obscuring component of the autonomous mobile device 410 when the pre-set stop charging condition is satisfied, causing the base station 420 to be unable to identify the identification feature 413 in step S4110.

In some embodiments, the identification feature 413 may be configured as a changeable pattern or shape. When it is needed to stop charging, the identification feature 413 may be changed to another form that is different from the identification feature 413 that is stored in the identification module 423 of the base station 420, such that the base station 420 cannot again identify the identification feature 413 on the autonomous mobile device 410 in step S4110 (this identification feature 413 is the updated identification feature), and therefore will not charge the autonomous mobile device 410.

In some embodiments, the autonomous mobile device 410 may transmit charging power information to the base station 420. For example, the power supply module 422 of the base station 420 may transmit the charging wave/tentative charging wave to an inside of a zone in which the autonomous mobile device 410 may possibly exist, or transmit charging waves/tentative charging waves in different angles that point to an inside of the zone (the power of the tentative charging wave is smaller than the charging wave configured for normal charging of the autonomous mobile device 410, which may be, e.g., only 1% of the power of the normal charging wave, the tentative charging wave may be configured as a precursor of the charging wave for normal charging, and configured for detecting whether the charging wave can be received by the autonomous mobile device 410). The charging efficiency may be calculated, by the base station 420, based on the transmitting power recorded in the base station 420 and the charging power information included in the feedback information transmitted by the autonomous mobile device 410 (charging efficiency = charging power ÷ transmitting power × 100%). In some embodiments, the charging direction may be examined based on the charging efficiency, so as to determine whether the charging direction is accurate. For example, when the charging efficiency is within a reasonable range (e.g., the charging efficiency is greater than or equal to 60%), it may be determined that the autonomous mobile device 410 has been charged. Then the charging wave may continue to be transmitted toward this charging direction and/or possible zones surrounding the charging direction; otherwise, it may be determined that the charging wave has not been received by the autonomous mobile device 410, and it is possible that there is a need to stop transmitting the charging wave or change the transmitting direction of the charging wave.

In some embodiments, when it is determined that the charging efficiency is equal to or smaller than a charging efficiency threshold, for example, smaller than or equal to 60%, then it may be determined that the charging wave has not been sufficiently used to charge the autonomous mobile device 410. Therefore, the base station 420 may stop transmitting the charging wave, to avoid energy waste and possible danger caused by mistakenly charging metals or living organisms.

In some embodiments, when the charging efficiency is equal to or smaller than the charging efficiency threshold, for example smaller than or equal to 60%, it may be determined that a charging failure occurred. In the subsequent transmission of the charging wave, in the meantime, the charging efficiency may continue to be calculated, for example, the charging efficiency may be calculated based on a certain frequency or a pre-set condition. The number of charging failures may be counted. When the counted number of charging failures is greater than or equal to a count threshold, it may be determined that the charging wave has not been sufficiently used to charge the autonomous mobile device 410. Therefore, the base station 420 may stop transmitting the charging wave, thereby avoiding energy waste and possible danger caused by mistakenly charging metals or living organisms.

Through the above embodiment, under a suitable condition, the charging of the autonomous mobile device 410 by the base station 420 may be stopped. As such, the safety and/or energy-saving capability of the charging can be enhanced.

In this embodiment, the specific operations of stopping charging may include the following multiple forms: obscuring the identification feature 413 provided on the autonomous mobile device 410; or changing the identification feature 413 from a form identifiable by the base station 420 to a form unidentifiable by the base station 420; or, transmitting a stop charging request to the base station 420 to request the base station to stop charging the autonomous mobile device 410.

In some embodiments, the feedback information may be in the form of a packet. For example, the feedback information may be a packet having a size of 128 bytes, where the first 8 bytes may be header check digits for determining the header of the packet itself, the second 8 bytes may include information of the autonomous mobile device, the remaining bytes may be check bits. Of course, some bytes may be set for special information. For example, multiple bytes at different selected locations may be configured to indicate the direction and/or coordinate location of the autonomous mobile device 410, and/or information of the charging direction, and/or information of an estimated direction, and/or charging power information, and/or the stop charging request, and/or instruction information for instructing the base station 420 whether or not to transmit the charging wave. The above are only illustrative. The present disclosure does not limit the specific form of the feedback information.

An actual home typically includes multiple rooms that are separated by walls. Base stations 420 having the above identification modules 423 may be respectively disposed in the multiple rooms, such that when the autonomous mobile device moves in the multiple rooms, it may be charged according to the charging control method of the present disclosure.

The above-described multiple embodiments may be combined in any combining manner and in any combining quantity, which are not limited by the present disclosure.

In some embodiments, a non-transitory computer-readable storage medium or program product is provided. Instructions included in the computer-readable storage medium or program product may be executed by a processor to accomplish the above-described charging control method. The processor may include, but not be limited to, an application specific integrated circuit (ASIC), a digital signal processor (DSP), a digital signal processing device (DSPD), a programmable logic device (PLD), a field programmable gate array (FPGA), a controller, a microcontroller, a microprocessor or other electronic elements.

Regarding the apparatus of the above embodiments, the manner in which each unit of which executes operations has already been described in detail in the relevant embodiments of the method, which is not described in detail.

Various embodiments of the present disclosure are described above. The above descriptions are illustrative, and are not exhaustive. The present disclosure is not limited to the disclosed embodiments. Without departing from the scape and spirit of the described various embodiments, many modifications and changes are obvious to a person having ordinary skills in the art. Selection of the terms in the present disclosure is based on the principle of explaining in a best manner the various embodiments, the actual applications or improvements to the technology available in the market, or enabling other persons having ordinary skills in the art to understand various embodiments of the present disclosure.

## Claims

1. A charging control method, implemented by an autonomous mobile device, **characterized in that**, comprising:
a detecting step, configured to detect whether a directional signal transmitted by a base station is received;
a transmitting step, configured to transmit, after the directional signal transmitted by the base station is received, feedback information to the base station through a wireless network in response to the directional signal, wherein a first direction of the autonomous mobile device relative to the base station is determined based on the feedback information; and
a charging step, configured to receive a charging wave transmitted by the base station in a charging direction that is determined based on the first direction, and to perform charging using the received charging wave.

2. A charging control method, implemented by a base station, **characterized in that**, comprising:
a directional signal transmitting step, configured to transmit a directional signal to an autonomous mobile device;
a receiving step, configured to receive feedback information transmitted by the autonomous mobile device through a wireless network in response to the directional signal, wherein a first direction of the autonomous mobile device relative to the base station is determined based on the feedback information; and
a charging wave transmitting step, configured to transmit a charging wave configured for charging the autonomous mobile device in a charging direction that is determined based on the first direction.

3. A charging control method, implemented by an autonomous mobile device, **characterized in that**, comprising:
a localization step, configured to obtain real time direction and/or location information of the autonomous mobile device;
a transmitting step, configured to transmit feedback information including the real time direction and/or location information and a charging request to a base station through a wireless network, wherein a first direction of the autonomous mobile device relative to the base station is determined based on the real time direction/location information; and
a charging step, configured to receive a charging wave transmitted by the base station in a charging direction that is determined based on the first direction, and to perform charging using the received charging wave.

4. A charging control method, implemented by a base station, **characterized in that**, comprising:
a receiving step, configured to receive feedback information transmitted by an autonomous mobile device through a wireless network, wherein, the feedback information includes a charging request and real time direction and/or location information of the autonomous mobile device, and a first direction of the autonomous mobile device relative to the base station is determined based on the real time direction and/or location information; and
a charging wave transmitting step, configured to transmit a charging wave for charging the autonomous mobile device in a charging direction that is determined based on the first direction.

5. A charging control method, implemented by an autonomous mobile device, **characterized in that**, comprising:
a transmitting step, configured to transmit an ultra-wide band localization signal that is a UWB localization signal, wherein the UWB localization signal is configured to enable a base station to determine a location of the autonomous mobile device; and
a charging step, configured to receive the charging wave transmitted by the base station in a charging direction that is based on the location of the autonomous mobile device, and to perform charging using the received charging wave.

6. A charging control method, implemented by a base station, **characterized in that**, comprising:
a receiving step, configured to receive an ultra-wide band localization signal that is a UWB localization signal transmitted by an autonomous mobile device;
a localization step, configured to determine a location of the autonomous mobile device based on the UWB localization signal, and determine a charging direction based on the location of the autonomous mobile device; and
a charging wave transmitting step, configured to transmit a charging wave in the charging direction.

7. A charging control method, implemented by an autonomous mobile device, **characterized in that**, the autonomous mobile device includes an identification feature configured to be used by the base station to identify the autonomous mobile device, wherein the charging control method comprises:
a charging step, configured to receive a charging wave transmitted by the base station in a charging direction facing the autonomous mobile device, and to perform charging using the received charging wave.

8. A charging control method, implemented by a base station, **characterized in that**, comprising:
an identification step, configured to identify an identification feature provided on an autonomous mobile device;
a charging wave transmitting step, configured to transmit a charging wave in a charging direction facing the autonomous mobile device on which the identification feature is provided, when the identification feature on the autonomous mobile device is identified.

9. A non-transitory computer-readable storage medium that stores a program, **characterized in that**, the program includes instructions, when the instructions are executed by a computer, the instructions cause the computer to execute the method according to any of claims 1-8.

10. A computer program product, **characterized in that**, comprising instructions, wherein when the instructions are executed by a computer, the instructions cause the computer to execute the method according any of claims 1-8.
